(19) **Europäisches Patentamt / European Patent Office / Office européen des brevets**

(11) **EP 1 852 818 A2**

(12) **EUROPEAN PATENT APPLICATION**

(43) Date of publication:
**07.11.2007 Bulletin 2007/45**

(51) Int Cl.:
**G06Q 30/00** (2006.01)

(21) Application number: **07008778.8**

(22) Date of filing: **30.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **02.05.2006 JP 2006128268**
**19.05.2006 JP 2006140320**
**25.05.2006 JP 2006145722**

(71) Applicant: **FUJIFILM Corporation**
**Minato-ku**
**Tokyo (JP)**

(72) Inventors:
• **Hirayama, Wataru**
  **Tokyo (JP)**
• **Kurose, Maki**
  **Tokyo (JP)**
• **Shiromizu, Kyouko**
  **Tokyo (JP)**

• **Hori, Kenji**
  **Tokyo (JP)**
• **Dosaka, Takeshi**
  **Tokyo (JP)**
• **Mito, Osamu**
  **Tokyo (JP)**
• **Kon, Karin**
  **Tokyo (JP)**
• **Teraoka, Takeshi**
  **Tokyo (JP)**
• **Shimomura, Takuya**
  **Tokyo (JP)**
• **Endo, Yoshiji**
  **Tokyo (JP)**
• **Matsumoto Masayuki**
  **Tokyo (JP)**

(74) Representative: **Klunker . Schmitt-Nilson . Hirsch**
**Winzererstrasse 106**
**80797 München (DE)**

(54) **Image network system, network server, and language setting method**

(57) There are provided a network server connected to an order entry channel for receiving image data and an order and a lab system for creating a product according to the order through a communication network. The network server includes an order receiving function section which accepts the order from the order entry channel; an image management function section which manages the image data sent from the order entry channel; a lab order receiving server which stores order information and the image data in relation to each other; a counting function section which counts the image data sent from the order entry channel to the network server or the order information stored in the lab order receiving server for a predetermined period; and a processing function section which processes a counting result obtained by the counting function section with a predetermined unit.

**FIG.8**

EP 1 852 818 A2

**Description**

The entire contents of documents cited in this specification are incorporated herein by reference.

BACKGROUND OF THE INVENTION

The present invention relates to an image network system for placing an order for photograph printing which uses a communication network such as the Internet, a network sever included in the image network system, and a language _setting method for use in the system.

In recent years, digital cameras have rapidly gained in popularity. Communication networks such as the Internet have also come into wide use.

An image shot with a digital camera is treated as digital image data. Thus, the image can be transmitted through the communication network, and various services have been proposed/deployed by using the communication network.

For example, JP 2005-49933 A discloses a system which enables, in a network photograph service for storing an image (image data) of a service user in a server connected by using a communication network such as the Internet and for publicly offering this image to a third party, the load on a service operator to be reduced by counting the image data amount for each customer, changing service contents such as expiration date or storage amount according to the user's state of use, and sending an error message to inhibit further transfer/storage of images when the amount of image data exceeds the maximum storage amount irrespective of whether the image data is for an unordered image or an ordered image.

JP 2002-342741 A discloses a system of a digital album in which images sent from service users by using the same communication network are stored/managed in a server on a user unit basis, and provided as a digital album through the network, and when nothing is transmitted from the users for a predetermined period or longer, the images registered by the users are deleted to enable effective use of a data storage area of server resources or the like.

In addition, photofinishers deploy so-called network printing services in which the photofinishers obtain images shot by customers and print order information using the communication network to create photographic prints having the images reproduced thereon according to the order information, and provide the prints created according to the received order to the customers by delivering them home or to designated shops.

JP 2001-319216 A discloses a digital imaging system which includes global lab software (GLS) for receiving user's order commands, storing and processing user's digital images, and controlling the printing operation quality for the purpose of outputting in various forms digital image files of various input formats inputted by users. This GLS is adapted to permit addition of a new input/output device, and to support languages in various countries.

The GLS can be connected to a network, store user's digital images in an image center, and output digital image files to various input/output devices for providing various types of services.

The GLS described in JP 2001-319216 A includes some programming modules. These programming modules include a user service module, a business service module, an image manager module, a device service module, and a data service module, which cooperate with one another seamlessly. The device service module may include a sales point service module. The GLS may include a database. The programming module functions in a single hardware server. A control module is used for the business service module.

According to the system described in JP 2001-319216 A, an order file and an image file are received to be authenticated by a GUI submodule of the user service module, and then transferred to the business service module. The business service module controls many of data flow operations of the GLS. The business service module processes the order file, and transfers the order file and the image file to the data service module. The data service module transfers the order file and the image file to the device service module. When an order is to be locally stored, the data service module also transfers both the files to the database. Data is stored in or fetched from the database as occasion demands. An example of the database is Oracle (trademark) 8.0 personal edition. The database is highly reliable in storing and fetching data and provides support of the Unicode Character Set for supporting multiple languages.

In the European photographic printing industry, the number of photofinishers (hereinafter referred to as "labs") called minilab shops for creating photographic prints in a scale of retail shops as are often seen in Japan is small, and most prints are created by large-scale labs with high productivity. In Europe, there are intermediary agents called retailers between customers and labs.

A retailer entrusts a retail shop such as a cosmetic store or a drugstore with ordering through setting of a printing order reception window. A customer places an order for printing with the retailer in the reception window. A lab is normally associated with a plurality of retailers. The lab receives customer's printing orders from the retailers to create prints. Provision of the prints created in the lab to the customers is carried out via the retailers in most cases. In other words, a retailer makes a contract with a lab, and asks a cosmetic store or a drugstore to set a printing order reception window. Upon reception of a printing order from a customer, the retailer transfers the received printing order to the lab. When necessary, the retailer receives finished prints from the lab and sends the prints to the designated shop having the reception window or customer's home.

In a distribution system of printing order/creation/reception, the lab is a kind of background existence which the customer is unaware of. The customer only contacts the retailer to order printing and to receive a finished print. In other words, the customer gets the feeling of placing an order for printing with the retailer while being completely unaware of the lab. Large-scale retailers deploy services in a plurality of countries.

SUMMARY OF THE INVENTION

Along with the popularization of the digital cameras and the communication networks, a lab and a retailer associated with each other develop software or other system in multilingual regions as in Europe, thereby starting identical network printing services among the countries or the regions.

However, as a first problem, troubleshooting, function improvement and user management require more operation costs, which may result in unsmooth deployment of the network printing services.

In the digital album services or the network printing services using such communication network, for example, a customer accesses a website managed/made public by a center sever for collectively controlling/managing a network system to view a web screen for placing an order for printing, and executes a predetermined operation while viewing the screen to place an order for printing.

The web screen is displayed in Japanese in the case of deploying such network services in Japan, and in English in the case of the US.

However, when such network services are deployed in a region where several official languages are used as in Europe, it is difficult to always display a web screen in a language most adequate to a customer. The same holds true for cases where Americans residing in Japan use the services.

Accordingly, a second problem may arise as described below.

More specifically, in multilingual regions where English, French, German, Dutch and the like are used, labs exist in a plurality of language regions, and print users use such languages as standard languages. Thus, the screen of a terminal used by a print user cannot always be drawn in a recommended language intended by a retailer (service provider).

Order information that reaches a lab (print production place) is written in a language selected by a user at the time of ordering. Thus, when a work instruction of each order is added to the order information, a.print producer does not always understand the used language.

According to JP 2001-319216 A, the digital imaging system described therein includes the database for supporting multiple languages. However, no specific measures are disclosed, and therefore this system cannot always perform displaying in proper languages for users in the multilingual regions. Under these circumstances, no displaying can be made for users in proper languages.

JP 2000-90353 A describes an operation guiding device which is used by a user who has registered his/her member information beforehand through operation of its operating unit in connection with an unattended laundry receiving apparatus. The operation guiding device includes a reading unit which reads information of a storage medium on which identification information for identifying the user is stored and an output unit which outputs the operation guide in an output form or format selected according to the information read by the reading unit. JP 2000-90353 A also describes that a language to be used in the operation guide is selected based on the information read by the reading unit and the output unit outputs the operation guide in the selected language.

In order to overcome the problem that it is difficult to always display a web screen in a language most adequate to a customer, the following method may be used which involves registering the customer as a member beforehand by using, for example, the technology described in JP 2000-90353 A, storing a display language of a web screen as member information in the center server, selecting the display language by using the member information of the member which accesses the system, and displaying the web screen to be viewed by the member in the selected display language. However, the device described in JP 2000-90353 A requires that the language used in the operation guide be stored beforehand as the member information of each member.

However, a third problem may arise as described below.

When services are provided to many customers in a wide region, the center server does not always have information on display languages for the customers who access the system. For example, in the case of Europe, not the center server but each retailer manages detailed member information, so the center server may only have minimum information such as names and IDs (identification information) of members.

Thus, when access is made from a customer whose display language information is not retained by the center server, a screen cannot always be displayed in a language best suited to the customer.

The present invention has been made to solve the abovementioned conventional problems.

A first object of the present invention is to provide: an image network system which is used in, for example, network printing services receiving printing orders or the like through a communication network such as the Internet, and which can perform a stable system operation, reduce operation cost loads of a photofinisher or a retailer, and perform calculation to charge the retailer or the photofinisher for a system operation; and a network server included in the image network system.

A second object of the present invention is to provide an image network system which includes a center server, a user terminal, and a lab system, which is used in, for example, network printing services receiving printing orders or the like from the user terminal through a communication network such as the Internet, and which is capable of setting a language understandable to a person involved in the operation in the center server, the user terminal or the lab system in a multilingual region where a plurality of languages are used.

Another aspect of the second object of the present invention is to provide a language setting method which is capable of setting a language understandable to a person involved in the operation in the center server, the user terminal or the lab system in a multilingual region where a plurality of languages are used.

A third object of the present invention is to provide: an image network system deploying network printing services, which can display a web screen for providing services in a language best suited to a customer even if a center server for collectively controlling/managing the network system does not manage detailed information on the customer, and the center server constituting the image network system.

To achieve the first object, according to a first aspect of the present invention, there is provided a network server which is connected to an order entry channel for receiving image data and an order from a customer and a lab system for creating a product according to the order from the customer through a communication network, comprising: an order receiving function section which accepts the order by receiving information on the order sent from the order entry channel; an image management function section which manages the image data sent from the order entry channel; a lab order receiving server which stores order information generated from the information on the order from the customer and the image data in relation to each other; a counting function section which counts one or both of the image data sent from the order entry channel to the network server for a predetermined period and the order information stored in the lab order receiving server for a predetermined period; and a processing function section which processes a counting result obtained by the counting function section with a predetermined unit.

Preferably, the network server is connected to a retailer system which is connected to the order entry channel through the communication network and makes public a transition web screen for enabling the order entry channel to access the network server through the communication network.

The first aspect of the present invention also provides an image network system comprising: the network server described above; an order entry channel connected to the network server through a communication network to receive image data and an order from a customer, and send the image data and information on the order to the network server; and a lab system connected to the network server through the communication network to receive the image data and information on the order from the lab order receiving server in the network server, and creates a product according to the order from the customer.

Preferably, the image network system further comprises a retailer system connected to the network server and the order entry channel through the communication network, and makes public a transition web screen for enabling the order entry channel to access the network server through the communication network.

Preferably, the lab system and the retailer system constitute a single system.

In the network server and the image network system of the present invention, preferably, the image management function section comprises a digital album function which enables the order entry channel to display images of the image data managed by the image management function section through a web screen made public through the communication network.

Preferably, the processing function section processes the counting result obtained by the counting function section in predetermined different units according to one or both of a format of the image data and processing carried out on the image data.

Preferably, the counting function section counts a number of image data sent from the order entry channel to the network server during the predetermined period for each the lab system or each the retailer system, and the processing function section multiplies the number of pieces of image data obtained by the counting function section by the predetermined unit to charge a result of the multiplication on the lab system, or the retailer system and the corresponding lab system.

Preferably, the counting function section counts an amount of image data sent from the order entry channel to the network server during the predetermined period for each the lab system or each the retailer system, and the processing function section multiplies the amount of image data obtained by the counting function section by the predetermined unit to charge a result of the multiplication on the lab system, or the retailer system and the corresponding lab system.

Preferably, the counting function section counts a number of pieces of order information stored in the lab order receiving server during the predetermined period for each the lab system or each the retailer system, and the processing function section multiplies the number of pieces of order information obtained by the counting function section by the predetermined unit to charge a result of the multiplication on the lab system, or the retailer system and the corresponding lab system.

Preferably, the counting function section counts an amount of image data regarding the order information stored in the lab order receiving server during the predetermined period for each the lab system or each the retailer system, and the processing function section multiplies the amount of image data obtained by the counting function section by the predetermined unit to charge a result of the multiplication on the lab system, or the retailer system and the corresponding lab system.

To achieve the second object, according to a second aspect of the present invention, there is provided an image network system comprising: a network server; an order entry channel connected to the network server through a communication network to receive image data and an order from a customer, and send the image data and information on the order to the network server; and a lab system connected to the network server through the communication network to receive the image data and the information on the order from the network server, and creates a product according to the order from the customer. The network server comprises an order receiving system which is accessed from the order entry channel via a web screen made public through the communication network; a database for fixedly storing information on a display language to be displayed on the web screen, the information on the display language is registered for the customer who accesses from the order receiving system as member information on the customer; and a first storage section for storing the information on the display language. The order entry channel comprises a second storage section for storing the information on the display language. And the order receiving system investigates existence of information on a language in one or more of the first storage section, the second storage section, parameters set in data for displaying the web screen, the member information stored in the database, and a language code set in the data for displaying the web screen; obtains the information on the language to set a language based on the obtained information as the display language to be displayed on the web screen when the information on the language exist, and sets a default display language preset as a default language for the web screen as the display language when the information on the language do not exist.

According to the present invention, for example, the parameters are URL parameters.

In the present invention, preferably, the image network system further comprises a retailer system connected to the network server and the order entry channel through the communication network, which makes public a transition web screen for enabling the order entry channel to view the web screen through the communication network, and the default display language is a language preset by the retailer system for the customers of the retailer system.

Preferably, the order receiving system writes the information on the display language determined as the display language into the first and second storage sections.

Preferably, the network server further comprises a member registration section for registering the information on the display language as member information on the customer who accesses the network server from the order entry channel, and when the display language is registered or changed at the member registration section, the order receiving system writes the information on the registered or changed display language into the database as the member information on the customer, as well as into the first and the second storage sections.

Preferably, the network server further comprises; a work instruction registration section for registering a work instruction based on the order information according to the order from the customer in a plurality of languages, and an order management section for comparing a language of the order from the customer with a language used in the lab system, loading the work instruction of the lab used language from the work instruction registration section when the language of the order is different from the lab used language, and adding the work instruction to the order information to output the information to the lab system.

Preferably, the network server further comprises; an order information registration section for registering order information corresponding to first order information on the order from the customer in a plurality of languages, and an order management section for comparing a language of the order from the customer with a language used in the lab system, loading the order information on the lab used language as second order information from the order information registration section when the language of the order is different from the lab used language, and adding the second order information to the first order information to output the information to the lab system.

According to another mode of the second aspect of the present invention, there is provided an image network system comprising: a network server; an order entry channel connected to the network server through a communication network to receive image data and an order from a customer, and send the image data and information on the order to the network server; and a lab system connected to the network server through the communication network to receive the image data and the information on the order from the network server, and creates a product according to the order from the customer. The network server comprises an order receiving system which is accessed from the order entry channel via a web screen made public through the communication network; a database for fixedly storing information on a display language to be displayed on the web screen, the information on the display language is registered for the customer who accesses from the order receiving system as member information on the customer; and a first storage section for storing the information on the display language. The order entry channel comprises a second storage section for storing the information on the display language. The network server further comprises a member registration section for registering the information on the display language as member information on the customer who accesses to the network server from the order entry channel. And, when the display language is registered or changed at the member registration section, the order receiving system writes the information on the registered or changed display language into the database as the member information on the customer, as well as writes the information into the first and the second storage sections.

According to still another mode of the second aspect of the present invention, there is provided an image network system comprising a network server; an order entry channel connected to the network server through a communication network to receive image data and an order from a customer, and send the image data and information on the order to the network server; and a lab system connected to the network server through the communication network to receive the image data and the information on the order from the network server, and creates a product according to the order from the customer. The network server comprises an order receiving system which is accessed from the order entry channel via a web screen made public through the communication network; a work instruction registration section for registering a work instruction based on the order information according to the order from the customer in a plurality of languages; and an order management section for comparing a language of the order from the customer with a language used in the lab system, loading the work instruction of the lab used language from the work instruction registration section when the language of the order is different from the lab used language, and adding the work instruction to the order information to output the information to the lab system.

According to yet another mode of the second aspect of the present invention, there is provided an image network system comprising a network server; an order entry channel connected to the network server through a communication network to receive image data and an order from a customer, and send the image data and information on the order to the network server; and a lab system connected to the network server through the communication network to receive the image data and the information on the order from the network server, and creates a product according to the order from the customer. The network server comprises an order receiving system which is accessed from the order entry channel via a web screen made public through the communication network; an order information registration section for registering order information corresponding to first order information on the order of the customer in a plurality of languages; and an order management section for comparing a language of the order from the customer with a language used in the lab system, loading the order information on the lab used language as second order information from the order information registration section when the language of the order is different from the lab used language, and adding the second order information to the first order information to output the information to the lab system.

According to still another mode of the second aspect of the present invention, there is provided a language setting method in an image network system including a network server for receiving image data and an order from a customer with an order entry channel via a web screen made public through the communication network and providing the image data and information on the order to a lab system for creating a product according to the order, the method comprising the steps of: investigating existence of information on a language in one or more of a database provided in the network server for fixedly storing information on a display language to be displayed on the web screen as member information on the customer who accesses from the order receiving system, a first storage section provided in the network server for storing the information on the display language, a second storage section provided in the order entry channel for storing the information on the display language, parameters set in data for displaying the public screen, and a language code set in the data for displaying the public screen, in predetermined order; obtaining the information on the language when the information on the language exist in the investigating step, and obtaining information on a default display language preset as a default language used for the web screen in the network server when the information on the language do not exist in the investigating step; determining the language by the information on the language or the language by the information on the default display language as the display language.

According to yet another mode of the second aspect of the present invention, there is provided a language setting method in an image network system including a network server for receiving image data and an order from a customer with an order entry channel via a web screen made public through the communication network and providing the image data and information on the order to a lab system for creating a product according to the order, the method comprising the steps of: registering information on the display language on the web screen into a database provided in the network server as member information on the customer who accesses to the network server from the order entry channel; writing the information on the display language in a first storage section in the network server and a second storage section in the order entry channel when the information on the display language is registered or changed in the registering step.

According to yet still another mode of the second aspect of the present invention, there is provided a language setting method in an image network system including a network server for receiving image data and an order from a customer with an order entry channel and providing the image data and information on the order to a lab system for creating a product according to the order, the method comprising the steps of: registering a work instruction based on order information according to the order in a plurality of languages; comparing a language of the order with a lab used language used in the lab system; and loading the work instruction of the lab used language from the work instructions registered in the plurality of languages when the language of the order is different from the lab used language, and adding the work instruction to the order information to output the information to the lab system.

According to still another mode of the second aspect of the present invention, there is provided a language setting method in an image network system including a network server for receiving image data and an order from a customer with an order entry channel and providing the image data and information on the order to a lab system for creating a product according to the order, the method comprising the steps of: generating a first order information according to the order in a language of the order; generating and registering order information corresponding to first order information in a plurality of languages; comparing a language of the order with a lab used language used in the lab system; and loading the order information on the lab used language from the order information registered in the plurality of languages in the generating and registering step as a second order information when the language of the order is different from the lab used language, and adding the second order information to the first order information to output the information to the lab system.

To achieve the third object, according to a third aspect of the present invention, there is provided an network server connected to an order entry channel for receiving image data and an order from a customer and a retailer system for making public a transition web screen to be accessed by the order entry channel through a communication network, the network server comprising: a web screen publication section which makes public a web screen that can be viewed by the customer with the order entry channel through a communication network; and a display language switching control function section which includes an information analysis function section and a display language switching function section, and switches a display language of the web screen viewed by the customer according to the customer who has accessed the network server. When the web screen is accessed via the transition web screen, the display language switching control function section analyzes information supplied from the retailer system by the information analysis function section, and switches a display language of the web screen by the display language switching function section according to a result of the analysis.

The third aspect of the present invention also provides an image network system comprising the network server described above; an order entry channel connected to the network server through a communication network, for receiving image data and an order from a customer and sending them to the network server; and a retailer system connected to the network server and the order entry channel through the communication network, for making public a transition web screen for enabling the order entry channel to access the network server through the communication network.

Preferably, the image network system further comprises a lab system connected to the network server through the communication network to obtain image data and information on an order from the customer, and to create a product according to the order from the customer.

In the network server and the image network system of the present invention, it is preferable that the information analysis function section have one or more display language information analysis function sections.

Preferably, the network server further comprises a member management function section which manages member information on customers belonging to the image network system as members; and a retailer information management function section which manages information on the retailer system as retailer information, and the information analysis function section includes a member information analysis function section which analyzes a display language from the member information and a retailer information analysis function section which analyzes the display language from the retailer information as the display language information analysis function sections.

Preferably, the member information analysis function section includes a display language information analysis function section and a display language inference function section.

Preferably, the display language inference function section analyzes the information supplied from the retailer system to infer a display language.

Preferably, the display language switching function section incorporates language resources on one web screen according to the customer to switch a display language of the web screen according to the customer.

Preferably, the network server has a plurality of web screens of different display languages for one type of web screen, and the display language switching function section switches the display language of the web screen according to the customer by causing the order entry channel to access the web screen of the display language according to the customer.

Preferably, when the display language switching control function section judges that the display language is inappropriate after changing the display language of the web screen according to the result of the analysis by the information analysis function section, the display language switching control function section switches the display language of the web screen to the next candidate of the display language according to the result of the analysis, or displays the candidates of the display language according to the result of the analysis on the web screen to offer a menu of choices.

According to the image network system of the first aspect of the present invention configured as described above, the center system (network center) which integrates the network system by the network server of the present invention is provided, and the plurality of photofinishers or a retailer associated with each of the photofinishers connects the system of the computer to the center system through the communication network such as the Internet to participate in the network system. Thus, common portions in the network printing services having heretofore different systems can be shared to reduce operation costs, while managing various processing operations, troubleshooting, and function improvement services at the center system in a unified manner, thus enabling consistent operation of the network printing services.

Since images (image data) and order information sent from the customers can be managed in a unified manner at the center system, the amount of images flowing through the center system can be grasped for each retailer. Accordingly, it is possible to properly calculate charges to the photofinisher or the retailer for system operation according to the amount of images and the like.

According to the image network system of the second aspect of the present invention, it is possible to set a language understandable to each user who accesses the system via the user terminal in a multilingual region where a plurality of languages are used, as the display language to be displayed on a public screen.

According to the image network system of the second aspect of the present invention, it is possible to set a language understandable to an operator of the user terminal, the center server or the retailer even in the case of failure in acquisition of display language information of a user who accesses the system via the user terminal in a multilingual region where a plurality of languages are used.

Furthermore, according to the image network system of the second aspect of the present invention, it is possible to set a language understandable to an operator of the lab system in a multilingual region where a plurality of languages are used.

According to the language setting method of the second aspect of the present invention, it is possible to set a language understandable to each user who accesses the system via the user terminal in a multilingual region where a plurality of languages are used, as the display language to be displayed on a public screen.

According to the language setting method of the second aspect of the present invention, it is possible to set a language understandable to an operator of the user terminal, the center server or the retailer even in the case of failure in acquisition of display language information of a user who accesses the system via the user terminal in a multilingual region where a plurality of languages are used.

Furthermore, according to the language setting method of the second aspect of the present invention, it is possible to set a language understandable to an operator of the lab system in a multilingual region where a plurality of languages are used.

According to the third aspect of the present invention configured as described above, in the image network system for deploying the network printing services or digital album services, even when access is made by a customer whose information is not managed by the center server collectively controlling/managing the network system, a web screen to be viewed by the customer can be displayed in a language best suited to the customer.

Thus, the present invention can provide not only specified customers but also many customers with services equivalent to those for the customers whose information is managed by the center server.

BRIEF DESCRIPTION OF THE DRAWINGS

In the accompanying drawings:

FIG. 1 is a block diagram showing the configuration of an example of an image network system according to a first aspect of the present invention;

FIG. 2 is a diagram showing an example of an album table for managing an album in the image network system shown in FIG. 1;

FIG. 3 is a diagram showing an example of an image information table for managing image information in the image network system shown in FIG. 1;

FIG. 4 is a conceptual diagram for explaining an image manager function in the image network system shown in FIG. 1;

FIG. 5 is a diagram showing an example of a lab management table for managing a lab in the image network system shown in FIG. 1;

FIG. 6 is a diagram showing an example of a retailer management table for managing a retailer in the image network system shown in FIG. 1;

FIG. 7 is a diagram showing an example of an order table for managing an order in the image network system shown in FIG. 1 ;

FIG. 8 is a schematic block diagram for explaining a language setting method in an image network system according to a first embodiment of a second aspect of the present invention;

FIG. 9 is a block diagram schematically showing the configuration of another example of the image network system of the present invention;

FIG. 10 is a flowchart showing a method of setting a display language in a sequence of steps in the image network system according to a second embodiment of the second aspect of the present invention;

FIG. 11 is a flowchart showing a process next to that of FIG. 10 in a sequence of steps;

FIG. 12 is a schematic diagram showing a main section of an image network system according to a third embodiment of the second aspect of the present invention;

FIG. 13 is a schematic diagram showing a main section of an image network system according to a fourth embodiment of the second aspect of the present invention;

FIG. 14 is a block diagram schematically showing the configuration of still another example of the image network system of the present invention;

FIG. 15 is a block diagram schematically showing the configuration of yet another example of the image network system of the present invention;

FIG. 16 is a block diagram conceptually showing an example of the system configuration of an image network system according to a third aspect of the present invention;

FIG. 17 is a conceptual diagram showing an example of a member management table in a retailer system of the image network system shown in FIG. 16;

FIG. 18 is a conceptual diagram showing another example of the member management table in the retailer system of the image network system shown in FIG. 16;

FIG. 19 is a block diagram showing an example of the structure of display language switching control function blocks in the image network system shown in FIG. 16;

FIG. 20 is a flowchart for explaining the display language switching control in the image network system shown in FIG. 16;

FIG. 21 is a flowchart for explaining the display language switching control in the image network system shown in FIG. 16;

FIG. 22 is a conceptual diagram for explaining the display language switching control in the image network system shown in FIG. 16;

FIGS. 23A and 23B are conceptual diagrams each for explaining an example of display language switching in the image network system shown in FIG. 16;

FIG. 24 is a conceptual diagram for explaining another example of the display language switching in the image network system shown in FIG. 16;

FIG. 25A is a conceptual diagram showing an example of a center member management table in the image network system shown in FIG. 16;

FIG. 25B is a conceptual diagram showing an example of a retailer member management table in the image network system shown in FIG. 16;

FIG. 26 is a block diagram showing another example of the structure of the display language switching control function blocks;

FIG. 27 is a flowchart for explaining an example of the display language switching; and

FIG. 28 is a flowchart for explaining another example of the display language switching.

DETAILED DESCRIPTION OF THE PREFERRED EMBODIMENTS

An image network system, a network sever, and a language setting method according to preferred embodiments of the present invention will be described below in detail with reference to the accompanying drawings.

First, a first aspect of the present invention will be described.

The first aspect of the present invention provides: an image network system for use in, for example, network printing services which receives printing orders through a communication network such as the Internet; and a network server included in the image network system. The image network system according to the first aspect can perform a stable system operation, reduce operation cost loads of a photofinisher or a retailer, and perform calculation to charge the retailer or the photofinisher for a system operation.

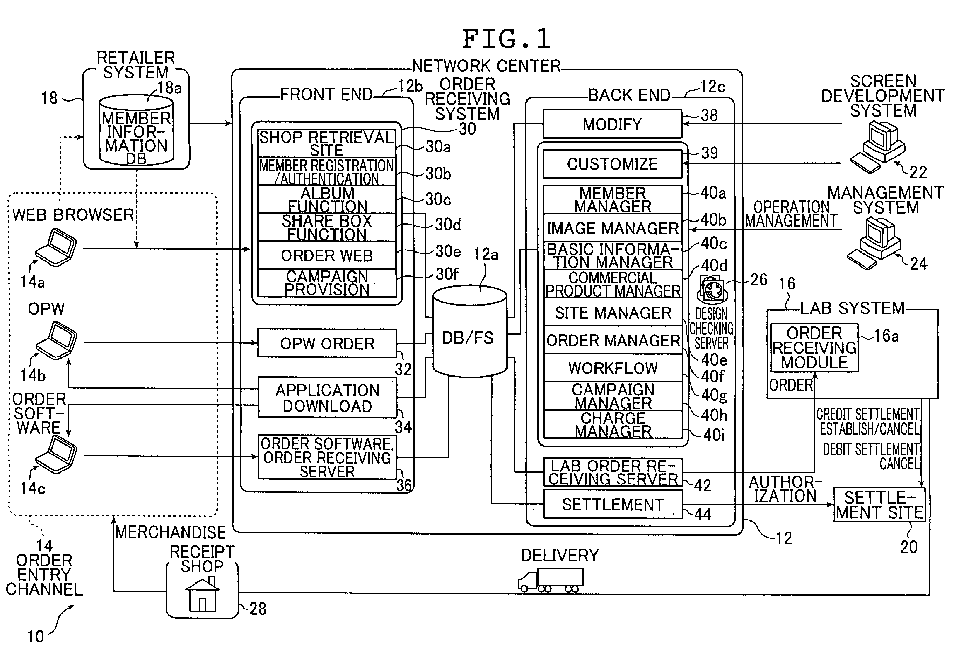

FIG. 1 conceptually shows the configuration of an image network system 10 according to the first aspect of the invention.

The image network system 10 of the shown example (hereinafter referred to as "network system 10") deploys so-called network printing services (online printing services) which include receiving an order of photograph printing from a customer (user) through a communication network such as the Internet, creating a product according'to the order and providing the created product to the customer, and also deploys as a preferred embodiment a so-called digital album service which includes storing/managing an image (image data) transferred from the customer to enable image viewing.

The network system 10 basically includes a network center (center server, center system) 12 which is a network server of the invention for collectively controlling/managing the network system 10, an order entry channel (user terminal) 14 from which the customer places an order for printing or other operation, a lab system 16 owned by a photofinisher (hereinafter referred to as "lab"), and a retailer system 18 which serves as an intermediary between the customer and the lab.

In the network system 10 of the shown example, the network center 12, the order entry channel 14, the lab system 16, and the retailer system 18 are interconnected through a communication network such as the Internet. In the image network system of the invention, the network center 12, the order entry channel 14, and the retailer system 18 are interconnected through a communication network made public such as the Internet. However, only the lab system 16 may be connected to the network center 12 through a dedicated communication line without being connected to the order entry channel 14 or the retailer system 18.

In the shown example, to clearly show the configuration of the network system 10, the drawing was simplified to show only one each of three types of order entry channel 14, one lab system 16, and one retailer system 18. However, the invention is not limited thereto.

Therefore, the network system 10 may include a plurality of lab systems 16. Usually, the network system 10 includes a plurality of retailer systems 18.

The network center 12 receives image data and an order from the customer operating the order entry channel 14 through a communication network, and causes the lab system 16 to create a product according to the customer's order.

The order entry channel 14 enables reception of a customer's printing order, and transfer of an image (uploading of the image) to the network center 12.

In the network system 10 of the shown example, customers include members registered in the network system 10 and nonmembers not registered therein. The members include center members whose customer's member information is managed by the network center 12, and retailer members whose customer's member information is managed by the retailer system 18. In the network system 10 of the shown example, the members may be center members or retailer members, and each of the retailer members necessarily belongs to any of the retailer systems 18 (retailers).

The order entry channel 14 is basically configured by using a personal computer (PC) of the customer connectable to the communication network, or a printing order terminal which is installed at a shop receiving printing orders and is connected to the communication network. The order entry channel 14 is a user terminal which enables reception of a customer's printing order or image uploading through the communication network.

The network system 10 of the invention includes three types of order entry channel 14, i.e., an order entry channel (first user terminal) 14a which uses a web browser, an order entry channel (second user terminal) 14b which uses a general-purpose application (software, more specifically online printing software) or a website, and an order entry channel (third user terminal) 14c which uses order software as an order application only for the network system 10.

In the order entry channel (first user terminal) 14a that uses a web browser, a well-known web browser such as Internet Explorer™ from Microsoft Corporation, or Netscape Communicator™ from Netscape Communications Corporation is used to access (connect with) the network center 12 (website managed by the network center 12 and made public through the communication network) to thereby place an order for printing.

The order entry channel 14a does not connect with the network center 12 from the beginning but accesses a transition web screen (web screen which serves as an entrance for accessing the network center 12, an entrance web screen) made public by the retailer system 18 through a communication network (web), and then accesses the network center 12 (front end to be described later) from the transition web screen.

The order entry channel (second user terminal) 14b that uses general-purpose software or a website accesses the network center 12 to place an order for printing using a print ordering function implemented in an operating system of a PC through the communication network, a print ordering function owned by an application of a digital camera through the communication network, or a print ordering function set in a website made public through the communication network.

Specific examples of the order entry channel 14b include "Online Printing Wizard (OPW)" of Windows XP™ from Microsoft Corporation, "FinePix viewer" from FUJIFILM Corporation, "PictureIt (PictureIt Express)" from Microsoft Corporation, "Foto Factory" which is an image related site managed/run by FUJIFILM Europe GmbH, and "MSN (Europe)" which is a website managed/run by Microsoft Corporation.

In the network system 10 of the shown example, only the OPW (online printing software) is set for the order entry channel 14b of this type. In the network system 10, a plurality of retailer systems 18 (retailers) participate in the OPW. In the order entry channel 14b that uses the OPW, a retailer (OPW order service site provided by the retailer system 18) through which an order for printing is placed is selected on a predetermined selection screen before the network center 12 is accessed.

The order entry channel (third user terminal) 14c that uses dedicated order software is a PC which includes order software installed as a dedicated application (software) for ordering a product in the network system 10. The order software is used to access the network center 12 to place an order for printing.

In the order entry channel 14c, a retailer for placing an order for printing is uniquely determined, so the customer may access the network center 12 without selecting a retailer. Alternatively, the customer may access the network center 12 after a retailer used for placing an order for printing has been selected on the selection screen.

One order entry channel 14 may of course correspond to one, or two or more of the web browser, the OPW, and the order software.

To clarify the description below, sentences were simplified by referring, for convenience, the order entry channel 14a which uses the web browser to as "web browser 14a", the order entry channel 14b which uses the OPW to as "OPW 14b", and the order entry channel 14c which uses the order software to as "order software 14c".

The retailer system 18 serves as an intermediary between a customer and a lab, and includes, for example, a PC, a workstation (WS), or a server device.

As described above, in the European photographic printing industry, the number of photofinishers (hereinafter referred to as "labs") called minilab shops for creating (photographic) prints in a scale of retailer shops is small, and most prints are created by large-scale labs with high productivity. In Europe, in most cases, there are intermediary agents called retailers between customers and labs.

A retailer entrusts a retail shop such as a cosmetic store or a drugstore with ordering through setting of a printing order reception window. A customer places an order for printing with the retailer in the reception window. A lab is normally associated with a plurality of retailers. The lab receives customer's printing orders from the retailers to create prints. Provision of the prints created in the lab to the customers is carried out via the retailers in most cases. In other words, a retailer makes a contract with a lab, and asks a cosmetic store or a drugstore to set a printing order reception window. Upon reception of a printing order from a customer, the retailer transfers the received printing order to the lab. When necessary, the retailer receives finished prints from the lab and sends the prints to the shop having the designated reception window or customer's home.

In a distribution system of printing order/creation/reception, the lab is a kind of background existence which the customer is unaware of. The customer only contacts the retailer to order printing and to receive finished prints. In other words, the customer gets the feeling of placing an order for printing with the retailer while being completely unaware of the lab.

The retailer system 18 serves as a retailer in the network system 10. For example, this retailer system 18 is owned by the retailer as the intermediary, in other words, run/managed by the retailer which is an intermediary having a contract with a lab.

In the present invention, the retailer system is not limited to a retailer in the photographic printing industry in Europe, in other words, the one run/managed by an intermediary having a contract with a lab. In the present invention, the retailer apparently refers to a service entity which directly provides services to customers, and the retailer system plays a role of the service entity, that is, carries out operations of the service entity. More specifically, the retailer (service entity) may take any operation form, as long as it receives an order for photographic prints or the like from a customer, delivers a finished product to the customer and receives the payment therefor. Specific examples of the retailer (service entity) include shops which receive orders for photographic printing or the like and hand over the finished prints or the like in an exclusive manner or carry out such services as a side job (private shops) and convenience stores. Each of the shops makes a contract with a lab where photographic prints or other products are created, thereby receiving orders for products and handing over the created products as their own job. Labs where photographic prints or other products are created, and so-called minilab shops also receive orders for products and hand over the created products, and can thus function as the retailer (service entity).

As described above, the retailer system 18 is connected to the network center 12, the order entry channel 14, and the lab system 16 through the communication network such as the Internet. The retailer system 18 makes public a transition web screen (an entrance web page) for accessing the network center 12 from the web browser 14a in the communication network (web).

According to the form of the retailer system 18, the transition web screen is provided as a web screen in the intermediary which is provided on a website of a retail shop or to which the website is linked, or a web screen in a website of a private shop, a convenience store, or a lab (i.e., dedicated order web screen of such shop).

The member information of the retailer members is managed in the retailer system 18. Specifically, the retailer system 18 for managing the member information includes a member information database (hereinafter referred to as "member information DB") 18a, which manages the member information of the retailer members.

The retailer system 18 has a function similar to member registration/authentication in the network center 12 to be described below. Registration of the retailer members is carried out in the retailer system 18. When the retailer members access the network center 12, the members are authenticated in the retailer system 18.

The transition web screen (public screen) through which access is made from the web browser 14a to the network center 12 may be created by, for example, displaying contents (e.g., buttons of "order print" and "view album") to link with the network center 12 (website managed by the network center 12) on the retailer's website and the like.

Alternatively, a transition web screen only for access to the network center 12, which does not require use of the website may be provided.

In the network system 10, the network center 12 (front end 12b to be described below) cannot be directly accessed through the web browser 14a. When the web browser 14a is used, the customer accesses the network center 12 from the web screen (viewing screen) in, for example, a website (website for viewing a screen offered by an order receiving system 30) made public by the retailer system 18 through the communication network.

When the OPW 14b is used, the customer basically accesses the network center 12 after selection of a retailer.

When the order software 14c is used, a retailer is uniquely determined, or the customer accesses the network center 12 in the same manner as above after selection of a retailer.

Thus, in the network system 10 of the present invention, the customer can place an order for printing with a feeling of placing an order for printing with the retailer without being aware of the network center 12 or the lab (lab system 16).

In the network system 10 of the present invention, the retailer system 18 and the lab system 16 to be described later may be integrated into one system. In other words, one system may serve-as the lab system 16 and the retailer system 18. When the lab system 16 and the retailer system 18 are not integrated into one system, the lab (photofinisher) or the retailer often operates both of the lab system 16 and the retailer system 18. The form in which the retailer system 18 and the lab system 16 belong to one company will be hereinafter referred to as a "combined lab".

The form of the combined lab is considered to be effective when a small-scale lab having a so-called minilab participates in the network system 10. Normally, the lab system 16 (lab) and the retailer system 18 (retailer) take a form in which a large number of retailers belong to one lab. However, the combined lab is basically composed of one lab and one retailer.

In the lab system 16, a system installed with order software to be described later, for obtaining an order job and the like through access to the network center 12, and a production device such as a printer for creating a product such as a photographic print is often provided separately. When the retailer system 18 is integrated with the lab system 16 of the above configuration into one system, the system of the lab system 16 installed with the order software and the retailer system 18 are integrated into one system.

In the network system 10 of the present invention, the retailer system 18 is not a essential component. The network system 10 may be configured without the retailer system 18.

In this case, members of the network system 10 may only be composed of center members, or may include lab members managed by the lab system 16 and center members. The members including the lab members and the center members each belong to a lab system 16 (lab).

The network center 12 controls the overall network system 10 and is configured by combining a PC, a WS, a network device, a server device, and a storage device, for example.

The network center 12 includes a database/file server (DB/FS) 12a for saving/managing images and various pieces of information such as images sent from customers, member information, information on printing orders, and information for managing and operating the network system 10.

As conceptually shown in FIG. 1, the network center 12 includes the front end 12b and a back end 12c.

The front end 12b is a site for receiving customers' orders, and can be accessed from the order entry channel 14. In other words, the front end 12b provides such a function as a user interface which enables the customer to place an order for printing or upload an image.

The back end 12c is a site for managing the network system 10 and the network center 12. Accordingly, only the systems for managing/operating the network system 10, such as a management system 24 for managing the network center 12, the retailer system 18, and the lab system 16, can access the back end 12c. Access from the order entry channel 14 is inhibited.

In the network center 12, the front end 12b includes the order receiving system 30 equipped with functional blocks such as a shop retrieval site block (/a shop retrieval web) 30a, a member registration/authentication block 30b, an album function block 30c, a share box function block 30d, an order web block 30e, and a campaign provision block 30f, as well as functional blocks such as an OPW order block 32, an application download block 34, and an order software order receiving server 36. In the following description, the term "block" in the functional blocks will be omitted and the functional blocks will be referred to simply as shop retrieval site 30a, member registration/authentication 30b and so on.

The order receiving system 30 that includes the shop retrieval site 30a, the member registration/authentication 30b, the album function 30c, the share box function 30d, the order web 30e, and the campaign provision 30f corresponds to the web browser 14a. In other words, the order receiving system 30 is accessed from the web browser 14a.

The customer can use the web browser 14a to access the front end 12b (order receiving system 30) of the network center 12 from the web screen in, for example, the website made public by the retailer system 18 through the communication network, thereby using the following functions. When the network system 10 is configured without including the retailer system 18, the web browser 14a may be configured so as to enable direct access to the front end 12b (website made public by the front end through the communication network).

In the order receiving system 30, the shop retrieval site 30a provides a retrieval website through which the customer undecided at which shop to receive a product such as a print retrieves an available shop. For example, the customer accesses the shop retrieval site 30a from the web browser 14a and designates a country to display a list of available shops and information on the shops.

The member registration/authentication 30b provides functions of registering center members, changing registered member information, and authenticating members (sign-in). In the illustrated network center 12, authentication is carried out by using a member ID (identification information such as an identification number) and a password set for each member. The member information is managed by a member manager of the back end 12c described below.

The retailer system 18 has similar functions for member registration/authentication. Regarding retailer members, the retailer system 18 carries out member registration, member authentication, and management of member information as described above. Accordingly, when accessing the network center 12 from the web browser 14a, the retailer member is authenticated in the retailer system 18 before accessing the network center 12, and member authentication is not executed in the front end 12b.

When the center member accesses (signs in) the network center 12 of the network system 10 from the web browser 14a, the center member accesses a transition web screen for center members made public by the retailer system 18, then accesses from the transition web screen an authentication web screen (center member sign-in screen) for the member registration/authentication, where an authentication user ID and a password are input to execute authentication to obtain permission to access each web screen (each function) of the front end of the network center 12 (that is, the center member is in a signed-in state (authenticated state)).

On the other hand, when the retailer member accesses (signs in) the network center 12 from the web browser 14a, the retailer member accesses a transition web screen for retailer members made public by the retailer system 18. A retailer unique ID and a password are input to the transition web screen to execute authentication. After various pieces of information are input as required, the retailer system 18 transfers predetermined information (information necessary for sign-in) to the member registration/authentication 30b. In the member registration/authentication 30b (in the front end) of the network center 12, authentication in the retailer system 18 is checked. Upon reception of necessary information (at a point when transfer of predetermined information is confirmed), the retailer member is automatically placed in a signed-in state without the necessity of executing authentication.

Examples of the predetermined information sent from the retailer system 18 to the network center 12 (member registration/authentication 30b) when the retailer member signs in include a retailer ID, a retailer unique ID, status information (whether the customer succeeded in authentication), a name, an address, a telephone number, and an E-mail address.

For example, center member registration is carried out by accessing the registration screen made public by the member registration/authentication 30b from the web screen made public by the retailer system 18 to which only the center members belong, and inputting necessary items to the registration screen.

Exemplary items include an authentication user ID, a password (password optionally set by a member), an address, a name, an E-mail address, a date of birth, a registered shop, a telephone number, a display language, permission/inhibition of broadcast E-mail transmission, permission/inhibition of transmission of an E-mail for notifying about expiration of the image storage period, and a delivery destination. Upon entry of the necessary information, the information is checked in the member registration/authentication 30b. If proper, the information is saved in the DB/FS 12a, whereby the customer is registered as a center member of the network system 10. In the member registration/authentication 30b, an E-mail for notifying about registration completion is transmitted to the input address. The member information of the center member saved in the DB/FS 12a is managed by the member manager of the back end described below.

Registration of the center member may be carried out such that registration is permitted (temporarily made) upon entry of only the authentication user ID, the password, the E-mail address, and the registered shop, and in such a case, the member is required to input information immediately before placing a first order.

In this case, upon reception of the first order, the member registration/authentication 30b refers to the member manager described below to check entry of necessary information to prompt the member to enter insufficient information. Upon entry, whether all pieces of necessary information have been properly entered is checked. After the checking, the information of the center member managed by the member manager is updated (added in the DB/FS 12a), thereby formally completing registration of the center member.

In the aforementioned example, one of an E-mail address, an ID designated by a member, and an ID automatically given by the member registration/authentication 30b is used for the authentication user ID. A plurality of retailer systems 18 cannot share one authentication user ID. A registered shop (i.e., product delivery destination) may be designated at the time of ordering, and the thus designated registered shop will be used as the initial setting in the subsequent orders (managed as the member information).

In addition to center member registration and center member/retailer member sign-in, the member registration/authentication 30b provides functions regarding member registration/changing, such as center member information changing, receipt shop registration, receipt shop updating, center member password changing, and center member password inquiry, as well as functions regarding member authentication, such as center member sign-out, retailer member sign-out, and automatic sign-out.

The center member information changing is a function which enables the center member to change various pieces of information regarding himself/herself after having signed in. As the member information of the center member, various pieces of information such as a member ID, a retailer ID, an address, a telephone number, an E-mail address, and a display language are managed, which will be described later in detail in conjunction with the member manager.

The receipt shop registration is a function which enables the member to newly register a receipt shop, and the receipt shop updating is a function of changing the receipt shop registered by the center member. The center member password changing is a function which enables the center member to change his/her own password after sign-in. The center member password inquiry is a function which enables the center member to make an inquiry when he/she forgot his/her own password. For example, authentication is carried out by the authentication user ID and the E-mail address so that the member can confirm the password.

The center member sign-out provides a function which enables the center member to sign out (release the authentication state), and the retailer member sign-out provides a function which enables the retailer member to sign out. In both cases, the member presses a sign-out button on the web screen at an optional timing to sing out from the network center 12, and the member is placed in a state of access to the web screen designated by the retailer system 18 to which the member belongs (the member transfers to the designated URL).

The automatic sign-out provides a function which enables the member to automatically sign out when an unoperated state continues for a certain period of time. In the automatic sign-out, when the member accesses the web screen after a certain period of time has passed in the unoperated state, a screen including an error message and a link to the web screen designated by each retailer system 18 is displayed.

The album function (/the digital album function) 30c provides a function of uploading an image through the web browser 14a, a function of storing images of each member as an album (digital album), a function which enables the member to display an album image through the web browser 14a (function which enables the member to view his/her own album), and a function which enables the member to rotate the displayed album images or view them in a slide show. In other words, the album function 30c provides a digital album function through the communication network.

In the network system 10 of the shown example, the albums provided by the album function 30c of the network center 12 include a system album and a My Album. The system album stores images uploaded by the member. The network center 12 automatically creates one system album for each member at the initial period (for example, at the time of member registration). The images uploaded by the member are all stored in the system album. On the other hand, the My Album is an album optionally created by the member to store images selected by the member. The member optionally selects images from the uploaded images to store them all together in the created My Album.

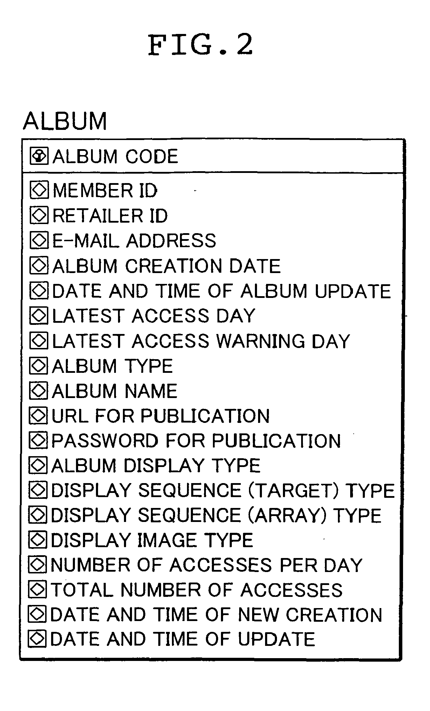

FIG. 2 shows an example of an album management table (album table).

Each album is managed based on various pieces of information starting from an album code which is a code for identifying the album. The album type is used to distinguish the system album, the My Album, and a photo storage and a share box to be described below from one another. The display sequence (target) type indicates an item for managing the display sequence of images in the album, and codes of images to be displayed in the album identified by the album code are stored. The display sequence (array) type designates an array of the image display sequence designated by the display sequence (target) type. The image code and the display sequence (array) are thus designated in the album table, whereby album services are provided to the members without holding image data for each album, and effective utilization of the image data storage area is also realized.

The image uploaded through the order entry channel 14 is managed based on image information including an image code for specifying the image, a member ID, a retailer ID, a file format type, a stored file size, a stored file name, an upload date, and a latest order date. The image information will be described later.

In the network system 10 of the shown example, the member can use the album function to carry out various album operations and album image editing.

Exemplary album operations that may be carried out include creating a new My Album, setting/changing the title of the My Album, displaying the album list, and deleting the My Album. The member cannot delete the system album.

Examples of the album image editing that may be carried out include displaying all images in an album in a slide show, displaying a thumbnail image list, displaying an enlarged image, displaying a rotated image, adding an image, changing the image display order, changing the image name, copying or moving an image to another album (a plurality of images or all images may be selected for this operation), deleting an image (a plurality of images or all images may be selected for this operation), and placing an order for a product such as a print from an image stored in the album.

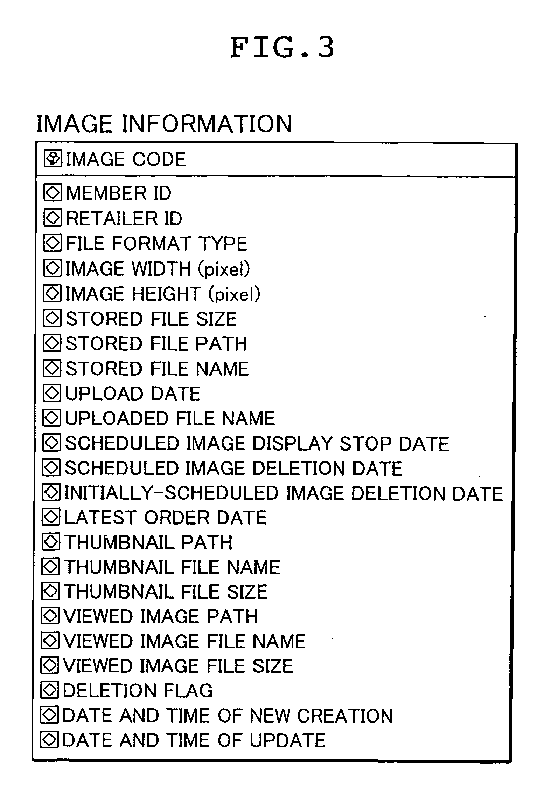

FIG. 3 shows an example of a table (image information table) for managing images (image information) by the album function 30c or an image manager (album manager) 40b described below, for realizing such an album function.

The image information is managed based on various pieces of information starting from the image code indicating the image. In this table, a stored file is a file for storing an uploaded image file. A thumbnail is an image file in displaying a list of thumbnail images. A view image file is an image file in displaying images in a slide show. Thus, storing information in an optimal form according to the purpose of use enables speed-up in displaying the thumbnail image list and smooth reproduction of a slide show, thus enhancing the member's operability.

The share box function 30d provides a function which enables the member to publicly offer his/her own album image to a third party. The member can use the share box function to create one or more share boxes for publicly offering to the third party an arbitrary number of images selected from the album. The images in the share box may also be publicly offered to the third party by providing the URL (address) for viewing these images to an acquaintance or other person.

The member can use the share box function to carry out various operations for share boxes.

Specific examples of the share box function include selecting at least one image in an album to create a share box (a plurality of images or all images may be selected for this operation); publicly offering the created share box (providing the URL for viewing the share box by transmitting a mail, for example), setting a password for publicly offering the share box; setting the name of the share box; stopping publicly offering the share box; displaying the list of share boxes, displaying images in the share box in the form of a thumbnail image list; displaying images in the share box in the form of a slide show; displaying images in the share box in an enlarged mode; and saving/deleting/editing the address of the mail transmitted when the share box was made public.

The third party can use the share box function to carry out various operations for the share box that was made public.

Specific examples of the share box function that may be carried out by the third party include displaying images in a share box (viewing the share box); carrying out password authentication for viewing the share box; displaying the images in the share box in the form of a slide show; displaying the images in the share box in an enlarged mode; and placing an order for a product such as a print from an image selected from the share box.

Displaying (viewing) of images stored in the album and the share box is only allowed for a predetermined period, and the images are also stored in the album and the share box for a predetermined period. For example, the retailer system 18 may set this period, as will be described below.

In addition to the album and the share box, the front end 12b of the network center 12 includes the photo storage which provides a function of storing for a predetermined period, images uploaded by nonmembers to order prints. The images stored in the photo storage can be displayed during the ordering operation. After the end of ordering, however, the images cannot be displayed.

The order web 30e provides a function of receiving orders for products including a print, fun goods such as a mug and a T-shirt having an image recorded thereon, and a CD having an image recorded thereon.

The order web 30e is accessed from the web browser 14a to select a product (print, fun goods, or a CD) and an image for which a product is to be ordered, and when an order for printing is placed, the print size and the quantity are input/instructed. The destination (receipt shop) where the product is to be received or the delivery destination, and the payment method are also input/instructed as required in the order web.

In the network system 10 of the shown example, the member places an order (selects an image for which a product is to be ordered) using the order web in an album mode or a menu mode.

The album mode is a mode in which an image to be ordered is selected from the images stored in the album. The menu mode is a mode in which images are uploaded through the web browser 14a and an image to be ordered is selected from the uploaded images. Irrespective of whether or not an order is placed, the images uploaded by the member are stored in the system album. In other words, the order web also provides an image upload function.

A mode similar to the menu mode is only applicable when a nonmember places an order using the order web, and the uploaded images are stored in the photo storage as described above.

It is also possible in the network system 10 to select an image from the images stored in the share box through the web browser 14a and place an order for a product. As described above, however, provision of a URL is essential to allow an image in the share box to be viewed (displayed). So, provision of a URL is also essential when an order is placed for an image.

In the network system 10 of the shown example, the order web 30e provides a web screen such as a print order screen for each retailer system 18, and the web screen can be changed for each retailer system 18 (retailer) by the functions of modification 38 and customization 39 in the back end 12c to be described below.

The campaign provision 30f has a function of providing various campaigns carried out by the retailer (or lab) to customers. The campaign is a generic term of specific services for orders, such as discounting the order fees or giving out various fun goods.

For example, the campaign provision 30f notifies the customers of the campaign information by announcing the information on a website made public by the retailer system 18 through the communication network or by displaying the campaign information upon access from the order software 14c. It is also possible to select one or more types of order entry channel 14 (one or more of the web browser 14a, the OPW 14b, and the order software 14c) for which a campaign is to be conducted.

The campaign provision 30f can be applied/set for each retailer (retailer system 18) or lab (lab system 16) by a campaign manager of the back end 12c to be described below.

The OPW order 32 provides a function of receiving orders from the OPW 14b.

The OPW 14b accesses the OPW order 32. Upon access from the OPW 14b, the OPW order 32 displays a list of available retailers (OPW order service sites provided by the retailer systems 18) and the prices in the retailers. Selection of a retailer, selection of an image for which a print is to be ordered and its uploading, and input/instruction of the print size, the number of prints, the destination (receipt shop) where a product is to be received or delivery destination, the payment method and other necessary items are made in the OPW order 32 through the OPW 14b.

In the shown example, the order from the OPW 14b is treated as a nonmember's order. Accordingly, an image uploaded by the OPW 14b is stored in the photo storage. However, the present invention is not limited to the above-mentioned example, but the OPW 14b may deal with a member's order.

When the network system 10 includes no retailer system 18, the OPW order may display a list of available labs (lab systems 16) so that the customer is encouraged to select a lab in place of a retailer.

The application download 34 provides a function of a website for downloading an installer of the OPW or the order software.

The customer uses his/her PC or the like for the OPW 14b or the order software 14c to access the application download 34, from which the installer of the OPW (installer for the retailers (labs) participating in the network system 1.0) or the installer of the order software is downloaded. The OPW or the order software is installed with the installer, and the installed OPW or order software thus functions as the order entry channel 14 (OPW 14b or order software 14c) of the network system 10 of the present invention.

The installer of the OPW (online printing software) and the installer of the order software, are prepared in different languages. Accordingly, any user in a multilingual region can use the online printing software and the order software irrespective of the language used.

The order software order receiving server 36 provides a function of receiving an order through the order software 14c. The order software includes an order module which is an interface for communicating with the network center 12 to provide the customer with the ordering function in the order software 14c. The order software order receiving server 36 provides through the order module a series of functions regarding the ordering function in the order software 14c.

The order software 14c uses the order software order receiving server 36 to select a retailer and an image for which a print is to be ordered, and input/instruct the print size, the number of prints, the destination where a product is to be received or delivery destination, the payment method, and other necessary items. When an order for a product is placed using the order software order receiving server 36, image selection is carried out, for example, in the same manner as the menu mode described above.

When the network system 10 includes no retailer system 18, the order software order receiving server 36 may display a list of available labs (lab systems 16) so that the customer is encouraged to select a lab in place of a retailer.

In the network system 10 of the shown example, only members can order products with the order software 14c. Thus, when a member accesses the network center 12 through the order software 14c, the member is authenticated based on his/her member ID and password, and an uploaded image is stored in his/her system album. However, the present invention is not limited to the above-mentioned example but the network system may be configured so that nonmembers can also place orders with the order software 14c.

As shown in FIG. 1, the back end 12c of the network center 12 is a site where the network system 10 and the network center 12 are managed as described above. The back end 12c includes functional blocks such as the modification block 38, the customization block 39, a design checking server block 26, a member manager block 40a, the image manager block 40b, a basic information manager block 40c, a commercial product manager block 40d, a site manager block 40e, an order manager block 40f, a workflow block 40g, a campaign manager block 40h, a charge manager block 40i, a lab order receiving server 42, and a settlement block 44. In the following description, the term "block" in the functional blocks will be omitted and the functional blocks will be referred to simply as modification 38, customization 39 and so on.

The modification 38 and customization 39 each provide a function of changing the web screen provided by the order web as exemplified by a screen for ordering products. As described above, the web screen provided by the order web is set for each retailer system 18 and can be changed for each retailer system 18 by the modification 38 and customization 39. Accordingly, each retailer can exhibit the originality.

The design checking server 26 enables the retailer system 18 to check the web screen changed by the modification 38 and customization 39. In other words, the design checking server 26 provides the retailer system 18a with a checking environment for checking the web screen changed by the modification 38 and customization 39 before it is introduced in the actual environment of the order web.

The network system 10 of the present invention is not limited to the above-mentioned example but may be configured such that not only the order web but also the other web screens provided by the front end 12b, i.e., the web screens providing user interfaces for customers can be set/changed for each retailer system 18.

The modification 38 has a function for greatly changing the web screen as in layout changing. Changing (designing) of the web screen by the modification 38 is carried out in response to the retailer's request in a screen development system 22 connected to the network center 12 through the communication network (or a dedicated line).

When modification is carried out, the screen development system 22 creates a web screen adequate to the request, and uploads the created web screen to the design checking server 26 which is a checking environment. Upon uploading of the changed web screen to the design checking server 26, the retailer system 18 accesses the design checking server 26 to check the screen, and when the screen is judged to be proper, applies to the network center 12 (workflow to be described below) for the introduction of the web screen in the actual environment of the order web together with the date on which the web screen is to be introduced. The changed web screen is accordingly introduced in the actual environment on the introduction date.

On the other hand, the customization 39 is not used for greatly changing the screen as with the modification described above, but has a function for making simple changes on the web screen of the order web, as exemplified by changing a font or a color of the web screen of the order web. As for the customization function, the network system 10 of the shown example sets a plurality of options for each of items including the design template of the web screen, the logo image, the background color of the screen, the color in characters of a font, the link color, the screen title font character type, the character color of each area defined on the screen, and the background color of each area defined on the screen. Any item may be selected from those described above to change the web screen of the order web.

Options in the respective items, and their colors and designs are created as appropriate in the screen development system 22 and set in the customization 39. In other words, the options in the customization 39 in changing the web screen are changed as appropriate in the screen development system 22 to enable the order web screen (web screen of the order web) to have a feeling of a specific season or a specific local color.

When customization is carried out, the retailer system 18 (system which can access the back end) accesses the customization 39 to select/change the design template, the logo image, or the character color, thereby changing the settings on the web screen.

The web screen reflecting the changes in setting is sent to the design checking server 26 so that the web screen can be displayed in the retailer system 18. When this screen is judged to be proper, as in the aforementioned case, the retailer system 18 applies to the network center 12 for the introduction of the web screen in the actual environment of the order web together with the date on which the web screen is to be introduced. The changed web screen is introduced in the actual environment according to the application.

In the network system 10 of the shown example, the order web screen may be changed in response to an access or request not from the retailer system 18 but from the lab system 16.

When the network system 10 includes no retailer system 18, an order web screen may be created for each lab system 16, and the functions of customization and modification may be used to enable the settings on the web screen to be changed.

The member manager 40a provides a function of managing member information, such as that of center members (including management in registration of new members, and changing/adding/updating of various pieces of information), and that of retailer members.

Examples of the information of a center member include a member ID, a retailer ID, an authentication user ID, a password, an E-mail address, a display language, an ID (selected shop ID) of a registered shop (where a product is received), a name, an address, a telephone number, and a delivery destination. To the member information of the center member is also added a retailer ID indicating a retailer to which the member belongs, for example, a retailer (retailer system 18) which has mediated for member registration.

As described above, the member information of the retailer members is managed in the retailer system. However, the member information is also managed in the member manager 40a of the network center 12 by relating to one another the member ID (member ID assigned by the network center 12), the retailer ID of a retailer where the member registration was carried out, and the member ID (retailer unique ID) assigned by the retailer for each member.

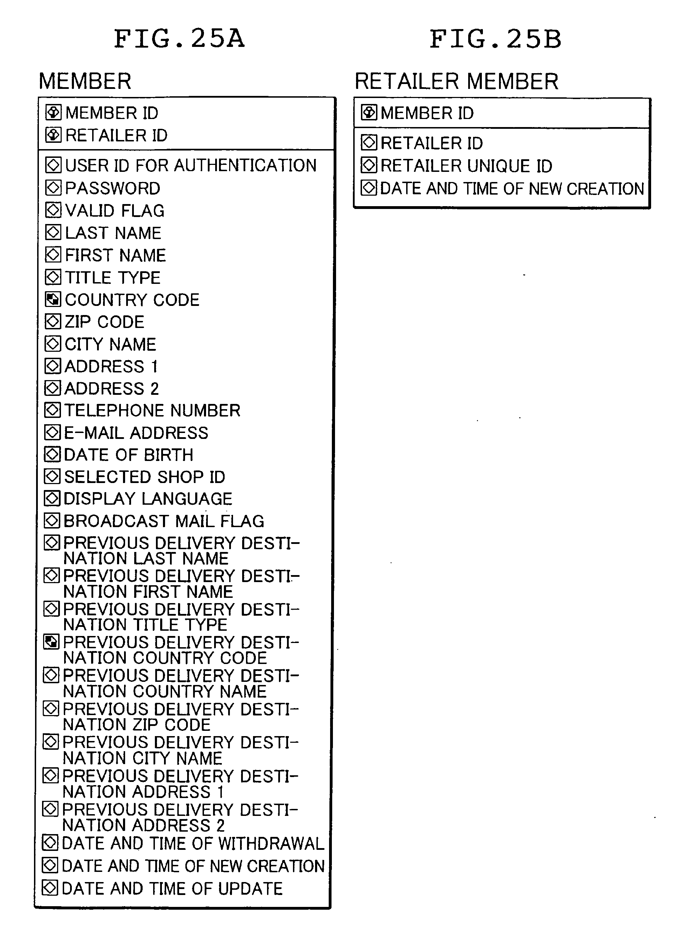

FIG. 25A shows an example of a management table for managing the center member. In this management table, the member (member information) is managed based on various pieces of information starting from the member ID assigned by the network center and the retailer ID of a retailer to which the center member belongs.

The member manager 40a manages the retailer member based on the member ID, the retailer ID, the retailer unique ID, and the date on which the member information table was created. In other words, as described above, the network center 12 (member manager) has no detailed information on the retailer member, and implements the member management based on the retailer unique ID assigned by the retailer system 18 and the retailer ID of the retailer system 18 to which the member belongs.

FIG. 25B shows an example of a management table for managing the retailer member. In this management table, the retailer member is managed based on pieces of information starting from the member ID assigned by the network center.

In addition to the member management function, the member manager 40a provides functions of center member retrieval, center member information reference, center member information changing, center member withdrawal, and center member information downloading.

The center member retrieval provides a function of allowing the retailer system 18 to retrieve a center member who belongs to the retailer system 18 and satisfies an arbitrary condition. The center member information reference provides a function of allowing the retailer system 18 to refer to the information of the member retrieved by the retrieval function. The center member information changing provides a function of allowing the retailer system 18 to change the information of the center member referred to by the reference function.

The center member withdrawal provides a function of allowing the retailer system 18 to place a center member belonging thereto in a withdrawable state when the center member requested withdrawal off-line or when an inconvenience occurs. The center member information downloading provides a function of allowing the retailer system 18 to download the member information of a center member belonging thereto.

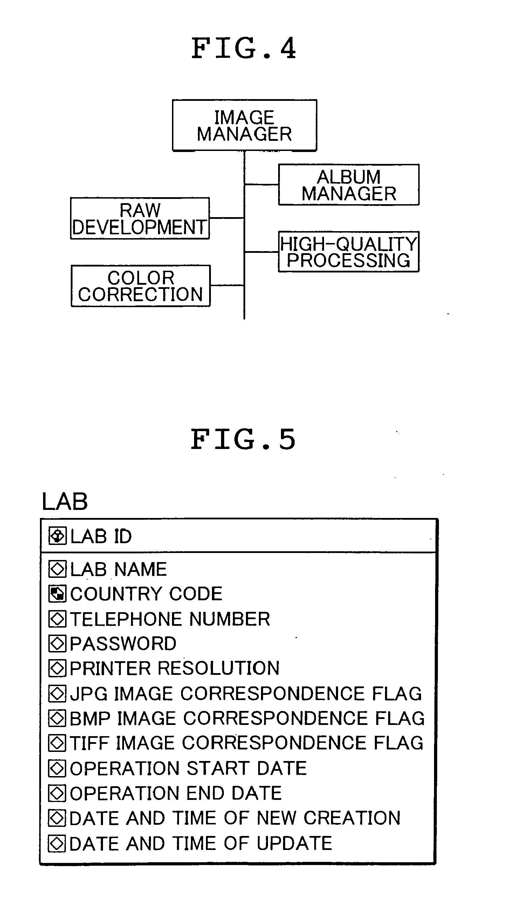

As conceptually shown in FIG. 4, the image manager 40b provides functions of album manager, high-quality processing, RAW development, and color correction.

The image management function in the present invention is composed of the function of the image manager 40b and the album function of the front end 12b.

The album manager provides a function of managing the storage capacity of the album, the share box, or the photo storage, and the storage period and the display period of an image.

In response to the request from the retailer system 18 or the lab system 16, the album manager sets the album capacity, the image storage period, and the image display period per member for each retailer system 18 and each lab system 16. In other words, the retailer system 18 or the lab system 16 (retailer or lab) can set the album capacity, the image display period, and the image storage period. The display period and the storage period may be the same or different.

The album manager stops displaying an image whose display period has expired, deletes an image whose storage period has expired, and when the album capacity was exceeded, notifies the member of this state through warning or the like. The member may be notified of expiration of the display period by E-mail or other means.

In the network system 10, the display period and/or storage period may be changed depending on whether or not a product was ordered for the image (e.g., the period may be extended depending on whether or not an order was placed). The display period and/or storage period may also be different between members and nonmembers.

The album manager periodically deletes a My Album, a photo storage, and a share box which do not retain any images. In addition, the album manager forcibly stops offering to public a share box which retain images offending public order and morals.

The RAW development, high-quality processing, and color correction provide functions of executing on image data RAW development, high-quality processing, and color correction, respectively. These are image processing (optional processing) executed in response to the customer's request. The customer requests such processing, for example, at the time of image uploading or product ordering.

The high-quality processing and the color correction need to have image processing functions satisfying customer's requests. Particularly in a small-scale photofinisher, the system may often not include such image processing functions. Further, there are image data of various formats, and image processing corresponding to image formats is often necessary, for example, as in RAW data in order to output a proper image. However, the system in a small-scale photofinisher may often do not have such processing functions satisfying various image data formats.

In the network system 10 of the shown example, the functions of the image manager provided in the back end of the network center 12 support such processing functions corresponding to the image formats and various optional image processing functions, which enables even a small-scale photofinisher having no sophisticated system to provide products desired by customers in response to various requests from the customers.

The RAW development is a function of executing predetermined image processing (RAW development) on RAW data by using development software. The RAW data format is used in a digital still camera designed for professionals. Some of digital still camera models commercially available for amateurs can save results obtained by shooting in RAW data.

Image data saved as the RAW data can be converted to TIFF using development software and displayed in a general viewer. During such development, white balance, grayscale adjustment, and sharpness adjustment may be carried out.

Digital still camera companies provide dedicated software for the development software of the RAW data. In the RAW data development, it is necessary to specify the camera model used for shooting from EXIF data and develop the data using the dedicated development software.

Progress in standardization of RAW data among individual companies will exclude the necessity of using various types of development software. In such a case, the type of image data is identified, and the image data regarded as RAW data is developed using the development software adapted to standardized data. However, the development software adapted to standardized data is also provided by addition of a function through version upgrade.

It is costly to acquire every development software so that the software is always compatible with the latest version. Particularly in a small-scale photofinisher, there is a case in which RAW data printing service the customer desires cannot be always made due to a heavy burden of cost. The small-scale photofinisher thus cannot receive RAW data printing orders, which may result in some loss of business opportunities.

The network system 10 provides the image manager with the RAW development function so that small-scale photofinishers that cannot deal with the RAW data share the function. Thus, loss of business opportunities as described above can be prevented.

The high-quality processing is processing for correcting image defects which is not normally executed, such as red-eye correction, correction of an image defective part caused by scratches or dust on lens, correction of an aberration caused by a photographing lens, or correction of marginal luminosity deteriorated by the photographing lens.

The color correction is processing for correcting the color/density of an image to obtain a high-quality image, or correcting the color of an image according to the customer's preference. In addition to the processing described above, sharpness correction, grayscale correction, and skin color correction may also be carried out.

The image processing described above may be carried out by a well-known method.

The basic information manager 40c provides a function of managing various pieces of basic information of the lab system 16, the retailer system 18, and the receipt shop.

The basic information manager 40c registers/manages the retailer system 18 (retailer having the retailer system 18) associated with each lab system 16 (lab having the lab system 16) in relation to a receipt shop 28 associated with each retailer system 18, manages the basic information of the lab systems 16, retailer systems 18, and receipt shops 28, and changes/updates the basic information as necessary or upon request.

Examples of the information of the lab system 16 include an ID of a lab (lab ID), a name, a telephone number, a location country, a country where the service is provided, and a password necessary for the lab system 16 to access the network center 12 (lab authentication code).

FIG. 5 shows an example of a table (lab management table) for managing the lab system 16 based on such information. The lab system 16 is managed based on various pieces of information starting from a lab ID as included in the lab management table. In the lab management table, the printer resolution indicates a resolution of an image output device in the lab. Although the value varies depending on the printing mode, a device capable of outputting color prints with printing paper generally has a numerical value of 300 to 400 dpi and an inkjet printer a numerical value of 1,200 dpi. The JPG image correspondence flag indicates that the lab has received an image of the JPEG image format and is ready for outputting as a print. The BMP image correspondence flag and the TIFF image correspondence flag indicate the same information with respect to the bitmap image format and the TIFF image format, respectively.

When the lab deals with the RAW image data, the RAW image correspondence flag is provided. Accordingly, in the case where a member who wishes to create a print from the RAW image data appears in the future, a function which enables retrieval of the flag is added to the network system 10 to be used by all members, whereby print creation services based on the RAW image data can be provided.

Examples of the information of the retailer system 18 include an ID of a retailer (retailer ID), a name, an abbreviated name, a location country, a location, a default display language, a country where the service is deployed, supported language, and a lab ID of an associated lab (associated lab ID).

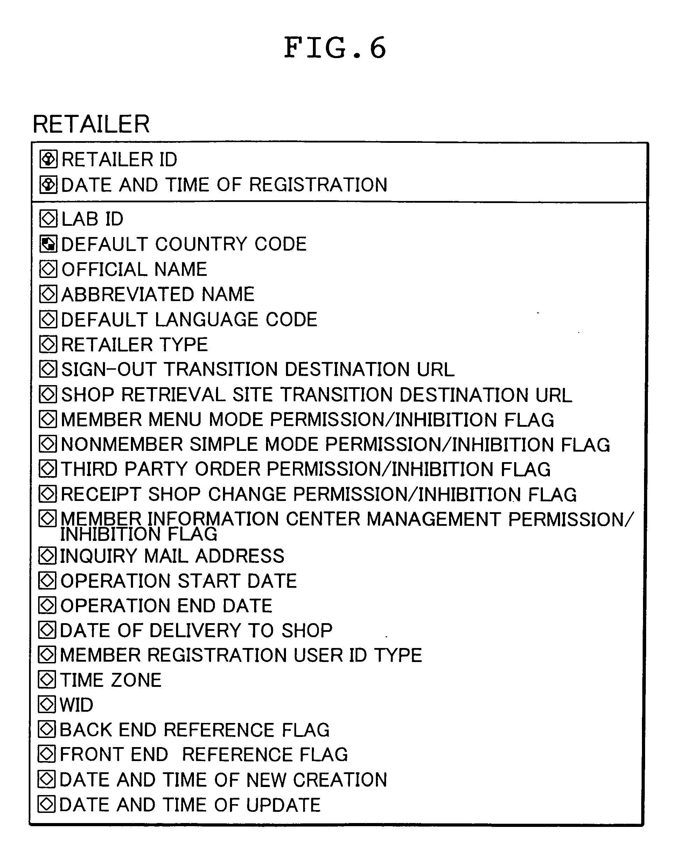

FIG. 6 shows an example of a table (retailer management table) for managing the retailer system 18 based on such information. The retailer system 18 is managed based on various pieces of information starting from the retailer ID as included in the retailer management table. In the retailer management table, the default language code is information of a language used to display on the order screen for a member who accesses (sings in) the network center 12. The display language on the order screen is controlled based on such information. When the member information includes no information on the display language, the default language code of a retailer to which the member belongs is used to control the display language. The member information center management permission/inhibition flag indicates whether or not the retailer permits management of minimum member information on the network center 12 side when the member information is managed in the retailer system 18. When the flag indicates inhibition, the member information used by the network center 12 according to the order disappears at a point of time when the customer's ordering operation is finished. The time zone identifies the time zone (standard time zone) of a region in which the network center 12 is located and a region in which the retailer deploys the service, and is used to ensure consistency of the date and time of order and date and time of image upload. When the web screen is changed by the functions of customization and modification, information indicating that services will be temporarily stopped when the number of accesses is small (e.g., 2 a.m.) is transmitted. In this case, the time is determined based on the time of the region in which the retailer deploys the service, but the information of the time zone is also used in this case. The time lag that may be caused among countries depending on whether or not the summer time (daylight saving time) is adopted is also solved by the time zone information.

Examples of the information of the receipt shop 28 include an ID of a shop, a name, a telephone number, a location country, a zip code, an ID of an associated retailer (associated retailer ID), an ID of a lab to which the retailer belongs (associated lab ID), a unique management code the lab assigns to the receipt shop (shop code for lab management), and a unique management code the retailer assigns to the receipt shop (shop code for retailer management).

The commercial product manager 40d provides a function of managing products handled by the lab which has the lab system 16, the retailer which has the retailer system 18, and the receipt shop.

In the illustrated network system 10, for example, a (photographic) print on which an image received from a member or a nonmember is reproduced, a CD having the image stored thereon, and fun goods (e.g., a mug and a T-shirt) having the image reproduced thereon are provided as products to a customer. The commercial product manager 40d provides a function of setting products (commercial products) to be handled by the retailer system 18 or the lab system 16, a function of setting prices of the products, and a function of displaying the products on the order web.

The commercial product manager 40d also provides a function of generating order setting information (image, commercial product type, print size, and quantity) which is order information, according to an order for a product placed by the customer using the order entry channel 14 (more specifically according to the input/instruction of the order). As described above, the image is managed based on image information. The image information includes an image code for specifying an image, a member ID, a retailer ID, a file format type, a stored file size, a stored file name, an uploading date, and a latest ordering date.

Products to be handled and prices of the products can be applied/set for each retailer system 18 or each lab system 16 by the function of the commercial product manager 40d. In other words, the retailer and the lab can set products to be handled and prices of the products.

Price information of each product (commercial product) is set for each receipt shop, each retailer, or each lab, and is managed based on the following information.

The receipt shop commercial product price (hereinafter referred to as "shop commercial product price") is a price of a product decided by a receipt shop and managed by the retailer system 18. In the network system 10, the shop price is valid only when it is approved by the retailer system 18. The shop commercial product price is managed based on the commercial product ID, the order entry channel code, the shop ID, and the prices of sections 1 to n in relation to one another.

The retailer commercial product price is a price of a product set by the retailer system 18 and managed by the retailer system 18. The retailer commercial product price is managed based on the commercial product ID, the order entry channel code, the retailer ID, and the prices of sections 1 to n in relation to one another.

The lab commercial product price is a price of a product set by the lab system 16 and managed by the lab system 16. The lab commercial product price is managed based on the commercial product ID, the order entry channel code, and the prices of sections 1 to n in relation to one another.

The "sections" as used herein are differentiated from one another according to the quantity of order. The larger the "n" is, the larger the quantity of order is, and usually the lower the price is. The order entry channel code indicates which of the web browser 14a, the OPW 14b, and the order software 14c was used in the order entry channel 14 for placing an order.

The site manager 40e provides a function of managing various pieces of information used for operating the network system 10, such as announcement information to the customer, statistical information, and application downloading information.

Specifically, various management functions are set for administrators of the systems in the network system 10 such that the network system 10 is operated/managed in relation to each of the retailer system 18, the lab system 16, and the network center 12 (management system 24 for operation and management), and the site manager provides these management functions.

Examples of the management functions for a retailer administrator include managing a retailer operator who performs registration/changing/deletion of profile information (mail address or password) of a retailer; setting/updating detailed information on the retailer, such as information on a corresponding product and its price, information on the method of receiving the product and the payment method, campaign information, and mail template creation; updating retailer basic information such as a name, a country, a language, and a corresponding order entry channel 14; registering/changing/updating "announcement information" which is an announcement or a report from the retailer to the customer; changing the product price at the receipt shop; collecting statistical information such as the number of members; setting/changing the design of the web screen; and changing the member information.

Examples of the management functions for a lab administrator include managing a retailer operator who performs registration/changing/deletion of profile information of a lab; setting/updating detailed information on the lab, such as information on the lab order image capacity or the storage period, information on a corresponding product and its price, information on the method of receiving the product and the payment method, and information on a corresponding order entry channel 14; performing retailer registration, such as registration of a retailer business operator and retailer basic information; performing shop registration/updating, such as registration/updating of shop basic information (e.g., a name, a lab management shop code, and a retailer management shop code); approving/rejecting an application for changing retailer information; collecting statistical information such as the number of members; and registering/changing retailer extended information, such as changing the order image capacity or the storage period in each retailer, and changing the design layout of the web screen.

In the network system 10, a center administrator (operator) serves as a window for a lab business operator.

Examples of the management functions for the center administrator include registering/changing/deleting information set in the center, including version control of the order software or the order module, and creation of a common mail template; managing the center operator who registers/changes/deletes profile information of the network center 12; registering lab basic information such as a name, a country, a resolution of an owned printer, and a corresponding image, and registering a lab business operator; registering/changing/deleting "center operation announcement" which is an announcement or a report to the lab or the retailer; canceling an application for changing retailer information having been approved by the lab, and approving/rejecting an application for changing lab information or canceling the introduction in the actual environment; collecting statistical information such as the number of members; and checking whether or not an image whose number of accesses is abnormally large is offensive to public order and morals, and deleting the image when necessary.

For example, the center administrator carries out the operation and management with the management system (management web) 24 for the operation and management of the network center which is connected to the network center 12 through the communication network.

The order manager 40f provides a function of managing an order, such as generation, retrieval, or displaying of order information.

As described above, when a customer places an order, order setting information is generated by the commercial product manager 40d. The order from a customer is established and the customer selects the method of receiving the product and the payment method. Upon completion of the order (order establishment), the order manager 40f executes necessary calculation such as calculation of fees using, for example, the order setting information to generate predetermined information thereby generating order information. When the payment method selected is credit card payment or debit card payment (settlement by cash card), the result of authorization (credit) by the settlement to be described later is also added to the order information.

The generated order information is sent to the lab order receiving server 42, where it is stored (retained). The order information stored in the lab order receiving server 42 can be retrieved or displayed in the lab system 16 and the retailer system 18.

The order manager 40f stores/manages the generated order information for a predetermined period, and deletes order information whose storage period has expired.

In the network system 10, the order information includes three pieces of information of "order", "order detail", and "order detail image" and these pieces of information are related to one another.

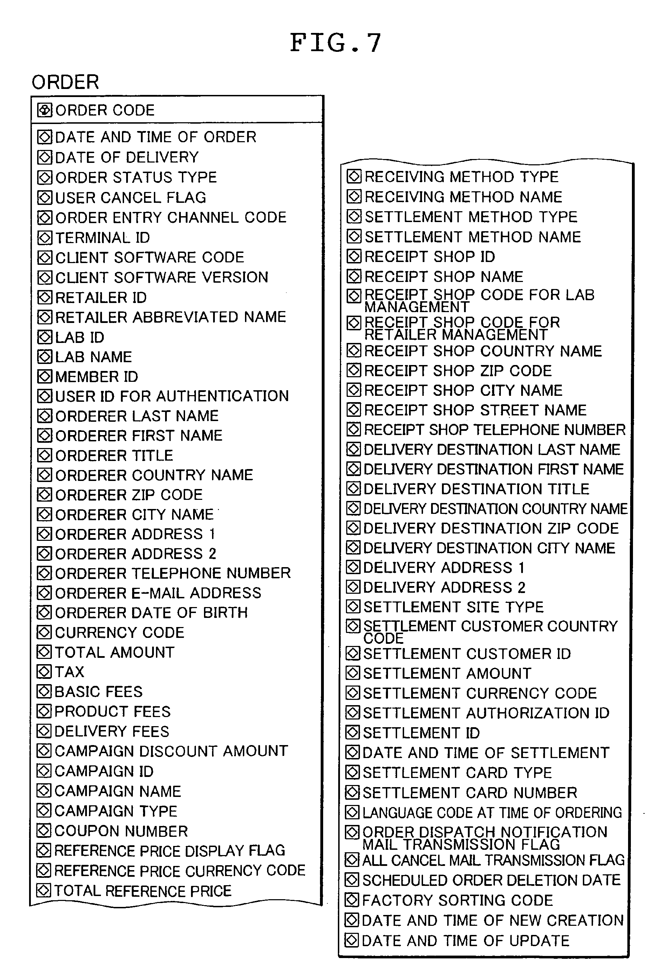

The "order" contains information regarding an order code for specifying the order (order information), a date and time of order, a terminal ID indicating an ID of the order entry channel 14 (including a print order terminal dedicated for print order operated by the customer), a retailer ID, a member ID, a lab ID, and fees (basic fees and delivery fees), information regarding the receiving method, information regarding a receipt shop ID, a delivery destination, and product delivery, and information regarding a payment method. FIG. 7 shows an example of a table (order table) for managing orders by using such information. The order is managed by various pieces of information starting from the order code in the order table.

The "order detail" contains information such as an order detail code for specifying an order detail, a product type, a commercial product ID, a product name, a total order price, and a price system type (price setting information set for each lab or retailer).

The "order detail image" contains information such as an image code or a quantity of order.

In the shown example, image information of an image for which a product has been ordered and order information are related to each other based on the image code of the "order detail image".

As described above, the image information includes information such as an image code for specifying an image, a member ID, a retailer ID, a file format type, a stored file size, a stored file name, an uploading date, and a latest order date.

The workflow 40g provides a workflow function for changing a setting of a price/product in operating and managing the network system 10.

When the retailer system 18 or the lab system 16 applies for changing of retailer or lab information (basic information and detailed information), changing of fees, changing of information on a receipt shop, registering or updating of a campaign to be implemented, or changing of the web screen, the workflow 40g judges whether the application is appropriate and decides approval or rejection. When approved, the changing applied for is confirmed, and changing contents are applied to the network system 10.

The application of the changing contents to the network system 10 includes "immediate reflection" and "application date designation".

For example, information of the lab or the retailer excluding fee setting which may affect a contract between the retailer and the lab is basically reflected in the network system 10 as soon as the application is confirmed (immediate reflection).

On the other hand, fee changing such as changing of a product price is reflected in the network system 10 on a designated application date after the administrator of the lab or the network center 12 approves it. Changing of the web screen of the order web and changing of various campaigns are basically reflected in the network system 10 on a date designated by the retailer system 18 (or the lab system 16) (application date reflection).

The campaign manager 40h provides a management function for registering, retrieving or canceling various campaigns, or issuing coupons.

In the network system 10 of the shown example, exemplary campaigns include a fee discount and a supplement gift. The fee discount includes a direct fee discount and issuance of a coupon which is a unique ID for providing a discount. The campaigns can be provided by selecting a target order entry channel 14. The retailer system 18 (or the lab system 16) can optionally set or register campaigns by using the function of the campaign manager to reflect them in the campaign provision of the front end.

By using the campaign manager 40h, the retailer system 18 (or the lab system 16) can retrieve/display campaigns, change a campaign before its execution or cancel a campaign being executed (campaign updating), delete campaign information, and issue a coupon.

The lab order receiving server 42 provides to the lab system 16 via a lab order receiving module 16a to be described below, a function of receiving an order in the lab system 16, including transmission of order information and an image.

As described above, the order information is sent to the lab order receiving server 42, and image data corresponding to the order information is also sent to the lab order receiving server 42 (order information for one order and its corresponding image data will be hereinafter collectively referred to as "order job"). The lab order receiving server 42 transfers order list information to the lab system 16 in response to a request from the lab system 16, and an order job for one order requested from the lab system 16 is transferred to the lab system 16.

The settlement 44 provides a function of obtaining card authorization (credit) from a settlement site 20 when credit card payment or debit card payment is selected for the payment method.

The settlement site 20 is a web site which is connected to the network center 12 through the communication network and which is used to execute well-known online settlement. In the network center 12, only authorization acquisition is carried out for the settlement site 20.

The charge manager 40i provides a function of statistically totaling images uploaded to the network center 12 (system album or share box) or ordered products within a predetermined period for each retailer system 18 or each lab system 16, and calculating charges to the retailer system 18 (retailer) or the lab system 16 (lab) for operating the network system 10.

The charge manager 40i will be described later in detail.

The lab system 16 includes a PC, a WS, or a server device, and is installed in the lab (photofinisher). A digital photoprinter or a production device such as a device for printing images on various fun goods is connected to or integrated with the lab system 16.

In the lab system 16, order receiving software which is an application for receiving a product order from the network center 12 is installed. This order receiving software includes the order receiving module 16a for providing an interface through which the lab system 16 obtains an order job from the network center 12 (lab order receiving server 42).

The lab system 16 uses the order receiving module 16a to obtain an order information list, requests transfer of an order job for the lab system 16 and obtains the order job. The lab (lab system 16) creates a product corresponding to the order job, and delivers the product to a delivery destination or a receipt shop according to the order information. The lab system 16 establishes/cancels credit card payment or decides cancellation of debit card payment according to authorization information added to the order information, and sends the result to the settlement site 20.

As described above, the member can use the web browser 14a to access the web screen that was made public on the communication network by the retailer system 18, and then access the network center 12 (front end 12b) from the web screen to upload an image to the system album. The member can access the network center 12 in the same manner as above to select an optional image from images stored in the album (album mode) or upload images to select an image therefrom (menu mode), thereby ordering a product. The image that the member has uploaded in the menu mode is stored in the system album.

The nonmember can also access the network center 12 in the same manner from the web browser 14a to order a product by a method conforming to the menu mode. An image uploaded by the nonmember is stored in the photo storage as described above.

The customer can select the retailer (retailer system 18) using the OPW 14b and upload an image by the OPW order 32 to order a product as in the case of the menu mode. As described above, in the network system 10, the order with the OPW 14b is treated as one made by a nonmember. Thus, the uploaded image is stored in the photo storage.

The customer can select as required the retailer (retailer system 18) using the order software 14c, and upload an image through the order software order receiving server 36 to order a product as in the case of the menu mode. As described above, in the network system 10, the order with the order software 14c is limited to members. Thus, the uploaded image is stored in the system album.

In the network center 12, order setting information is generated by the commercial product manager 40d in response to an order from the order entry channel 14. Upon establishment of the order, the order manager 40f generates order information and sends an order job (including the order information and its corresponding image data) to the lab order receiving server 42.

The lab system 16 uses the order receiving module 16a to view a list of order information in the lab order receiving server 42, requests transfer of an order job for the lab system 16, creates a product such as a print according to the order information of the transferred order job and delivers the created product.

Various pieces of information transferred at the time of sign-in of the retailer member are held in the network center 12 in the state in which the retailer member is signed in, but are deleted at the time when the retailer member is signed out. In other words, when the retailer member signs in again, the retailer system 18 is requested to provide the same information.

Thus, according to the network system 10, as in the case of conventional print transactions in Europe, the customer gets the feeling that ordering of a product such as a print and its reception are directly made between the customer and the retailer without being aware of the lab or the network center 12.

Since the communication network such as the Internet is used, products can be ordered from anywhere regardless of business hours, and digital album services or public album services to a third party can also be provided.

Furthermore, the functions that can be shared by the retailer and the lab are made common, and the interface function for the customer and the management functions of the network system 10 are integrated in the network center 12. Thus, collection and delivery operations, customer management, and settlement processing can be simplified, while achieving simplification of the system operation and reduction of operation costs. In many cases, troubles or version upgrades of the network system 10 can be intensively dealt with in the network center 12, which enables operational stabilization while dealing with troubles more quickly.

The charge manager 40i in the back end of the network center 12 provides a function of calculating charges to each retailer system 18 (retailer) or each lab system 16 (lab) for operating the network system 10 based on the amount of uploaded image within a predetermined period. The charge manager 40i includes a totaling function unit and a processing function unit.

The totaling function unit of the charge manager 40i monitors an image uploaded to the system album or the photo storage and order information sent to and stored in the lab order receiving server 42 in a flow of various pieces of information from the image uploading and the ordering of a product carried out by the customer to its delivery, and totals the images uploaded to the system album and the photo storage and order information sent to the lab order receiving server 42 within a predetermined period, for example, one month.

As described above, the image information includes information such as an upload date, a retailer ID, a member ID, and a stored file size. The member information also includes a retailer ID. The retailer information also includes a lab ID.

Accordingly, the charge manager 40i can total the number of images uploaded within a predetermined period, or the data amount of uploaded images for each member, each retailer system 18, and each lab system 16.

In addition to the aforementioned pieces of information, the image information includes information on the latest order date. Further, "order" of the order information includes a member ID, a lab ID, a retailer ID, and an order shop ID, "order detail" includes information on a commercial product ID and a total order price, and "order detail image" includes information on an image code and a quantity of the order.

Thus, the charge manager 40i can total the data amount of images for which products have been ordered within a predetermined period, the number of images and the number of ordered products for each receipt shop, each member, each retailer, and each lab. The charge manager 40i can also total the number of orders and the volume of ordered products (price and quantity) within a predetermined period for each receipt shop, each member, each retailer, and each lab.

An example of totaling operation in the charge manager 40i is shown in the table below.

For the sake of simplifying the description, the following example refers to the case where only members place orders or upload images. However, when nonmembers place orders or upload images, the orders or the images of nonmembers are also included in the totaling. According to the present invention, charging is not limited to the case where calculation is carried out for orders placed or images uploaded by both of members and nonmembers, but charges may be calculated only for orders placed or images uploaded by members.

In this example, for one lab (lab system 16) A belonging to the network system 10, the number of uploaded images and its data amount, the order quantity (the number of prints ordered), the number of orders, the data amount, and fees (printing fees) in one month (April) are totaled for each retailer (retailer system 18) belonging to the network system and for each retailer member who has uploaded an image or placed an order.

In order to clarify the description, it is assumed in this table that orders were only placed for printing. In this example, 89 mm × 127 mm prints cost 35 yen each and 254 × 305 mm prints cost 500 yen each.

Table 1

| April 1st to 30th (April) | | | Image uploading | | | Printing order | | | |
|---|---|---|---|---|---|---|---|---|---|
| | | | Type | Number of files | Data amount | Number of prints | Number of orders | Data amount | Printing fee |
| Lab A | Retailer A | Member A | JPEG | 100 | 100 MB | 20 | 2 | 20 MB | 700 yen |
| | | Member B | RAW | 10 | 80 MB | 3 | 1 | 24 MB | 1500 yen |
| | (Sub-total) | 2/40 | | 110 | 180 MB | 23 | 3 | 44 MB | 2200 yen |
| | Retailer B | Member C | RAW | 50 | 200 MB | 10 | 2 | 40 MB | 5000 yen |
| | | Member D | RAW | 10 | 200 MB | 5 | 1 | 100 MB | 2500 yen |
| | (Sub-total) | 2/10 | | 60 | 400 MB | 15 | 3 | 140 MB | 7500 yen |
| | (Total) | 4/50 | | 170 | 580 MB | 38 | 6 | 184 MB | 9700 yen |

In Table 1, two retailers, i.e., the retailer A to which 40 members belong and the retailer B to which 10 members belong, belong to the lab A. In April, the members A and B of the retailer A and the members C and D of the retailer B have uploaded images and ordered prints.

In April, the member A of the retailer A has uploaded 100 JPEG images of 1 MB in a total data amount of 100 MB. The member A has placed two orders for twenty 89 mm × 127 mm prints. The printing fee was 700 yen, and the data amount of images for which printing was ordered was 20 MB.

Similarly, the member B of the retailer A has uploaded 10 RAW data images of 8 MB in a total data amount of 80 MB. Further, the member B has placed an order for three 254 mm × 305 mm prints. The printing fee was 1500 yen, and the data amount of images for which printing was ordered was 24 MB.

Similarly, the member C of the retailer B has uploaded 50 RAW data images of 4 MB in a total data amount of 200 MB. Further, the member C has placed two orders for ten 254 mm × 305 mm prints. The printing fee was 5000 yen, and the data amount of images for which printing was ordered was 40 MB.

Similarly, the member D of the retailer B has uploaded 10 RAW data images of 20 MB in a total data amount of 200 MB. Further, the member D has placed an order for five 254 mm × 305 mm prints. The printing fee was 2500 yen, and the data amount of images for which printing was ordered was 100 MB.

Accordingly, in the retailer A, 2 of the 40 members have uploaded images and ordered printing in April, so the number of uploaded images was 110, the data amount was 180 MB, the number of ordered prints was 23, the number of orders was 3, the data amount was 44 MB, and the printing fee was 2200 yen. On the other hand, in the retailer B, 2 of the 10 members have uploaded images and ordered printing, so the number of uploaded images was 60, the data amount was 400 MB, the number of ordered prints was 15, the number of orders was 3, the data amount was 140 MB, and the printing fee was 7500 yen.

In the lab A, 4 of the 50 members have uploaded images and ordered printing, so the number of uploaded images was 170, the data amount was 580 MB, the number of ordered prints was 38, the number of orders was 6, the data amount was 184 MB, and the printing fee was 9700 yen.

The processing function unit of the charge manager 40i calculates operation costs for each retailer or each lab based on the totaling result, and calculates charges to each lab or each retailer.

Various methods may be used for calculating the operation costs. The following operation cost calculation methods 1 to 4 may be used, for example.

According to the operation cost calculation method 1, operation costs are calculated by multiplying the data amount of uploaded images by a predetermined rate (e.g., 1 yen per MB). When operation costs for each retailer are calculated by applying this method to Table 1, results are as follows:

```
180 MB × (1 yen/MB) = 180 yen/April
```

for the retailer A; and

$$400 \text{ MB} \times (1 \text{ yen/MB}) = 400 \text{ yen/April}$$

for the retailer B.

These operation costs may be considered to be equivalent to the usage charges of the DB/FS 12a of the network center 12.

Operation costs may also be calculated by multiplying the number of uploaded images (number of image files) by a predetermined rate.

According to the operation cost calculation method 2, operation costs are calculated by multiplying the number of members who have uploaded images by a predetermined rate (e.g., 100 yen per member). When operation costs for each retailer are calculated by applying this method to Table 1, results are as follows:

$$2 \text{ members} \times (100 \text{ yen/member}) = 200 \text{ yen/April}$$

for the retailer A; and

$$2 \text{ members} \times (100 \text{ yen/member}) = 200 \text{ yen/April}$$

for the retailer B.

These operation costs may be considered to be equivalent to the charges for the services provided to the members by the network center 12, including managing images in an album, displaying the images stored in the album in a slide show, and notifying about the display period expiration by mail.

According to the operation cost calculation method 3, operation costs are calculated by multiplying the number of printing orders by a predetermined rate (e.g., 100 yen per order). When operation costs for each retailer are calculated by applying this method to Table 1, results are as follows:

$$3 \text{ orders} \times (100 \text{ yen/order}) = 300 \text{ yen/April}$$

for the retailer A; and

$$3 \text{ orders} \times (100 \text{ yen/order}) = 300 \text{ yen/April}$$

for the retailer B.

According to the operation cost calculation method 4, operation costs are calculated by multiplying the number of ordered prints (or number of ordered products) by a predetermined rate (e.g., 5 yen per print). When operation costs for each retailer are calculated by applying this method to Table 1, results are as follows:

$$23 \text{ prints} \times (5 \text{ yen/print}) = 115 \text{ yen/April}$$

for the retailer A; and

$$15 \text{ prints} \times (5 \text{ yen/print}) = 75 \text{ yen/April}$$

for the retailer B.

The operation costs calculated by the operation cost calculation methods 3 and 4 may be considered to be equivalent to the usage charges of the network center 12 for reception of orders for prints (products) and their provision to customers.

Operation costs may also be calculated by multiplying the data amount of images for which an order was placed by a predetermined rate.

The charge manager calculates charges to a retailer or a lab for operating the network system 10, based on such operation costs.

There is no particular limitation on the charge calculation method, but various methods may be used. Charges to the retailer or the lab may be calculated by using the result obtained by an operation cost calculation method, or the result obtained by appropriately selected two or more operation cost calculation methods.

Examples of methods using the operation cost calculation methods (hereinafter referred to as calculation methods) 1 to 4 include the following.

That is, the calculation methods 1 and 2 mainly concern services provided by the retailer, while the calculation methods 3 and 4 mainly concern production in the lab. An exemplary method involves charging a total of operation costs of the calculation methods 1 and 2 to the retailer, and a total of operation costs of the calculation methods 3 and 4 to the lab.

When charges are calculated from the operation costs by this method, results are as follows:

```
    Charge to the retailer A is 180 yen + 200 yen = 380 yen/April;


    Charge to the retailer B is 400 yen + 200 yen = 600 yen/April;


    Charge to the lab A is 300 yen + 300 yen + 115 yen + 75 yen = 790 yen/April.
```

Alternatively, the retailer or the lab may be weighted, and charges to the retailer or the lab may be calculated using the result obtained by one or more operation cost calculation methods.

The combination of, for example, the calculation methods 1 and 3 is now referred to. Since the calculation method 1 mainly concerns services of the retailer as described above, weights are set to 0.8 for the retailer and 0.2 for the lab. Since the calculation method 3 mainly concerns production in the lab, weights are conversely set to 0.2 for the retailer and 0.8 for the lab.

When charges are calculated from the operation costs by this method, results are as follows:

```
    Charge to the retailer A is 180 yen × 0.8 + 300 yen × 0.2 =

204 yen/April;


    Charge to the retailer B is 400 yen × 0.8 + 300 yen × 0.2 =

380 yen/April;


    Charge to the lab A is 180 yen × 0.2 + 400 yen × 0.2 + 300

yen × 0.8 + 300 yen × 0.8 = 596 yen/April.
```

In the network center 12, for example, the charges to the lab or the retailer for operating the network system 10, which were thus calculated by the charge manager 40i are made to the retailer system 18 or the lab system 16 by using the communication network.

As described above, in the network system 10 of the present invention, the lab system 16 may be integrated with the retailer system 18 into one system. When the lab system 16 is not integrated with the retailer system 18, the lab (photofinisher) or the retailer may operate both of the lab system 16 and the retailer system 18. In the specification of the present invention, the form in which the retailer system 18 and the lab system 16 belong to one company is referred to as "combined lab".

The form of the combined lab is considered to be effective when a small lab having a so-called minilab participates in the network system 10. Normally, the lab (lab system 16) and the retailer (retailer system 18) take a form in which a large number of retailers belong to one lab. However, the combined lab is basically composed of one lab and one retailer.

In the case of the combined lab, data is totaled for each combined lab to calculate charges. Even when the retailer system 18 does not exist in the network system 10 as described above, charges to the lab system 16 may be calculated by the following method.

Table 2 shows an example of totaling operation. The totaling contents and printing fees are the same as those shown in Table 1.

Table 2

| April 1st to 30th (April) | | Image uploading | | | Printing order | | | |
|---|---|---|---|---|---|---|---|---|
| | | Type | Number of files | Data amount | Number of prints | Number of orders | Data amount | Printing fee |
| Combined lab A | Member A | JPEG | 100 | 100 MB | 20 | 2 | 20 MB | 700 yen |
| | Member B | RAW | 10 | 80 MB | 3 | 1 | 24 MB | 1500 yen |
| (Sub-total) | 2/40 | | 110 | 180 MB | 23 | 3 | 44 MB | 2200 yen |
| Combined lab B | Member C | RAW | 50 | 200 MB | 10 | 2 | 40 MB | 5000 yen |
| | Member D | RAW | 10 | 200 MB | 5 | 1 | 100 MB | 2500 yen |
| (Sub-total) | 2/10 | | 60 | 400 MB | 15 | 3 | 140 MB | 7500 yen |

According to this example, members belonging to two combined labs A and B uploaded images and placed orders in April in the network system 10. Thus, operation costs of the network system 10 are charged to the combined labs A and B.

In Table 2, the combined lab A includes 40 members. In April, the members A and B uploaded images and ordered printing. The combined lab B includes 10 members. In April, the members C and D uploaded images and ordered printing.

In April, the member A of the combined lab A has uploaded 100 JPEG images of 1 MB in a total data amount of 100 MB. The member A has placed two orders for twenty 89 mm × 127 mm prints. The printing fee was 700 yen, and the data amount of images for which printing was ordered was 20 MB.

The member B has uploaded 10 RAW data images of 8 MB in a total data amount of 80 MB. Further, the member B has placed an order for three 254 mm × 305 mm prints. The printing fee was 1500 yen, and the data amount of images for which printing was ordered was 24 MB.

The member C of the combined lab B has uploaded 50 RAW data images of 4 MB in a total data amount of 200 MB. Further, the member C has placed two orders for ten 254 mm × 305 mm prints. The printing fee was 5000 yen, and the data amount of images for which printing was ordered was 40 MB. The member D has uploaded 10 RAW data images of 20 MB in a total data amount of 200 MB. Further, the member D has ordered five 254 mm × 305 mm prints. The printing fee was 2500 yen, and the data amount of images for which printing was ordered was 100 MB.

In the combined lab A, 2 of the 40 members have uploaded images and ordered printing in April, so the number of uploaded images was 110, the data amount was 180 MB, the number of ordered prints was 23, the number of orders was 3, the data amount was 44 MB, and the printing fee was 2200 yen.

In the combined lab B, 2 of the 10 members have uploaded images and ordered printing, so the number of uploaded images was 60, the data amount was 400 MB, the number of ordered prints was 15, the number of orders was 3, the data amount was 140 MB, and the printing fee was 7500 yen.

The charge manager 40i calculates operation costs for each combined lab based on such totaling result, and calculates charges to each combined lab.

Various methods may be used for calculating the operation costs. For example, the following calculation methods 5 to 8 for operation costs may be used.

In the calculation method 5, operation costs are calculated by multiplying the data amount of uploaded images by a predetermined rate (e.g., 1 yen per MB). When operation costs for each retailer are calculated by applying this method to Table 2, results are as follows.

$$180 \text{ MB} \times (1 \text{ yen/MB}) = 180 \text{ yen/April for the combined lab A;}$$

and

$$400 \text{ MB} \times (1 \text{ yen/MB}) = 400 \text{ yen/April for the combined lab B.}$$

These operation costs may be considered to be equivalent to the usage of the DB/FS 12a of the network center 12.

Operation costs may also be calculated by multiplying the number of uploaded images (number of image files) by a predetermined rate.

In the calculation method 6, operation costs are calculated by multiplying the number of members who have uploaded images by a predetermined rate (e.g., 100 yen per member). When operation costs for each retailer are calculated by applying this method to Table 2, results are as follows:

$$2 \text{ members} \times (100 \text{ yen/member}) = 200 \text{ yen/April for the combined lab A; and}$$

$$2 \text{ members} \times (100 \text{ yen/member}) = 200 \text{ yen/April for the combined lab B.}$$

These operation costs may be considered to be equivalent to the charges for the services provided to the members by the network center 12, including managing images in an album, displaying the images stored in the album in a slide show, and notifying about the display period expiration by mail.

In the calculation method 7, operation costs are calculated by multiplying the number of printing orders by a predetermined rate (e.g., 100 yen per order). When operation costs for each lab are calculated by applying this method to Table 2, results are as follows:

$$3 \text{ orders} \times (100 \text{ yen/order}) = 300 \text{ yen/April for the combined lab A; and}$$

$$3 \text{ orders} \times (100 \text{ yen/order}) = 300 \text{ yen/April for the combined lab B.}$$

In the calculation method 8, operation costs are calculated by multiplying the number of ordered prints (or the number of ordered products) by a predetermined rate (e.g., 5 yen per print). When operation costs for each lab are calculated by applying this method to Table 2, results are as follows:

$$23 \text{ prints} \times (5 \text{ yen/print}) = 115 \text{ yen/April for the combined lab A; and}$$

$$15 \text{ prints} \times (5 \text{ yen/print}) = 75 \text{ yen/April for the combined}$$

lab B.

The operation costs calculated by the calculation methods 7 and 8 may be considered to be equivalent to the usage of the network center 12 for reception of orders for prints (products) and their provision to customers.

Operation costs may also be calculated by multiplying the data amount of images for which an order was placed by a predetermined rate.

The charge manager 40i calculates charges to each combined lab for operating the network system 10, based on such operation costs.

There is no particular limitation on the charge calculation method, but various methods may be used. Only one of the calculation methods may be used, or two or more methods may be used in combination. For example, charges may be calculated from the operation cost derived from one of the data amount of uploaded images and the number of members who have uploaded the images, and the operation cost derived from one of the number of printing orders and the number of ordered prints.

An exemplary method using the calculation methods 5 and 8 is as follows:

$$\text{From the calculation method 5, } 180 \text{ MB} \times (1 \text{ yen/MB}) = 180$$

yen/April for the combined lab A;

From the calculation method 8, 23 prints $\times$ (5 yen/print) = 115 yen/April for the combined lab A.

Accordingly, the total charges to the combined lab A in April are as follows:

$$180 \text{ yen} + 115 \text{ yen} = 295 \text{ yen}.$$

Another example using the calculation methods 6 and 7 is as follows:

$$\text{From the calculation method 6, } 2 \text{ members} \times (100 \text{ yen/member})$$

= 200 yen/April for the combined lab A;

From the calculation method 7, 3 orders $\times$ (100 yen/order) = 300 yen/April for the combined lab A.

Accordingly, the total charges to the combined lab A in April is as follows:

$$200 \text{ yen} + 300 \text{ yen} = 500 \text{ yen}.$$

That is, according to the calculation methods 5 and 8, charges are calculated from the data amount of images uploaded by a customer and the number of ordered prints. According to the calculation methods 6 and 7, charges are calculated from the number of members who have uploaded images and the number of printing orders.

In both cases, charges are made to the form of using the front end and the back end of the network center 12.

The combined lab may select a desired method from two types of combined calculation methods, namely the calculation method 5 combined with the calculation method 8, and the calculation method 6 combined with the calculation method 7. In other words, the method may be determined based on the conditions to be described below on the form in which a member uses the combined lab per month.

(1) The data amount of uploaded images is less than 100 MB; and
(2) the number of ordered prints is less than 20.
When the conditions (1) and (2) are satisfied, charges can be reduced by selecting the calculation method 5 and the calculation method 8.

The network system 10 deals with image data of various formats such as JPEG image files and RAW data. As described above, the image manager performs high-quality processing, RAW development, and color correction as optional processing in response to a customer's request.

The charge manager 40i may change the charge calculation rate (rate for calculating operation costs) with respect to a unit data amount (1 MB in the shown example) or the number of image data, and the calculation method according to such an image data format (format of image data) or implemented optional processing.

Table 3 shows an example of the charge rate in each format, and charging at the time of using various optional processing operations set in the network system 10.

Table 3

| Format | Rate (per MB) | Image data capacity (per image) | Option 1 (RAW development) | Option 2 (color correction) | Charges (per image) | Product |
|---|---|---|---|---|---|---|
| JPEG (1) | 1 yen | 0.5 MB | - | No | 0.5 yen | Print club sticker |
| JPEG (2) | 1 yen | 0.8 to 1.5 MB | - | No | 0.8 to 1.5 yen | 89×127 mm print |
| JPEG (3) | 1 yen | 0.8 to 1.5 MB | - | No | 0.8 to 1.5 yen | CD-R |
| JPEG (4) | 1 yen | 0.5 MB | - | Yes | 1 yen | Print club sticker |
| JPEG (5) | 1 yen | 0.8 to 1.5 MB | - | Yes | 1.3 to 2 yen | 89×127 mm print |
| JPEG (6) | 1 yen | 0.8 to 1.5 MB | - | Yes | 1.3 to 2 yen | CD-R |
| RAW (1) | 0.1 yen | 15 MB | No | No | 1.5 yen | 127×178 mm print |
| RAW (2) | 0.1 yen | 15 MB | Yes | No | 2 yen | 127×178 mm print |
| RAW (3) | 0.07 yen | 30 MB | Yes | No | 2.6 yen | 203×254 mm print |
| RAW (4) | 0.07 yen | 30 MB | Yes | Yes | 3.1 yen | 203×254 mm print |
| | | | 0.5 yen/image | 0.5 yen/image | | |

In Table 3, JPEG (1) means that a relatively small-size image of 0.5 MB image data is used to request creation of a sticker print (print club sticker) via the network system 10. As the charge rate is 1 yen/MB in this case, charges are 0.5 yen/image for the image data of 0.5 MB.

Also in JPEG (2) and JPEG (3), charges are proportional to image data amounts. Provision of a CD-R as a product is a service in which images are recorded on the CD-R as also implemented in existing network printing services.

JPEG (4) indicates charging when color correction which is a function of the image manager of the network system 10 is used for the JPEG (1). For the color correction, the charge rate is 0.5 yen per image (a piece of image data). Accordingly, the charge amount in this case is 1 yen/image which is the total of charges proportional to the image data amount and charges for implemented color correction.

Also in JPEG (5) and JPEG (6), the charge amount is the total of charges proportional to the image data amount and charges for implemented color correction.

RAW (1) to RAW (4) are examples of charges for RAW data.

The RAW (1) is charges proportional to the image data amount. In the RAW (1), the image data amount per image is 15 MB. This corresponds to a data amount when the image is shot with a CCD of 6 million pixels. The RAW data is 12-bit data, and JPEG provides 8 bit data. As compared with image data per image, the RAW data is much greater, specifically, about 10 times larger. Accordingly, the charge rate is reduced by one order to 0.1 yen/MB in the case of JPEG. As a result, charges per image are about 1.5 yen.

The RAW (2) is a case of using RAW development which is a function of the image manager of the back end of the network center 12. Costs for the RAW development are 0.5 yen per image. Charges of 1.5 yen proportional to the image data amount are added to the above-mentioned charges, so charges per image are 2 yen.

In the case of the RAW (3), the data amount per image is 30 MB. This corresponds to a data amount when the image is shot with a CCD of 12 million pixels. When the image is further shot with a CCD of 20 million pixels, the data amount per image is 41 MB. Such a large amount of image data is shot with a digital still camera for business use. In this case, it is desired to further reduce the charge rate proportional to the image data amount. In this example, a rate of 0.07 yen/MB is used for RAW data of 30 MB. Thus, in the RAW (3), charges proportional to the image data amount are 2.1 yen/image. The RAW development requires processing fees of 0.5 yen/image, so the total charge amount is 2.6 yen/image.

In the case of the RAW (4), RAW data of 30MB image data amount is subjected to RAW development and color correction. As described above, the rate of 30 MB RAW data is 0.07 yen/MB, and the RAW development and the color correction cost 0.5 yen per image. Accordingly, charges proportional to the image data amount are 2.1 yen/image, processing fee of 1 yen in total, i.e., 0.5 yen/image each for the RAW development and the color correction, is added, and the total charge amount is 3.1 yen/image.

According to the invention, the amount of distributed images and orders can be managed in a unified manner in the network center 12. Thus, equal and proper charging can be made by calculating charges to each lab or each retailer to operate the network system 10.

Furthermore, as described above, in the network system 10 of the shown example, the back end (image manager) of the network center 12 includes the functions of RAW development and color correction to deal with various image formatting operations and various sophisticated image processing operations in the network center 12. Thus, even a small-scale photofinisher that does not have any sophisticated system can provide products desired by customers in response to a variety of requests from the customers. By changing charging conditions according to the image formatting and optional image processing operations as in the aforementioned example, fair charges can be made depending on the load on the network center 12 while charges for normal processing are maintained low. Thus, more meticulous services can be provided, and equal and proper charging can be carried out.

According to the aforementioned example, charges are made for both of the options 1 and 2. However, the invention is not limited thereto. An option for which charges are made may be selected. Alternatively, additional charges may be made only for the type of image formatting, or additional charges may be made only for optional image processing.

Irrespective of whether the lab system 16 and the retailer system 18 are separately operated or is a combined lab belonging to a company, the following calculation method 9 may be used to vary the rate for calculating operation costs.

The calculation method 9 is a calculation method in which the rate for calculating operation costs is varied depending on the number of printing orders. For example, in the case where the number of printing orders is up to 20, the rate is set to 100 yen/printing order. In the case where the number of printing orders is from 21 to 50, the rate is set to 90 yen/printing order. In the case where the number of printing orders is 51 or more, the rate is set to 80 yen/printing order. An increase in the number of times a lab is used is promoted by making appeals to the lab with the advantage that the larger the number of printing orders is, the lower the fee per order is. If the number of times the lab is used is increased accordingly, the total charges for the operation costs can be increased as a consequence.

A volume discount may be given according to the image data amount, number of members or number of ordered prints.

The charge manager 40i in the back end 12c of the network center 12 may monitor images uploaded to the system album and the photo storage and order information sent to the lab order receiving server 42 and total the images uploaded within a predetermined period and the order information while monitoring and totaling the numbers of registered members so that the operation costs are calculated for each retailer or for each lab based on the results obtained by the totaling operations.

In the case where the charge manager 40i totals the number of members, it is also preferable to reduce, in any of the various operation cost calculation methods, the rate with respect to the image data amount, number of members, number of printing orders or number of ordered prints for a retailer or lab whose number of members exceeds a prescribed value. The larger the number of members in the retailer or the lab is, the lower the charges to the retailer or the lab are. Thus, the burdens on the retailer and the lab can be reduced while enhancing the willingness of the retailer and lab to acquire members, thus achieving activation of the whole system.

In the case where the charge manager 40i totals the number of members, it is also possible to calculate operation costs, for example, by multiplying the number of registered center members by a predetermined rate (e.g., 1 yen per member) and charging to the retailer or the lab to which the center members belong. The operation costs may be considered to be equivalent to the charges for the services provided to the members by the member manager 40a of the network center 12 which manages the member information and be equivalent to the usage charges of the DB/FS 12a. The member manager 40a also manages the information on retailer members by relating to one another the member IDs assigned by the network center 12, the retailer IDs, and the member IDs assigned by the retailer. Therefore, charges may be made to the retailer or the lab to which the members belong, for operation costs calculated by multiplying the number of registered retailer members by a predetermined rate (e.g., 0.5 yen per member). Alternatively, operation costs may be calculated for all the members regardless of the distinction of center member and retailer member by multiplying the number of members by a predetermined rate.

Operation costs may also be calculated only for members who placed orders by multiplying the number of the members having placed orders by a predetermined rate.

All orders are placed through the retailer systems 18. Therefore, even in the case where customers having placed orders are not registered members, the charge manager 40i can total the number of nonmembers for each retailer by totaling order information based on information on the retailer system 18 through which orders were placed as included in the order information. The charge manager 40i may calculate operation costs by multiplying such nonmember totaling result by a predetermined rate and charge for the operation costs to the retailer and the lab.

Next, another embodiment of the present invention will be described.

In this embodiment, the charge manager 40i of the network center 12 uses its totaling function to monitor the number and data amount of images uploaded to the system album and the photo storage, and the number and data amount of order information sent to the lab order receiving server 42, carries out a totaling operation in a totaling unit, and provides the result obtained by the totaling operation to the retailer or the lab. The charge manager 40i uses its processing function to multiply the number or amount of data obtained by the totaling operation by a predetermined rate and charges for the costs to the retailer or the lab to which the totaling result was provided.

A country, a region, a retailer, a lab, a shop, an order entry channel, and a creator (each version of the order entry channel) may be set as the totaling unit. Totaling items that may be set include number and data amount of images uploaded to the network center 12, number of orders, data amount of order information, and kind of an ordered product and its quantity as included in the order information. The retailer or lab can utilize the totaling results as effective information for sales promotion in the retailer or lab by taking the member information and the number of members into account in the totaling operation.

In this embodiment, when making, for example, a sales promotion campaign in a certain region, the retailer or lab can make a request to the network center 12 for totaling data on the number of members in the region of interest, the number of users including members and nonmembers, kinds of products ordered in the region for a predetermined period, the number of orders and the like, thereby making the campaign effective. The retailer and lab may also request totaling data on the number of orders from the members (users) for each age bracket or for each gender, the data amount of order, the number of images, image data amount and the like. In addition, the retailer and lab may also request, for example, order information and image information relating to members belonging thereto or nonmembers who have used the retailer or lab in order to make campaigns for their own shops.

In response to a request from the retailer or the lab, the charge manager 40i of the network center 12 totals the required data and provides the totaling result to the retailer or the lab.

The charge manager 40i can total the information on the retailer or the lab requesting the data totaling by using accessory information such as the retailer ID, lab ID and member ID assigned to the image information and order information being monitored.

The charge manager 40i calculates operation costs by multiplying the image data amount, number of orders, number of ordered products and number of members obtained by the totaling operations by a predetermined rate (e.g., 1 yen per MB image data, 1 yen per order, 1 yen per ordered product, 1 yen per member) and charges for the operation costs to the retailer or the lab. The costs may be considered to be equivalent to the charges for the provided totaling services.

Next, a second aspect of the present invention will be described.

The second aspect of the present invention provides an image network system and a language setting method which are capable of setting a language understandable to users of a center server, an order entry channel (user terminal) and a lab system in a multilingual region where a plurality of languages are used.

According to the second aspect of the present invention, the image network system has a configuration similar to the image network system 10 of the first aspect shown in FIG. 1. Thus, differences between the first and second aspects will mainly be described also with reference to FIG. 1.

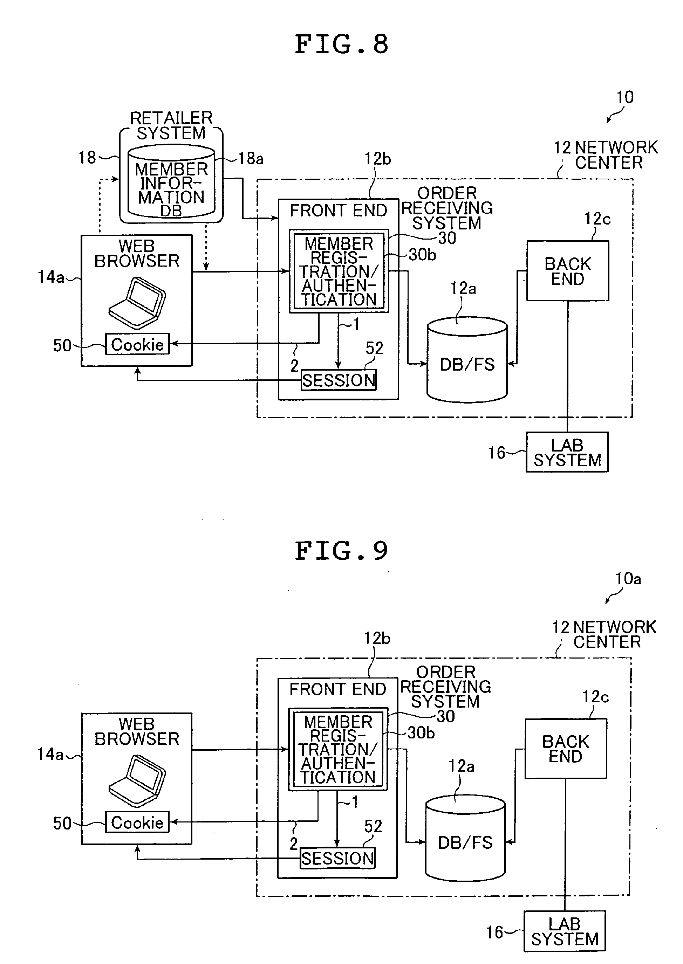

First, a method of setting a language used for the screen displayed in the order entry channel (first user terminal) 14a of the order entry channel 14 of the network system 10 of FIG. 1 in which a web browser is used will be described as a first embodiment of the second aspect. FIG. 8 is a schematic block diagram showing a language setting method in the image network system of the embodiment under consideration.

The image network system and the language setting method of the first embodiment enable the language used on the web screen displayed in the order entry channel to be set to be understandable to a user (customer) irrespective of the region where a center server, an order entry channel and a lab system are installed and the normal language of the region.

In the network system 10 of FIG. 1, as described above, the retailer system 18 makes public the transition web screen for enabling the web browser 14a to access the network center 12 through the communication network (web). As described above, the web browser 14a does not directly access the front end 12b of the network center 12 but accesses the network center 12 via the transition web screen made public by the retailer system 18.

The front end 12b of the network center 12 is a site for receiving an order from the user. The order receiving system 30 of the front end 12b deals with access from the web browser 14a.

The screen displayed in the web browser 14a when the user accesses the network system 10 from the web browser 14a is a web screen made pubic by the retailer or a web screen of a site provided by the front end 12b (order receiving system 30) of the network center 12.

According to the first embodiment, the order receiving system 30 that is a functional block of the front end 12b of the network center 12 includes a function of writing information on a display language in a cookie (second storage unit) 50 and a session (first storage unit) 52 in addition to the aforementioned functions.

As shown in FIG. 8, the web browser (first user terminal) 14a is configured by using, for example, a personal computer. This personal computer includes the cookie 50 which enables a web site provider to temporarily write and store data in a visitor's computer through the web browser.

The front end 12b of the network center 12 includes the session 52.

This session 52 is a storage area which stores information only during communication between the network center 12 (front end 12b) and the web browser (first user terminal) 14a.

As described above, the customers of the network system 10 include members registered in the network system 10 and nonmembers not registered therein. The members include center members whose customer's member information is managed by the network center 12, and retailer members whose customer's member information is managed by the retailer system 18.

In the network system 10 of the first embodiment, when the user is a center member, setting of a display language is carried out by the member registration/authentication 30b. For example, the center member accesses the front end 12b of the network center 12 from the web browser 14a to carry out member registration or changing of the registered member information. In this case, the display language is also set, and information on the set display language is stored in the database/file sever 12a.

Next, the registered member information or the changed member information is written from the member registration/authentication 30b in the database/file server 12a.

In this case, the order receiving system 30 writes the information on the display language contained in the registered or changed member information in the session 52 of the front end 12b (see an arrow 1 of FIG. 8), and in the cookie (second storage unit) 50 of the web browser 14a (see an arrow 2 of FIG. 8).

For example, the information on the display language includes the language type such as English, French, or German. Writing of the display language means writing of the information on the display language.

As described above, at the time of registering the member information from the web browser 14a, the center member can set a basic language (default language) used in the web screen made public by the retailer and the site screen displayed by the front end 12b of the network center 12 as information on the display language. The information on the display language is registered as an item of member information of the center member in the member registration/authentication 30b of the network center 12.

On the other hand, when the user is a retailer member, setting of the display language is carried out in the retailer system 18. The retailer member accesses the transition web screen made public by the retailer system 18 from the web browser 14a, and carries out member registration or changing of the registered member information on the web screen. In this case, the retailer member may set or change the basic language (default language) used for web screen displaying. Information on the display language is registered as one item of member information of the retailer member in the member information DB 18a of the retailer system 18.

Upon registration or changing of the display language information, the retailer system 18 transmits to the front end 12b of the network center 12, part of the member information including the display language information attached to the access information from the web browser 14a to the network center 12. Upon reception of it, the order receiving system 30 of the front end 12b writes the information on the display language in the web browser 14a in the session 52 and in the cookie 50 of the web browser 14a.

Since the session 52 already has the information on the display language, while the web browser 14a accesses the network center 12, the order receiving system 30 obtains the information on the display language written in the session 52 each time the screen is drawn and provides the web browser 14a with a web screen in the display language based on the obtained information.

Next time the web browser 14a accesses the network center 12 after the end of the connection, the session 52 may not have the information on the display language yet. In such a case, the order receiving system 30 obtains the information on the display language written in the cookie 50 of the web browser 14a, and provides the web browser 14a with a web screen in the display language based on the obtained information.

Once the web browser 14a is connected to the order receiving system 30, the information on the display language contained in the member information obtained at the time of connection is written in the session 52 of front end 12b. Therefore, while the connection continues, the order receiving system 30 obtains the information on the display language written in the session 52, and provides the web browser 14a with a web screen in the display language based on the obtained information.

During the connection with the network center 12, the web browser 14a may select a language different from the registered basis language as the display language. For example, the web browser 14a may select an arbitrary language from language options displayed on a public screen. The information on the display language selected by the web browser 14a is transmitted to the order receiving system 30. In this case, the order receiving system 30 writes the transmitted information on the display language in the session 52 and the cookie 50.

In the case of selecting a display language not for changing the basic language (default language) in the member information but for the connection, unlike the setting of the display language in the member registration/authentication 30b, the display language information included in the member information registered in the database/file server 12a is not changed. In the retailer system 18 as well, the information in the member information DB 18a is not changed. However, since the information on a selected display language is written in the session 52 and the cookie 50, the order receiving system 30 can obtain the information on the display language written in the session 52 and the cookie 50 when drawing a screen, and provide the web browser 14a with the screen in the display language based on the obtained information. If the session 52 and the cookie 50 retain the information on the previously selected display language next time the connection is made, the screen is displayed in the previously selected display language.

As described above, according to'the first embodiment, as the display language selected/set by the user is set in the cookie 50 of the web browser 14a, next time the network center 12 is accessed from the web browser 14a, the information of the language set in the cookie 50 can be used to display the screen in the display language based on the information. As a result, the display language adequate to the user of the web browser 14a can be displayed without access to the database/file server 12a.

In the network system 10 of the embodiment under consideration, when the display language is decided, the database/file server 12a is not accessed, so a proper display language can be quickly displayed.

There is no particular limitation on the order in which or the timing at which the display language is written in the registered or changed member information in the cookie 50 and the session 52.

It is thus possible in this embodiment to set, for each user who accesses the network center 12 via the web browser 14a, an understandable language, that is, a language desired by the user as the display language to be displayed in the transition web screen made public by the retailer and in the web screen of the site made public by the front end 12b of the network center 12, in a multilingual region where a plurality of languages are used.

An example of the method of setting the display language in the web browser 14a has been described above, but this is not the sole case of the present invention and the display language may also be set in the same manner for the OPW 14b that uses online printing software and the order software 14c that uses dedicated order software.

The configuration in which the network system 10 includes the retailer system 18 has been described above as a preferred embodiment, but the present invention may be applied to a system that includes no retailer system 18.

FIG. 9 is a block diagram schematically showing the configuration of another example of the image network system of the present invention. A network system 10a shown in FIG. 9 is similar in configuration to the network system 10 shown in FIGS. 1 and 8 except that there is no retailer system 18. In the network system 10a, the user terminal (order entry channel) 14 directly accesses the front end 12b of the network center 12, which is different from the example described above. However, except this different point, the display language can be set for the user terminal 14 as in the case of center members in the network system 10.

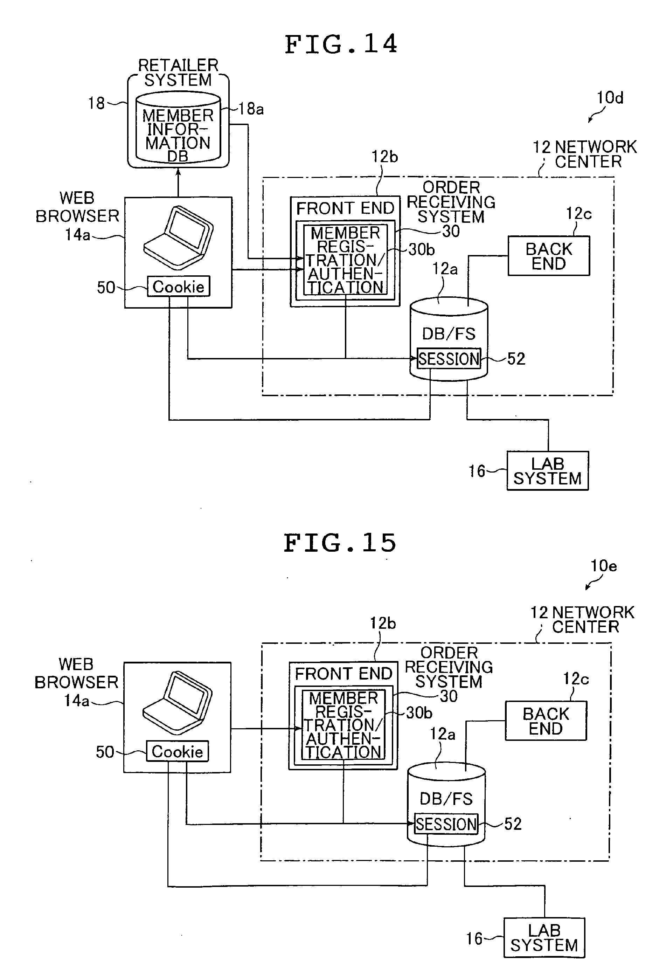

In addition, the embodiment in which the session 52 is provided in the front end 12b of the network center 12 has been described above, but there is no particular limitation on the place where the session 52 is disposed, and the session 52 may be disposed in part of the database/file server 12a area as in the network system 10d shown in FIG. 14 and the network system 10e shown in FIG. 15.

Next, a network system according to a second embodiment of the second aspect of the present invention will be described.

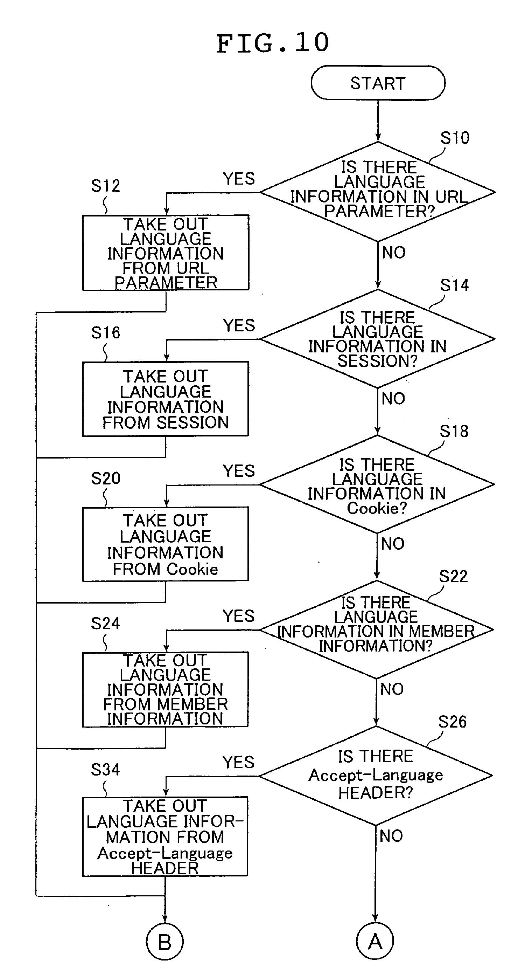

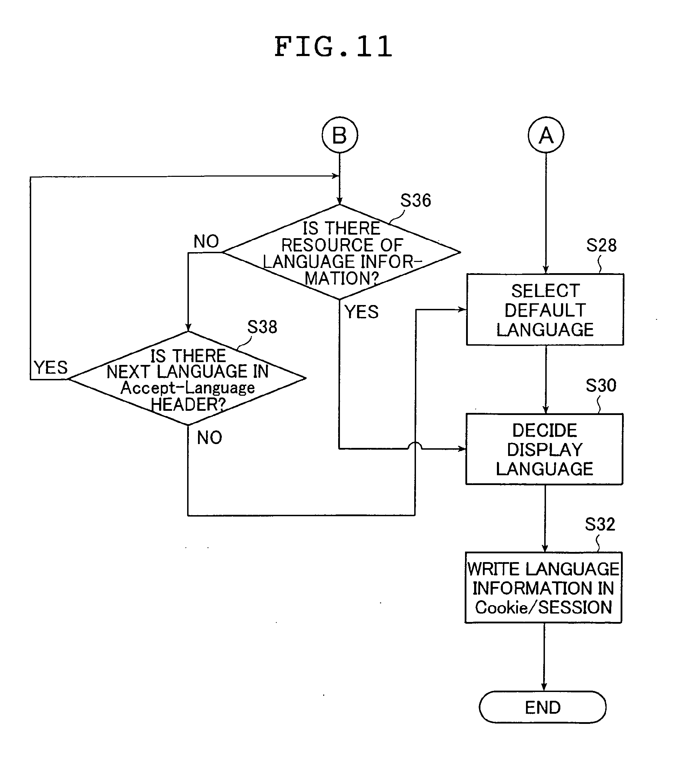

The network system in this embodiment is similar in configuration to the network system 10 of the first embodiment shown in FIGS. 1 and 8 and will be therefore described below with reference to FIGS. 1 and 8. Each of FIGS. 10 and 11 is a flowchart showing a method of setting the display language in a sequence of steps in the image network system of the second embodiment.

The network system of the second embodiment is similar to the network system 10 of the first embodiment (see FIGS. 1 and 8) except for the method of setting the display language in the web browser (first user terminal) 14a, so detailed description thereof will be omitted.

According to the second embodiment, the web screen (public screen) is displayed in a language set by a user (customer), the network center 12, or the retailer system 18.

In the network center 12, a display language (first display language) for displaying the web screen is set, and information on the display language is stored in the database/file server 12a. The database/file server 12a stores a plurality of language resources (language resources) in addition to the display language information.

As in the first embodiment, the network system 10 of this embodiment has two types of members according to the access pattern: center members whose member information is managed in the network center 12 and who directly signs in the front end 12b, and retailer members whose member information is managed in the retailer system 18 and who signs in the retailer system 18 to access the front end 12b of the network center 12 along with the member information.

As described above, the center and retailer members normally set display languages. According to the second embodiment, however, when no display language is set by the center member or retailer member, or even when the order receiving system 30 (member registration/authentication 30b) fails in acquisition of information of a display language set by each of the center and retailer members, one of a display language (first display language) set by the network center 12 and a display language (second display language) set by the retailer center 18 is used as the display language in a public screen viewed by the user.

The first display language set in the network center 12 and the second display language set in the retailer system 18 are set beforehand as the default languages in the network center and the retailer, respectively, and stored in the database/file server 12a of the network center 12. The default language in the retailer is managed in the basic information manager 40c (see FIG. 1) of the back end 12c.

For example, when the center member directly accesses the order receiving system 30 of the front end 12b of the network center 12 via the web browser (first user terminal) 14a, request data is transmitted to the order receiving system 30 to display the web screen.

In this case, as shown in FIG. 10, the order receiving system 30 first checks the request data (header) from the user to see whether there is language information in a URL parameter for designating a language (Step S10).

When it is judged in Step S10 that there is language information in the URL parameter, the language information is obtained from the URL parameter (Step S12).

Then, as shown in FIG. 11, whether a language resource of the language information obtained from the URL parameter exists in the database/file server 12a is checked (Step S36). When the language resource exists, a display language is decided (Step S30).

The order receiving system 30 writes the decided language information in the cookie 50 and the session 52 (Step S32). Accordingly, the display language of the public screen to be viewed by the user is decided.

On the other hand, as shown in FIG. 10, when it is judged in Step S10 that there is no language information in the URL parameter, whether there is language information in the session 52 is checked (Step S14).

When it is judged in Step S14 that there is language information in the session 52, the language information is obtained from the session 52 (Step S16).

Then, as shown in FIG. 11, whether a language resource of the language information obtained from the session 52 exists in the database/file sever 12a is checked (Step S36). When the language resource exists, a display language is decided (Step S30).

Then, the order receiving system 30 writes the decided language information in the cookie 50 and the session 52 (Step S32). Accordingly, the display language of the public screen to be viewed by the user is decided.

On the other hand, as shown in FIG. 10, when it is judged in Step S14 that there is no language information in the session 52, whether there is language information in the cookie 50 is checked (Step S18).

When it is judged in Step S18 that there is language information in the cookie 50, the language information is obtained from the cookie 50 (Step S20).

Then, as shown in FIG. 11, whether a language resource of the language information obtained from the cookie 50 exists in the database/file server 12a is checked (Step S36). When the language resource exists, a display language is decided (Step S30).

Then, the order receiving system 30 writes the decided language information in the cookie 50 and the session 52 (Step S32). Accordingly, the display language of the public screen to be viewed by the user is decided.

On the other hand, as shown in FIG. 10, when it is judged in Step S18 that there is no language information in the cookie 50, whether there is language information in the member information registered in the database/file server 12a is checked (Step S22).

When it is judged in Step 22 that there is language information in the member information, the language information is obtained from the member information (Step S24).

Then, as shown in FIG. 11, whether a language resource of the language information obtained from the member information exists in the database/file server 12a is checked (Step S36). When the language resource exists, a display language is decided (Step S30).

Then, the order receiving system 30 writes the decided language information in the cookie 50 and the session 52 (Step S32). Accordingly, the display language of the public screen to be viewed by the user is decided.

On the other hand, as shown in FIG. 10, when it is judged in Step S22 that there is no language information in the member information, whether an Accept-Language header (hereinafter simply referred to as "header") which is a language code set for the data for displaying the web screen exists in the request data is checked (Step S26).

When it is judged in Step S26 that there is a header in the member information, the language information is obtained from the header (Step S34).

Then, as shown in FIG. 11, whether a language resource of the language information obtained from the header exists in the database/file server 12a is checked (Step S36). When the language resource exists, a display language is decided (Step S30).

Then, the order receiving system 30 writes the decided language information in the cookie and the session (Step S32). Accordingly, the display language of the web screen to be viewed by the user is decided.

On the other hand, as shown in FIG. 11, when it is judged in Step S26 that there is no header, the network center default language that is set as the display language of the web screen in the network center 12 or the retailer default language that is set in the retailer system 18 is selected as the display language (Step S28). As for the network center default language, the order receiving system 30 can retrieve a language from the database/file server 12a and select the retrieved language as the network center default language. As for the retailer default language, the order receiving system 30 can refer to access information from a user to obtain the ID of a retailer to which the user belongs, retrieve a default language corresponding to the retailer ID from the database/file server 12a, and select the retrieved language as the retailer default language.

Then, the language selected in Step S28 is decided as the display language (Step S30).

Then, the order receiving system 30 writes the decided language information in the cookie 50 and the session 52 (Step S32). Accordingly, the display language of the public screen to be viewed by the user is determined.

Further, when it is judged in Step S36 that no language resource exists, whether the next language information.exists in the header is checked (Step S38).

When it is judged in Step S38 that the next language information does not exist, a display language is decided after the processing of Steps S28 to S32.

On the other hand, when it is judged in Step S38 that the next language information exists, whether a language resource of the language information obtained from the header exists is checked again (Step S36). When the language resource exists, a display language is decided (Step S30). The display language is decided after the processing of Step S32 (Steps S30 and S32).

Further, when it is judged in Step S38 that the next language information does not exist, whether the next language information exists in the header is repeatedly checked (Step S38) to decide a display language (Steps S30 and S32).

Next, in the case of the retailer member, as shown in FIG. 10, the request data is first checked to see whether there is language information in the URL parameter (Step S10). Then, whether there is language information in the session 52 (Step S14), and whether there is language information in the cookie 50 (Step S18) are sequentially checked to decide a display language.

The member information is managed in the member information DB 18a and does not exist in the database/file server 12a. Therefore, when the display language is not decided through Steps S10, S14, and S18 described above, a judgment of NO is made in Step S22, and when the display language is also not decided in Step S26, the retailer default language set as the display language in the retailer system 18 or the network center default language set as the display language of the public screen in the network center 12 is selected as the display language (Step S28). Then, the language selected in Step S28 is decided as the display language (Step S30).

Next, the order receiving system 30 writes the decided language information in the cookie 50 and the session 52 (Step S32). Accordingly, the display language of the public screen to be viewed by the user is decided.

As described above, in the second embodiment, even if the user (center member or retailer member) has not set the display language or even if the user (center member or retailer member) fails to obtain the language information of the set display language, the language set as the display language by the network center 12 or the retailer system 18 can be set as the display language. Thus, at least the display language set in the network center 12 or the retailer system 18 can be set as the display language for the user.

The display language can be readily set in the second embodiment, because when setting the display language, there is no need to access the database/file server 12a unless the default display language set in the network center 12 or the retailer system 18 is used.

Further, in the second embodiment, the method of setting the display language in the web browser (first user terminal) 14a has been described. However, the present invention is not limited thereto. For example, this method may be used in setting the display language in the OPW (second user terminal) 14b that uses online printing software, or in the order software (third user terminal) 14c that uses order software dedicated to the network system 10.

In the example described above, one of the first display language set in the network center 12 and the second display language set in the retailer system 18 was selected in Step S28. However, Step S28 may include two substeps, according to which whether the second display language exists is first checked, and if not, whether the first display language exists is then checked and vice versa.

Only one of the first display language and the second display language may be set as the default language to be selected in Step S28. In this case, it is preferable to use the display language set in the retailer system 18, because a display language corresponding to a retailer to which a user belongs can be set for the user.

Incorporating the retailer default language (second display language) in the display language setting flow sounds like a layer for filtering users of a common retailer is provided in relation to the setting of display languages for all users. In other words, default languages can be set in the retailer layer, which at least ensures that a screen in a default language is displayed for each of members belonging to a retailer.

In setting the display language according to the present invention, one or more layers may be provided instead of or in addition to the retailer layer. To be more specific, a language setting layer may be provided for a unit (group) to which a plurality of members belong, examples thereof including country, region, organization, association, and shop. Default display languages can be set for each layer.

In such a case, default languages in each layer are stored in the database/file server 12a of the network center 12. The language setting flow in FIGS. 10 and 11 in which a step of selecting a default language in each layer is inserted is used for the language setting flow. The position at which this step is inserted in the flow may be determined according to the level of importance or priority of the layer.

When setting the display language, the order receiving system 30 obtains information on a unit to which a user who requests access belongs, from the member information of the user and other attribute information, and retrieves information on a corresponding language from the database/file server 12a based on the obtained information.

As described above, it is possible to set a language by one or more language setting layers and use the set language in displaying a public screen for the user.

In the example described above, whether there is information on a display language was checked in the order of "URL parameter", "session", "cookie", "member information", "Accept-Language header" and "retailer default language or network center default language". This order is preferable in that information selected by users is given higher priority and in that information which is newer and is retrieved more simply is given higher priority. However, the present invention is not limited to this form, but these items may be set so as to enable retrieval in another order.

The language setting method of the present invention is not limited to the one including all of Steps S10 to S26 shown in FIGS. 10 and 11, but information on a display language may be retrieved for one or more of the URL parameter, session, cookie, member information and Accept-Language header. Retrieval may be performed for other information in addition to one or more of the above information items. In any case, the retailer default language or the network center default language is finally obtained in Step S28.

According to the present invention, a plurality of items of information are combined to see in a predetermined order whether each item of information contains information on a display language, so it is possible to obtain information on a more preferred display language and at least a retailer default language or network center default language, whereby language information can be always obtained finally.

The example described above has been configured so that both of the retailer default language and the network center default language are stored in the database/file server 12a of the network center 12. However, the retailer default language may be stored in a not-shown database (database other than the member information DB 18a) of the retailer system 18 so that the order receiving system 30 may refer to the database of the retailer system 18 when a language is selected.

Next, a third embodiment of the second aspect will be described.

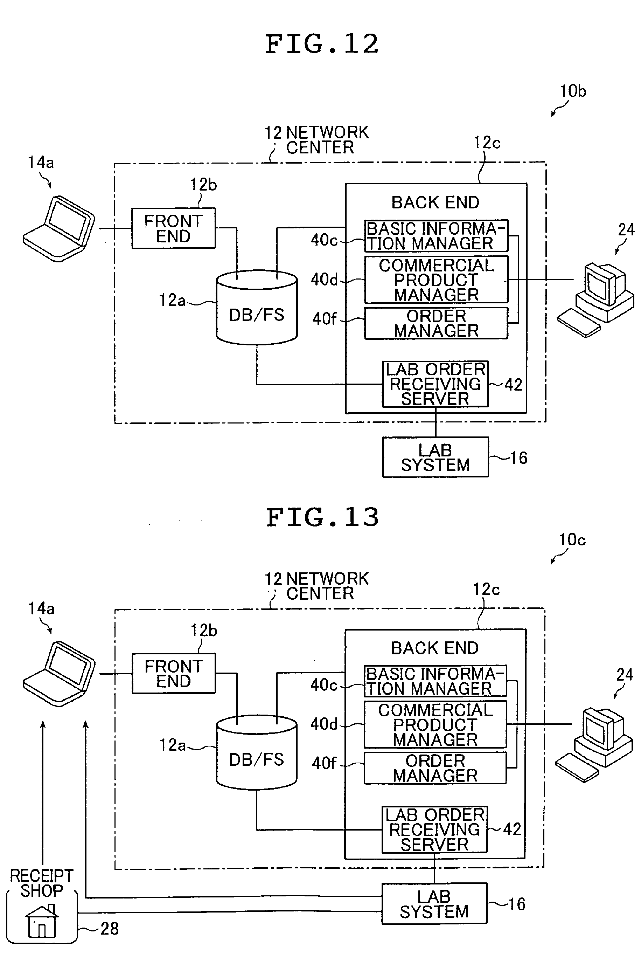

FIG. 12 is a schematic diagram showing a main section of the image network system according to the third embodiment of the second aspect of the present invention.

It should be noted that in the third embodiment, components similar to those of the network system 10 of the first embodiment shown in FIGS. 1 and 8 are denoted by similar reference numerals, and detailed description thereof will be omitted.

A network system 10b of the third embodiment is the same as the network system 10 of the first embodiment (see FIGS. 1 and 8) except for the method of setting the display language in the web browser (first user terminal) 14a, the method of setting the language used in the lab system 16, and the point that the print work instruction is sent in the language used in the lab system 16 together with the order information. Therefore, detailed description thereof will be omitted.

For example, when the user of the web browser 14a is a person in the linguistic area of French and when the print worker of the lab system 16 is a person in the linguistic area of German, even when the order information in French is sent to the lab system 16, the print worker cannot always understand the content. Accordingly, in the network system 10b of the third embodiment, the print work instruction is set in a plurality of languages and the print work instruction is added to the order information and provided in the language used in the lab system 16.

In the third embodiment, the work instruction is made with respect to the product name, quantity, size, finishing method, and the like of the print to be produced based on the order information.

The work instruction includes the instruction of, for example, "use the one for XX campaign" for the special envelope for photographs (the envelope for inserting prints), and "do not use new printers until (month)/(date)".

In the third embodiment, the print work instruction is registered in a plurality of languages using a partial function of the back end 12c.

As described above, the commercial product manager 40d provides functions of setting a merchandise (product) to be handled by each retailer system 18 or each lab system 16, setting the price of the merchandise, and displaying the merchandise in the order web and the like, and a function of generating order setting information (e.g., an image, kind of the commercial product, print size, and quantity) that is information on the order. The commercial product manager 40d of the third embodiment further registers the print work instruction in the database/file server 12a in the plurality of languages.

In the third embodiment, the management system 24 registers the print work instruction in the database/file server 12a (work instruction registration unit) in the plurality of languages using the function of the commercial product manager 40d of the back end 12c.

Further, the basic information manager 40c manages basic information (e.g., lab ID, name, telephone number, location country, and country providing the service) of each lab system 16 as described above. The basic information manager 40c in the third embodiment further manages the language used in each lab system 16.

In the third embodiment, the management system 24 uses the basic information manager 40c of the back end 12c to set the language that is being used in the lab system 16 for each of the lab systems 16, and registers the language in the database/file server 12a.

Further, the order manager (order management unit) 40f generates order information. In the order manager 40f of the third embodiment, a print work instruction in the used language of the lab system 16 is added to the order information corresponding to the order from the user and outputted to the lab order receiving server 42. In addition, the order information and the image data are outputted from the lab order receiving server 42 to the lab system 16 by the order receiving module 16a (see FIG. 1).

Further, in the network system 10b of the third embodiment, the order manager 40f compares the display language of the user and the used language in the lab system 16.

At the time of creating order information, when the display language of the user and the used language of the lab system 16 differ from each other, the print work instruction in the used language of the lab system 16 is loaded from the database/file server 12a to be added to the order information, and the print work instruction and the order information are sent to the lab system 16.

It should be noted that when the display language of the user and the used language of the lab system 16 match each other, there is no need to add the print work instruction in the used language of the lab system 16.

In the third embodiment, when the user placed an order, the order manager 40f of the back end 12c creates order information. At this time, the display language of the user and the used language of the lab system 16 are compared, and if the display language of the user and the used language of the lab system 16 differ from each other, the order manager 40f of the back end 12c loads the print work instruction in the used language of the lab system 16 from the database/file server 12a, adds the print work instruction to the order information, and outputs the order information and the print work instruction to the lab order receiving server 42.

Next, a print for the user is produced in the lab system 16 based on the print work instruction added to the order information.

It should be noted that the method of setting the display language of the user is not particularly limited in the network system 10b of the third embodiment. For example, the display language may be set as in the first or second embodiment, or the network system may be a system combined with that of the first or second embodiment.

Accordingly, the third embodiment may also be applied to the image network system 10 of the first or second embodiment shown in FIG. 8. In this case, the display language is set by the method of setting the display language according to the first or second embodiment described above.

Upon ordering, the order information is created based on the display language set by the user. Whether the display language set by the user and the used language of the lab system 16 match each other is checked, and judgment is made on whether to add the print work instruction to the order information. If necessary, the print work instruction in the used language of the lab system 16 is added to the order information.

As described above, in the third embodiment, the lab system 16 located in a multilingual region in which a plurality of languages are used can always provide the print work instruction in a language understandable to the print manufacturer.

A display language adequate to the whole system can be set by combining the display language setting method for users in the first or second embodiment with the display language setting method for print workers in this embodiment.

Next, a fourth embodiment of the second aspect according to the present invention will be described.

FIG. 13 is a schematic diagram showing a main section of the network system according to the fourth embodiment of the second aspect of the present invention.

It should be noted that in the fourth embodiment, components similar to those of the network system 10 of the first embodiment shown in FIGS. 1 and 8 are denoted by similar reference numerals, and detailed description thereof will be omitted.

A network system 10c of the fourth embodiment is the same as the network system 10 of the first embodiment (see FIGS. 1 and 8) except for the method of setting the display language in the web browser (first user terminal) 14a, the method of setting the language used in the lab system 16, a point that there are order information created in the display language of the user (customer) (first order information) and order information created in the used language of the lab system 16 (second order information), and a point that one of the order information created in the display language of the user and the order information created in the used language of the lab system 16 can be selected. Therefore, detailed description thereof will be omitted.

For example, when the user of the web browser 14a is a person in the linguistic area of French and when the print worker of the lab system 16 is a person in the linguistic area of German, even when the order information in French is sent to the lab system 16, the print worker cannot always understand the content. Accordingly, in the network system 10c of the fourth embodiment, the order information is set in a plurality of languages, thereby providing the order information in the display language of the user (first order information) as well as the order information in the used language of the lab system 16 (second order information).

In the fourth embodiment, the order information is registered in a plurality of languages using a partial function of the back end 12c.

As described above, the commercial product manager 40d provides functions of setting a merchandise (product) to be handled by each retailer system 18 or each lab system 16, setting the price of the merchandise, and displaying the merchandise in the order web and the like, and a function of generating order setting information (e.g., an image, kind of the commercial product, print size, and quantity) that is information on the order. The commercial product manager 40d of the fourth embodiment further registers the order setting information in the database/file server 12a in a plurality of languages.

In the fourth embodiment, the management system 24 registers the order setting information in the plurality of languages using the commercial product manager 40d of the back end 12c.

Further, the basic information manager 40c manages basic information (e.g., lab ID, name, telephone number, location country, and country providing the service) of each lab system 16 as described above. The basic information manager 40c in the fourth embodiment further manages the used language (display language) in each lab system 16.

In the fourth embodiment, the management system 24 uses the basic information manager 40c of the back end 12c to set the language that is being used in the lab system 16 for each of the lab systems 16.

Further, the order manager (order management unit) 40f generates order information using the order setting information. In the order manager 40f, the order information in the display language of the user and the order information in the used language of the lab system 16 are created for the order from the user, and the two types of order information are collectively outputted to the lab order receiving server 42. Further, image data and the order information in the two languages are outputted from the lab order receiving server 42 to the lab system 16 by the order receiving module 16a (see FIG. 1).

It should be noted that the order manager 40f creates the order information in advance in a language different from the display language of the user, and registers the order information in the database/file server 12a in preparation for the change in the display language because of the use of a different language in the order information of the user.

Further, in the network system 10c of the fourth embodiment, the order manager 40f compares the display language of the user and the used language of the lab system 16.

At the time of creating the order information, when the display language of the user and the used language of the lab system 16 differ from each other, the order information in the used language of the lab system 16 is loaded from the database/file server 12a to be added to the order information of the user. Then, these pieces of order information are sent to the lab system 16. As described above, the order information is sent to the lab system 16 in two different languages.

It should be noted that when the display language of the user and the used language of the lab system 16 match each other, there is no need to add the order information in the used language of the lab system 16.

In the fourth embodiment, when the user placed an order, the order manager 40f of the back end 12c creates order information in the display language of the user. At this time, the order manager 40f compares the display language of the user and the used language of the lab system 16. If the display language of the user and the used language of the lab system 16 differ from each other, the order manager 40f of the back end 12c loads the order setting information registered in the used language of the lab system 16 from the database/file server 12a, and further creates the order information in the used language of the lab system 16. Then, the order information in two languages including the order information in the used language of the lab system 16 are outputted to the lab order receiving server 42, and are further outputted to the lab system 16.

Next, in the lab system 16, a print manufacturer selects one of two kinds of order information created in two different languages to produce the print for the user. In this case, the selected language is used for recording the product name on the special envelope for photographs, back printing, and the like.

In the lab system 16 of the network system 10c of the fourth embodiment, the print worker can select one of the two kinds of received order information created in the two languages. Then, recording on the special envelope for photographs is performed in the selected language. Under these circumstances, for example, in the case where the user is a person in the linguistic area of French and the print worker for the lab system 16 is a person in the linguistic area of German, order information in French and order information in German are sent to the lab system 16, and the print worker selects the order information in French or the order information in German to produce a print. Thus, recording may be made in a language (German) different from the display language (French) of the user.

As described above, in the fourth embodiment, the lab system 16 located in a multilingual region in which a plurality of languages are used can provide the order information in a language understandable to the print manufacturer. Accordingly, in the lab system 16, the print manufacturer can select one of the two kinds of order information created in two different languages to produce a print.

The method of setting the display language of the user is not particularly limited also in the network system 10c of the fourth embodiment. The display language may be set as in the first or second embodiment, or the network system may be a system combined with that of the first or second embodiment.

Thus, the fourth embodiment may also be applied to the image network system 10 of the first or second embodiment shown in FIG. 8. In this case, the display language is set by the display language setting method of the first or second embodiment described above.

At this time, upon ordering, order information is created based on the display language set by the user. In addition, whether the display language set by the user and the used language of the lab system 16 match each other is checked, and judgment is made on whether to load the order information in the used language of the lab system 16 from the database/file server 12a. If necessary, the order information in the used language of the lab system 16 is added to the order information of the user.

As described above, the order information in the display language (order language) of the user and the order information in the used language of the lab system 16, that is, the order information in a language understandable to the print manufacturer are always sent to the lab system 16. Thus, the print manufacturer can select one of the languages and produce a print.

Next, the produced print is put in the special envelope for photographs and delivered directly from the lab system 16 to the user or from the lab system 16 to the receipt shop 28.

A display language adequate to the whole system can be set by combining the system and display language setting method for users in the first or second embodiment with the system and display language setting method for print workers in this embodiment.

Next, a third aspect of the present invention will be described.

The third aspect of the present invention provides an image network system which can display a web screen for providing services in a language optimal for a customer even if a center server for collectively controlling/managing the network system does not manage detailed information on the customer, and the center server constituting the image network system.

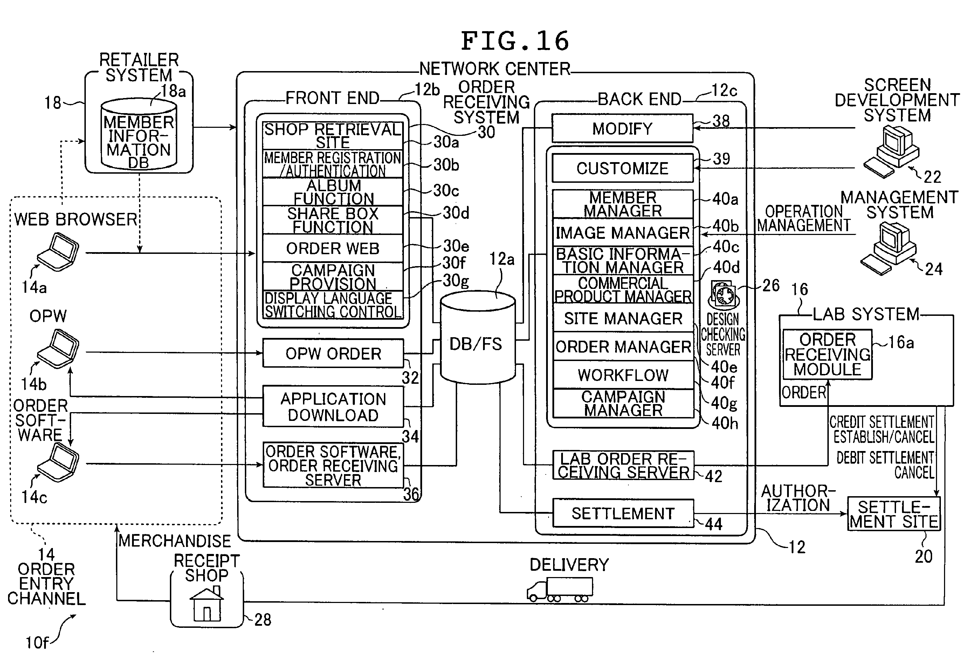

FIG. 16 schematically shows a system configuration of the image network system according to the third aspect of the present invention. An image network system 10f (hereinafter referred to as "network system 10f") of FIG. 16 is different from the image network system 10 (or simply network system) according to the first aspect shown in FIG. 1 in that the order receiving system 30 in the front end 12b of the network center 12 includes a functional block 30g for display language switching control. Except this point, the configuration is the same as that of the network system 10 of FIG. 1. Therefore, in the following description, components similar to those of the network system 10 of FIG. 1 are denoted by similar reference numerals and detailed description thereof will be omitted.

As in the network system 10 of FIG. 1, the network system 10f also has customers classified into members registered in the network system 10f and nonmembers not registered therein. The members include center members whose customer's member information is managed by the network center 12, and retailer members whose customer's member information is managed by the retailer system 18. In the network system 10f of FIG. 16, each member necessarily belongs to any of the retailer systems 18 (retailers) irrespective of whether the member is a center member or a retailer member.

As in the network system 10 of FIG. 1, the retailer system 18 is connected to the network center 12, the order entry channel 14, and the lab system 16 through a communication network such as the Internet. Further, the retailer system 18 offers to the communication network (on the web) transition web screens (for center members, retailer members, and nonmembers) for access to the network center 12 through the web browser 14a.

In the network system 10f of the shown example, whether the member is to be a retailer member or a center member is selected/set for each retailer system 18. In other words, the member is determined as the center member or the retailer member depending on the retailer system 18 to which the member belongs.

However, the present invention is not limited thereto and a single retailer system 18 may include center members and retailer members.

Member information of the retailer member is managed by the retailer system 18. Minimum pieces of information required in the member information of the retailer member, such as the member ID (member ID (identification information) assigned by the network center 12), retailer ID of the retailer system 18 in which the member has been registered, and retailer unique ID (ID assigned for each member in the retailer) are only managed in the network center 12 (member manager in the back end to be described later).

Retailer member information managed by the retailer system 18 is not particularly limited, and the retailer system 18 may appropriately and arbitrarily set the information other than the retailer unique ID and password, as exemplified by name, address, E-mail address, date of birth, registered shop (shop at which a merchandise is to be received), telephone number, display language, and delivery destination. The display language is a language of which the member wishes the use when he/she views the display of the web screen (web screen that was made public through the communication network by the network center 12) in the front end of the network center 12, as will be described later.

In the network system 10f, regarding the retailer member, the member information managed in the retailer system 18 is not mandatory except the retailer unique ID and the password. In other words, the network system 10f of the shown example does not force the retailer system 18 to have the information on the retailer member except the retailer unique ID and the password.

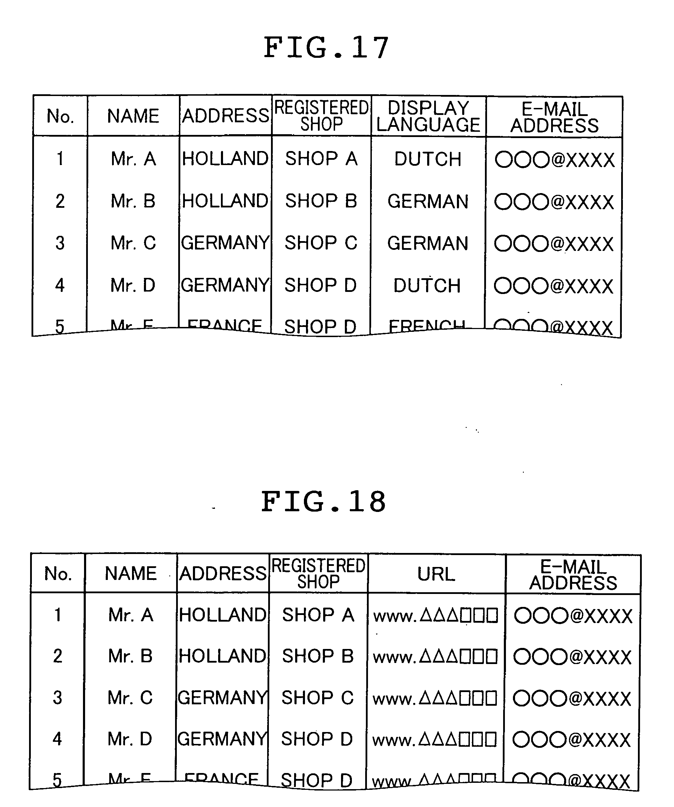

For example, the retailer system 18 manages the member information of the retailer member belonging to the retailer system 18 using a member information management table as shown in FIG. 17, including columns of name, address, registered shop, display language, and E-mail address.

In the network center 12 of the network system 10f of the shown example, as will be described later, the display language switching control 30g switches the display language of the web screen displayed at the front end (viewed by the member) depending on the member, in accordance with information on the display language of the member (or inferred display language). However, the present invention is not limited thereto.

For example, as shown in FIG. 18, a URL of the web screen displayed in the display language corresponding to the member (a URL of a resource to be described later is also possible) may be contained in the member information management table of the retailer system 18. The display language of the web screen may be switched depending on the member by sending information on the URL from the retailer system 18 to the network center 12 at the time of sign in (described later) so that the display language switching control 30g allows the web browser 14a to be connected to the supplied URL. Alternatively, the retailer system 18 may switch the display language of the web screen depending on the member by connecting the web browser 14a to the contained URL.

To access (sign in) the network system, the center member accesses the transition web screen for center members which is publicly offered by the retailer system 18 and accesses the network center 12 from the web screen to undergo (member) authentication.

On the other hand, the retailer member accesses (signs in) the network center 12 as follows: The retailer member accesses the transition web screen for retailer members which is publicly offered by the retailer system 18, inputs the retailer unique ID, password, and the like on the transition web screen to undergo authentication, and further inputs necessary information; then, the retailer system 18 sends predetermined information (information mandatory for the retailer member to access) to the network center 12, whereby the retailer member accesses (signs in) the network center 12.

Further, regarding the retailer member, the operation/processing of member registration are performed in the retailer system 18, and predetermined information (e.g., retailer ID and retailer unique ID of the retailer system 18) is provided from the retailer system 18 to the network center 12, whereby the user is registered as the member (retailer member) of the network system 10f.

In other words, in the network center 12 (member manager of the back end 12c), the retailer member is managed with the retailer unique ID assigned by the retailer system 18 and the retailer ID of the retailer system 18 to which the member belongs.

Therefore, the retailer system 18 corresponding to the retailer member (that is, retailer system 18 managing information on the member belonging to the retailer system) has the same function as the "member registration/authentication" of the network center 12.

Examples of the predetermined information that is to be sent from the retailer system 18 to the network center 12 when the retailer member accesses the network center 12, include a retailer ID, a retailer unique ID, status information (as to whether the member succeeded in authentication), a name, an address, a telephone number, and an E-mail address, and further include information on currency used for payment and on a settlement site on which a payment is made. Needless to say, in the case where the retailer system 18 manages a name, an address, a telephone number, or the like as member information, the retailer system 18 may automatically attach those pieces of information to the information to be transferred upon sign in of the retailer member, rather than inputting those pieces of information.

Further, it is preferable that the retailer system 18 also manage information on a display language as shown in the above-mentioned member management table, as the information on the retailer member, and attach the information to the information to be transferred by the retailer system 18 upon sign in of the retailer member. In a case where the retailer system 18 does not manage the information on a display language, the retailer system 18 may prompt the retailer member to input a desired language upon sign in.

The display language switching control 30g, which is a characteristic portion of the third aspect of the present invention, provides a function of switching among languages the display language on a web screen which is displayed by each function of the front end 12b so that a member views the web screen, by using information supplied from the retailer system.

Web screens to be displayed for the shop retrieval site 30a, the member registration/authentication 30b, the album function 30c, the share box function 30d, the order web 30e, and the campaign provision 30f are each capable of displaying a screen in any of various languages such as English, German, French, and Spanish. The display language switching control 30g switches the display language on the web screen, based on information of the member or the like.

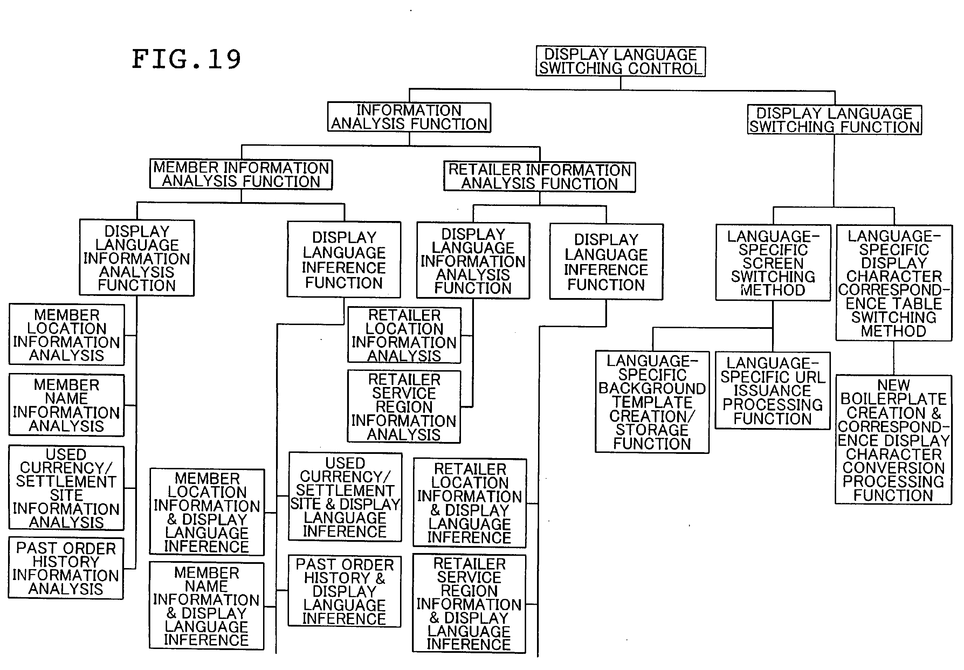

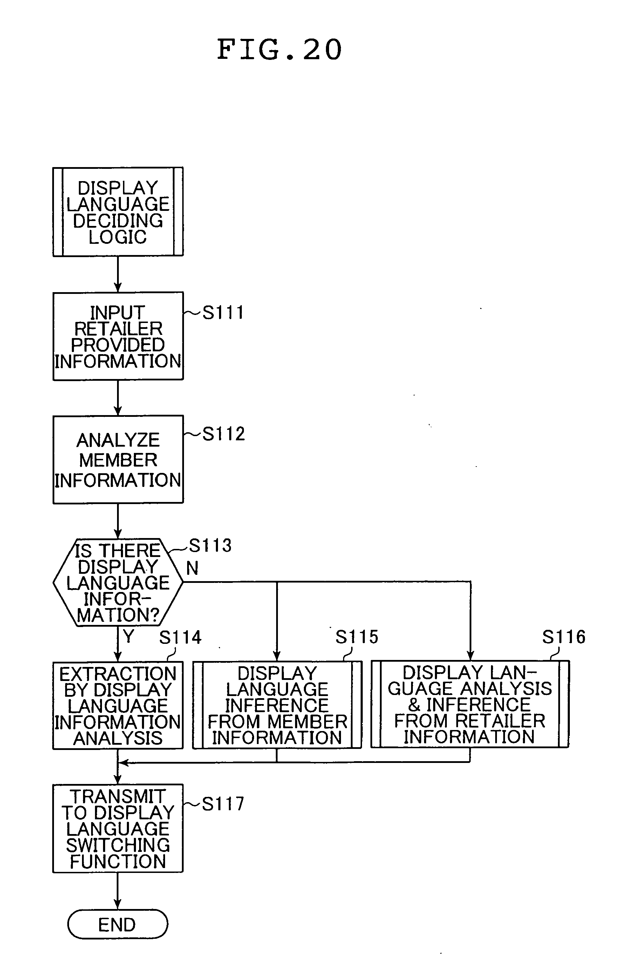

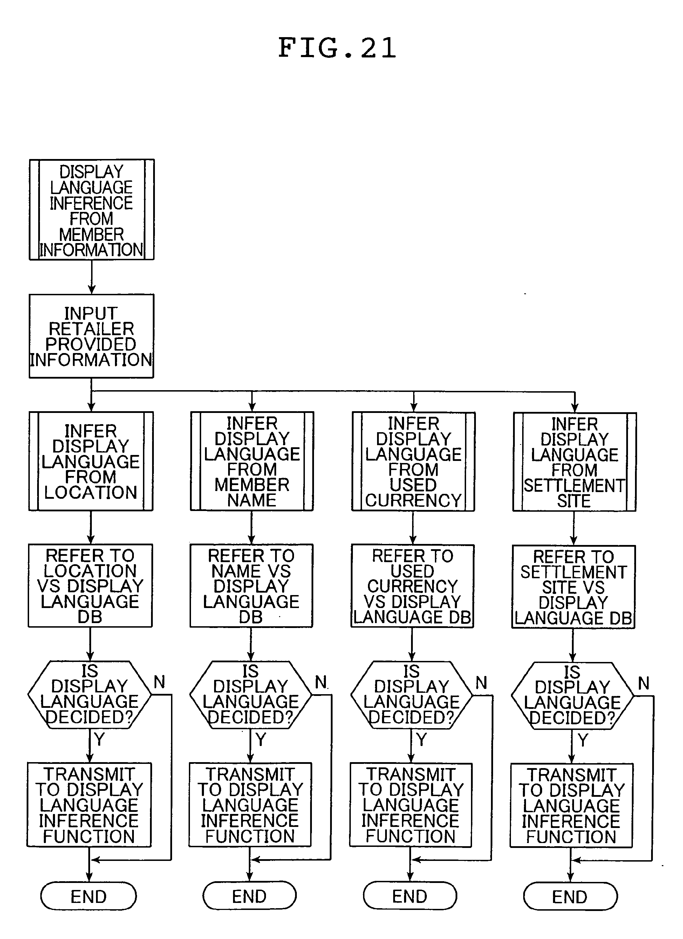

Hereinbelow, a detailed description is given of a function of the display language switching control 30g, with reference to the block diagram of FIG. 19 showing in detail the function of the display language switching control 30g and to the flowcharts of FIGS. 20 and 21 showing processing to be performed in switching the display language.

As shown in FIG. 19, the display language switching control 30g has an information analysis function and a display language switching function. The information supplied from the retailer system 18 upon sign in of a member (hereinafter referred to as "retailer provided information") is first analyzed by the information analysis function.

The information analysis function includes a member information analysis function and a retailer information analysis function. Further, each of the member information analysis function and the retailer information analysis function includes a display language information analysis function and a display language inference function.

The display language information analysis function of the member information analysis function analyzes whether a customer is a center member or a retailer member, based on whether the customer has been authenticated or not in the above-mentioned member registration/authentication or based on the information provided by the retailer (hereinafter also referred to as "retailer provided information). Further, in the case where the customer is a retailer member, the display language information analysis function checks whether there is information on a display language in the member information of the retailer provided information.

In a case where the customer is a center member, the member manager of the back end 12c manages information on a display language that the customer desires to have displayed on a web screen made public by the front end 12b (display language information). Accordingly, in the case where a customer accessing the network center 12 is a center member, the display language information analysis function extracts, from the member manager of the back end 12c, display language information corresponding to the center member, and sends the information thus extracted to the display language switching function to complete the information analysis.

Meanwhile, in the case where the customer is a retailer member, the display language information analysis function checks, as described above, the retailer provided information to see whether the display language information is included therein. When the member information managed by the retailer system 18 includes information on display languages (or information on URLs shown in FIG. 18) as in the above-mentioned member management information table shown in FIG. 17, or when the retailer provided information sent from the retailer system 18 includes display language information (URL information) which has been input by each retailer member upon sign in, the display language information analysis function extracts the information and sends the information to the display language switching function to complete the information analysis.

On the other hand, in the case where the retailer provided information does not include display language information, the display language information analysis function analyzes the rest of the retailer provided information (information on-a member) and information relating to the member stored in the network center 12, and the display language inference function uses the information obtained as a result of the analysis to infer a display language. The display language information analysis function has a plurality of functions for analyzing the display language information. The display language inference function has a plurality of functions for display language inference (see FIG. 19). As shown in FIG. 21, the respective pieces of the retailer provided information are simultaneously provided to those inference functions, and the inference functions process the information in parallel with one another. The inference functions may be executed sequentially.

The functional blocks of member location information analysis and member location information/display language inference have functions of analyzing location information such as the address of a member and inferring a display language based on the information obtained. The display language inference function has a table as shown below which includes a correspondence between locations and used languages (location vs. display language DB), and the member location information/display language inference consults the table to infer a display language. In the table below, information is represented by characters in order to make the description clear, but the information is actually coded to be stored.

| Location | Display Language |
|----------|------------------|
| Prague   | Czech            |

(continued)

| Location | Display Language |
|----------|------------------|
| Munich | German |
| Vienna | German |
| : | : |

As for the location information of a member, information on the city name in the address data of the member may be retrieved and used as shown in the above table, or information on the country name or zip code may be retrieved and used alone or in combination. As for the information on the zip code, a country or a city can also be inferred from the zip code itself or the number of digits in the zip code or other feature such as an array of numbers/characters.

The functional blocks of member name information analysis and member name information/display language inference have functions of analyzing information of a member and inferring a display language based on the information obtained. The display language inference function has a table as shown below which includes a correspondence between names and used languages (name vs. display language DB), and the member name information/display language inference consults the table to infer a display language.

| Name | Display Language |
|------|------------------|
| Zhang | Chinese |
| Liu | Chinese |
| John | American English |
| : | : |

The functional blocks of used currency information analysis and used currency/display language inference have functions of analyzing information on the currency used by a member and inferring a display language based on the information obtained. The display language inference function has a table as shown below which includes a correspondence between currencies and used languages (used currency vs. display language DB), and the used currency/display language inference consults the table to infer a display language.

| Currency | Display Language |
|----------|------------------|
| Yen | Japanese |
| Dollar | American English |
| Franc | French |
| Lira | Italian |
| Euro | |
| : | : |

The functional blocks of used settlement site information analysis and used settlement site/display language inference have functions of analyzing information on the settlement site used by a member and inferring a display language base on the information obtained. The display language inference function has a table as shown below which includes a correspondence between settlement sites and used languages (settlement site vs. display language DB), and the used settlement site/display language inference consults the table to infer the display language. Further, the display language inference function may infer a display language based on the method of payment, instead of the settlement site or used currency.

| Settlement Site | Display Language |
|-----------------|------------------|
| PayPal | Chinese |
| ATOS/BNP | Dutch |

EP 1 852 818 A2

(continued)

| Settlement Site | Display Language |
|---|---|
| Comptop/Citi | English |
| : | : |

Further, the functional blocks of past order history information analysis and past order history/display language inference have functions of analyzing information on the past order histories stored in the network center 12 and inferring a language adequate to the display language on a web screen to be viewed by a member. Analysis is made on information such as the location, the name, the used currency, or the settlement site of a member.

In addition to the above, the display language information analysis function and the display language inference function in the member information analysis function may also have a function of inferring a display language from the following information.

More specifically, a display language for a member may be inferred by using features in character code or characters used in inputting the information on the member (e.g., location or name), for example, information on marks, symbols and characters specific to languages as in Chinese characters or characters with an umlaut mark over them.

For example, a country ID, or a city or area ID indicating the location of the order entry channel 14 which is included in the path from the order entry channel 14 may be used as the location information of the member. Alternatively, the time zone of the order entry channel 14 may be used as the location of the order entry channel 14, that is, as the location information of the member.

According to the method that uses information included in the path from the order entry channel 14 or information on the time zone of the order entry channel 14, it is also possible to infer a display language on a web screen for a nonmember on which the network center 12 and the retailer system 18 have no information.

The retailer information analysis function is a function of analyzing information relating to a retailer (retailer information) which is included in the retailer provided information, in order to switch the display language. The retailer information analysis function also includes, as described above, the display language information analysis function and the display language inference function.

When the retailer system 18 (retailer) signs a contract with the network center 12 for the network printing services, information on the location and the service region of the retailer is registered in the network center 12 (more specifically, the basic information manager of the back end to be described later). The information includes default display language information, which is the information relating to a language to be basically displayed by the retailer system 18. In the case where there exist a plurality of service regions for the retailer, a plurality of items are also registered for the display language information. When a plurality of items are registered for the display language information, it is to be identified which of the registered display languages is regarded as a language displayed by default.

The display language information analysis function finds the retailer system 18 based on a retailer ID included in the retailer provided information by using the information described above, extracts the default display language information of the retailer system 18 from the basic information manager of the back end 12c and sends the information to the display language switching function to complete the information analysis.

On the other hand, in the case where there is no information on the default display language, the display language information analysis function analyzes the retailer provided information and the display language inference function uses the result obtained by the analysis to infer a display language.

The display language information analysis function in the retailer information analysis function also has a plurality of functions for display language analysis. The display language inference function in the retailer information analysis function also has a plurality of inference functions (see FIG. 19).

The functional blocks of retailer location information analysis and retailer location information/display language inference have functions of finding the retailer system 18 based on a retailer ID in the retailer provided information, finding the location of the retailer from the basic information manager of the back end 12c, and inferring a display language based on the thus found location of the retailer.

An example of the retailer information is shown below.

| Location | Service region |
|---|---|
| Prague | Munich |
|  | Vienna |

The retailer operating this retailer system 18 is located in Prague, and the service region thereof covers Munich

44

and Vienna. The retailer location information/display language inference function makes an inquiry about the location information to a location/display language correspondence database (not shown) in the network center 12 to find out that the display language is Czech. The retailer location information/display language inference function sends the information on the display language thus found out to the display language switching function to complete the information analysis.

Also, in the case where a retailer desires to use a designated display language for each location, it is possible to input the desired display language in a designated display language section.

The functional blocks of retailer service region information analysis and retailer service region information/ display language inference have functions of finding a retailer based on a retailer ID in the retailer provided information, finding a service region of the retailer from the basic information manager of the back end 12c, and inferring a display language based on the thus found service region of the retailer.

The service region of the retailer system 18 (retailer operating the system 18) located in Prague covers Munich and Vienna. The retailer service region information/display language inference function makes an inquiry about the service region information to a service region/display language correspondence database (not shown) in the network center 12 to find out that the display language is German. The retailer service region information/display language inference function sends the information on the display language thus found out to the display language switching function to complete the information analysis.

Another method may be adopted in'which the retailer information analysis function obtains a referer of the order entry channel 14 having gained access as retailer provided information and obtains information on a retailer through which the order entry channel 14 gained access based on the information on the referer so that the display language inference function infers a display language. In this case, it is necessary to register the URL of the retailer system 18 and the default display language information of the retailer system 18 beforehand.

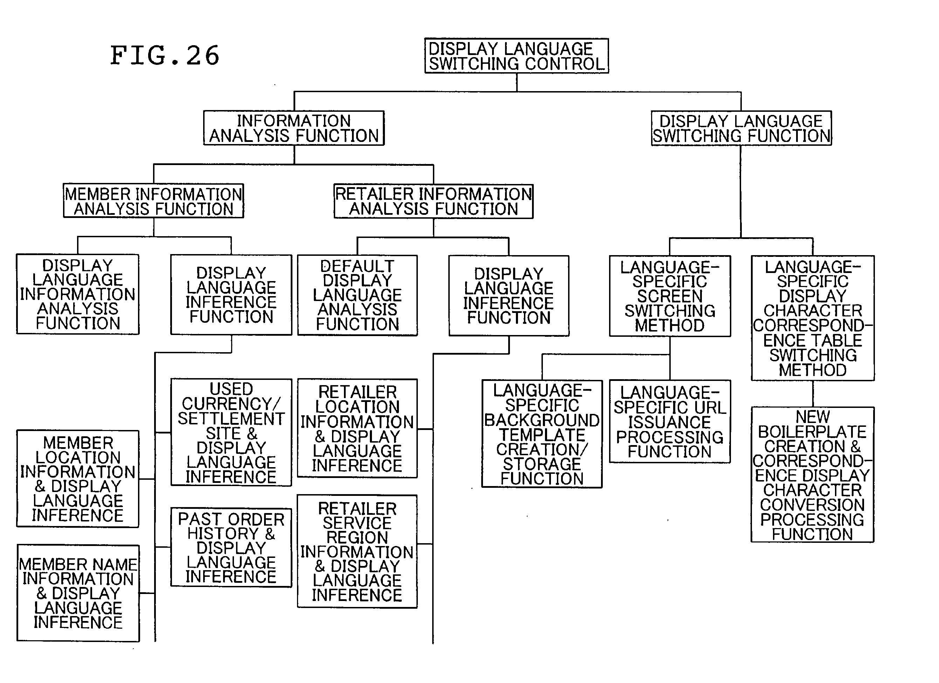

In the example shown in FIG. 19, each of the member information analysis function and the retailer information analysis function includes the display language information analysis function block for analyzing the retailer provided information and the display language inference function block for inferring a display language by using the information obtained as a result of the analysis. However, the display language switching control function block may have a configuration, for example, as shown in FIG. 26 instead of the configuration described above.

As in the case shown in FIG. 19, the member information analysis function in the example shown in FIG. 26 includes a display language information analysis function block and a display language inference function block. However, the display language information analysis function block in this example merely has functions of analyzing the retailer provided information to see whether there is display language information, and when there is display language information, extracting the information and sending the extracted information to the display language switching function. Various functions for analyzing display language information and inferring a display language in the case where there is no display language information are included in the display language inference function block. The retailer information analysis function in FIG. 26 has a default display language analysis function and a display language inference function. The default display language analysis function merely obtains default display language information, and in the case where there is no default display language information, the display language inference function carries out various operations for the analysis of the display language information and inference of a display language.

Specific processing schemes for analysis and inference in case of the configuration shown in FIG. 26 are the same as those in the example shown in FIG. 19.

In the case where the retailer provided information has no display language information or default display language information, it is preferable to infer a display language by analyzing two or more types of information. Particularly in a multilingual region, a display language cannot be specified in many cases by analyzing a type of information, but analysis of two or more types of information enables a display language to be inferred with high accuracy.

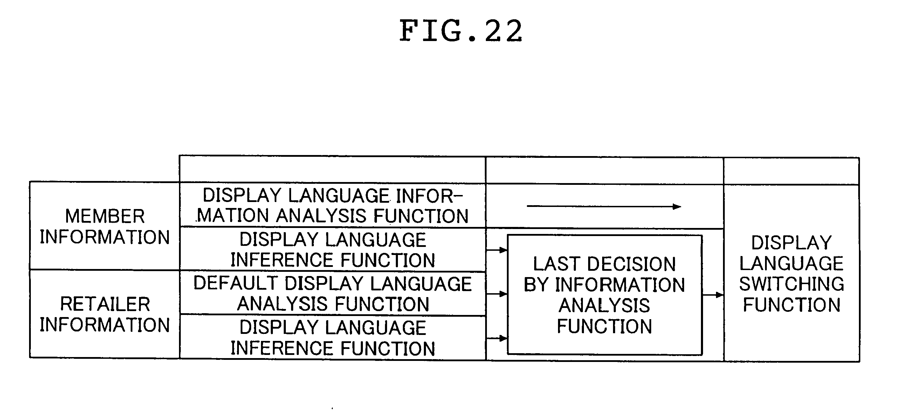

An operation of the display language switching control 30g is described with reference to the flowcharts of FIGS. 20 and 21 and to the image diagram of FIG. 22.

In the member information analysis function, as shown in FIG. 20, retailer provided information is first obtained (Step S111), and the display language information analysis function is used to analyze the retailer provided information to see whether a customer is a center member or a retailer member (Step S112). When the customer is a center member, the information analysis is completed. Meanwhile, when the customer is a retailer member, the display language information analysis function first checks the retailer provided information to see whether the member information in the retailer provided information includes display language information (Step S113). When the member information in the retailer provided information includes display language information, the display language information analysis function extracts the information and sends the extracted information to the display language switching function (Step S114), and the information analysis is completed.

When the member information in the retailer provided information includes no display language information, the display language information analysis function and the display language inference function in the member information analysis function are caused to perform simultaneous processing in parallel with the display language information analysis function and the display language inference function in the retailer information analysis function (Steps S115 and S116), to thereby send a display language finally decided in each function to the display language switching function (Step S117).

Display languages respectively decided in the display language inference function of the member information analysis function; the display language information analysis function of the retailer information analysis function; and the display language inference function of the retailer information analysis function, are judged in a comprehensive manner by the information analysis function to finally decide the display language, to thereby provide credible assurance of the display language information.

FIG. 21 shows a processing flow of a step of inferring a display language based on member information (Step S115) in FIG. 20. In FIG. 19, each of the display language inference functions (each inferring a display language based on the location/member name/used currency/settlement site) located downstream of the display language inference function of the member information analysis function executes inference of a display language as described above and sends the display language obtained as a result of the inference to the upstream display language inference function (see FIG. 19). The display language inference function performs statistical processing on the display languages having been sent from the inference functions as a result of inferences. In an exemplary method, the number of display languages is counted, the one with the highest count is regarded as the finally-decided display language, and the display language thus decided is sent to the display language switching function as the final result of inference.

In another method, an order of priority is predetermined as to the inference functions, for example, in such an order of "location" > "name" > "used currency" > "settlement site", and the display language obtained as a result of inference performed in a function of higher priority is sent to the display language switching function. In still another method, each inference function is weighted according to predetermined rules, and the display language determined as a result of compiling the rules is sent to the display language switching function.

FIG. 22 shows a tabular summary of a processing flow in the display language switching control.

In the case shown in FIG. 21, the display language inference function of the member information analysis function has a form in which a display language is inferred by using various types of information such as the member location, member name, used currency and settlement site. However, the display language inference function of the present invention is not limited to this, and in addition to or instead of such information, other information, for example, the information included in the path from the order entry channel 14 (e.g., country ID and city or area ID) and the information on the time zone of the order entry channel 14 as described above may be used. It is also possible to execute inference of a display language by using any of the various types of information, but it is preferable in the present invention for the display language information analysis function to have at least two display language information analysis function blocks in order to ensure the inference accuracy.

In the example shown in FIG. 19, the display language switching control section has for display language information analysis, 4 display language information analysis function blocks in the member information analysis function and 2 display language information analysis function blocks in the retailer information analysis function, in total 6 analysis function blocks, as well as in total 6 inference function blocks corresponding the analysis function blocks. In the example shown in FIG. 26, the display language .inference function of the member information analysis function has 4 inference function blocks and the display language inference function of the retailer information analysis function has 2 inference function blocks, and display language information analysis and display language inference are carried out in each inference function block.

The abovementioned method in which more than one type of information is analyzed to obtain analysis results, inference is made based on the analysis results, and results obtained by the inference are used to obtain a final result enhances the accuracy in the display language switching control function, and is therefore preferable.

As described above in detail, the display language switching control 30g has the information analysis function and the display language switching function. The display language switching function controls, based on the information on the display language sent from the information analysis function, a web screen of the front end 12b such that the screen is displayed in the display language.

In the above-mentioned configuration, it is possible to display a web screen even for a retailer member whose member information is not managed by the network center 12 in a language considered to be best suited by the member as in the case of a center member whose member information is managed by the network center 12, to thereby provide uniform service in a fair manner to all the members.

As regards the display language switching function, the method of switching the display language on the web screen is not particularly limited. For example, two switching methods, that is, a language-specific display character correspondence table switching method and a language-specific screen switching method may be used. In the network center 12 of the shown example, the display language switching function has a function of switching display language by both the methods described above. For example, the web screens of the order web and the member registration/authentication are switched by the language-specific display character correspondence table switching method, while the other web screens of the front end 12b are switched by the language-specific screen switching method, to thereby switch the display languages of web screens, respectively.

According to the language-specific display character correspondence table switching method, one basic web screen is provided on which text described in each language is incorporated according to the information on the display language, to thereby switch the display language. That is, the method is a so-called text conversion method.

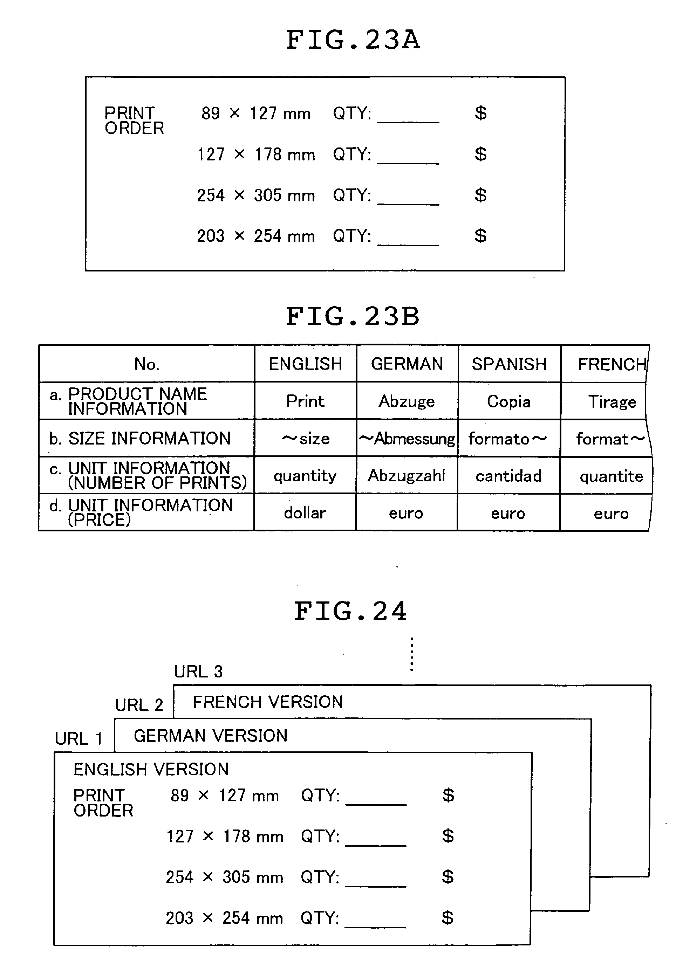

FIGS. 23A and 23B each schematically illustrate a print order screen for explaining display language switching according to the text conversion method.

In this method, as schematically shown in FIG. 23A, there is provided a basic screen, as a print order screen (a web screen for print order), which includes positions at which text (resources) of a. product name information (print order), b. size information (89 × 127 mm, 127 × 178 mm, ...), c. unit information (the number of prints), and d. unit information (price) is incorporated. Meanwhile, the display language switching function has a language switching table, as schematically shown in FIG. 23B, in which text corresponding to the information items a. to d. is stored as resources in each language (English, German, Spanish, French, ...).

For example, with respect to the information item of "print order", terms each indicating "print" as a product in different languages, such as "Print" in English, "Abzuge" in German, "Copia" in Spanish, and "Tirage" in French, ... etc., are stored as resources, and with respect to the information item of "size information", terms such as "- size" in English, "- Abmessung" in German, "formato -" in Spanish, and "format -" in French, ... are stored as resources. The display language switching function has those terms stored in the language switching table as resources.

In the case of switching the display language with the above-described method, the display language switching function reads out from the table, information resources according to the information on the display language which has been supplied from the information analysis function, and incorporates the resources into the basic screen at the predetermined positions, to thereby switch the display language. Accordingly, in this method, the print order screen corresponds to one URL, and the web browser 14a accesses the URL to place an order for printing.

As shown in FIG. 19, the display language switching function has a function of creating a new boilerplate and converting corresponding display characters, along with the switching function, in order to implement the display character correspondence table switching method (the display language switching function according to this method).

Meanwhile, according to the screen switching method, web screens are created in different languages for each function, and the web browser 14a accesses one of the web screens corresponding to the display language information.

To be specific, according to the method, as in the similar print order screen schematically shown in FIG. 24, web screens in different languages, namely, an English order screen (URL 1), a German order screen (URL 2), a French order screen (URL 3) ..., are created for the print order screen. In the case of switching the display language by the above-described method, the display language switching function causes the web browser 14a to access the print order screen displayed in a language corresponding to the information on the display language which has been supplied from the information analysis function. Accordingly, in this method, the number of URLs corresponding to the print order screens is equal to the number of languages supported by the network system 10f.

As shown in FIG. 19, the display language switching function has a function of creating and storing a language-specific web screen by creating a background, a template, or the like for each language and a function of issuing a URL for each web screen thus created, along with the switching function, in order to implement the screen switching method (the display language switching function according to this method).

In the network center 12 of the shown example, the display language switching function switches the display languages of the respective web screens by the different methods, that is, the web screens for the order web and the member registration/authentication are switched by the display character correspondence table switching method while the other screens are switched by the screen switching method. However, the present invention is not limited thereto, but display languages in all the screens may of course be switched by one of the switching methods.

According to the display character correspondence table switching method described first, only one web screen is used, which is advantageous in that the amount of necessary information, such as an amount of resources, can be reduced. On the other hand, according to the screen switching method described next, an independent web screen is created for each language, which offers greater flexibility in the expression on the screen, and therefore, it is possible to create a web screen in consideration of the national character or ethnicity of a member such that the screen can be made more preferable to the member, that is, it is possible to provide more meticulous services (user friendly services).

Therefore, which of the methods is to be selected may be decided as appropriate according to the service required in the network center 12 or the capacity of the network center 12.

In addition to changing the display language, or in place of changing the display language, voice explanation may be provided in the display language set by the information analysis function.

According to the present invention, it is not necessary to switch the display languages in all the web screens that can be viewed through the web browser 14a. Switching of the display language may be carried out in only one of the web screens or a limited number, say, two or more of the web screens, of the shop retrieval site, the member registration/authentication, the album function, the share box function, the order web, and the campaign provision.

Also, the web screens that can be viewed through the web browser 14a are not the sole screens for which the display language is switched, and it is also possible to allow the switching of the display language in a web screen made public by the network center, which can be viewed by the OPW 14b and/or the order software 14c.

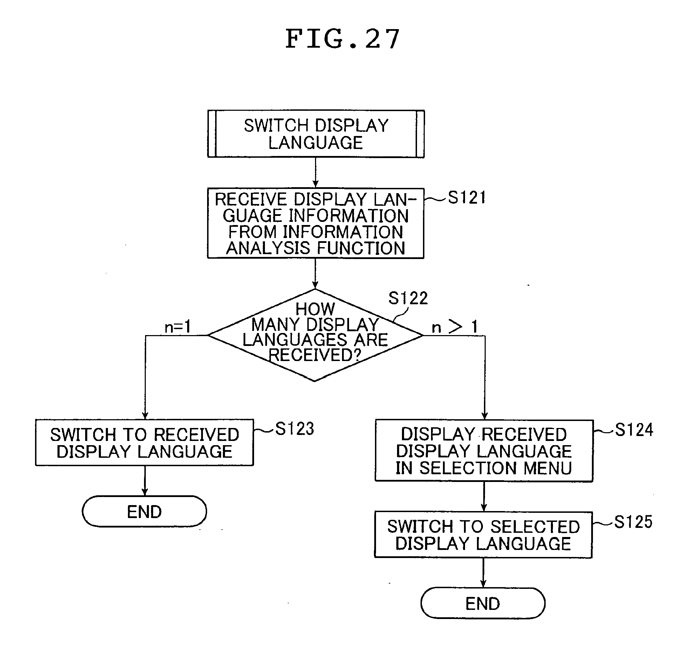

The display language switching control has a function of inferring a display language in the manner as described above, but there is a possibility that one language cannot be decided by the inference function. In such a case, the display language switching control may display some languages narrowed down by the inference function in a pull-down menu so that a customer is prompted to designate a display language. More specifically, as shown in FIG. 27, the display language switching function block receives display language information from the information analysis function (Step S121) and determines the number n of display languages received (Step S122). When the number n is 1 (n = 1), the display language in a web screen is switched to the display language received (Step S123). When the number n of display languages received is 2 or more (n > 1), the display language switching function block displays a list indicating the received display languages in a selection menu such as a pull-down menu (Step S124). The display language in a web screen is switched to a display language selected in the selection menu (Step S125). Languages narrowed down to some extent by the inference function are only displayed in the manner as described above to enable the customer to select a display language much more simply.

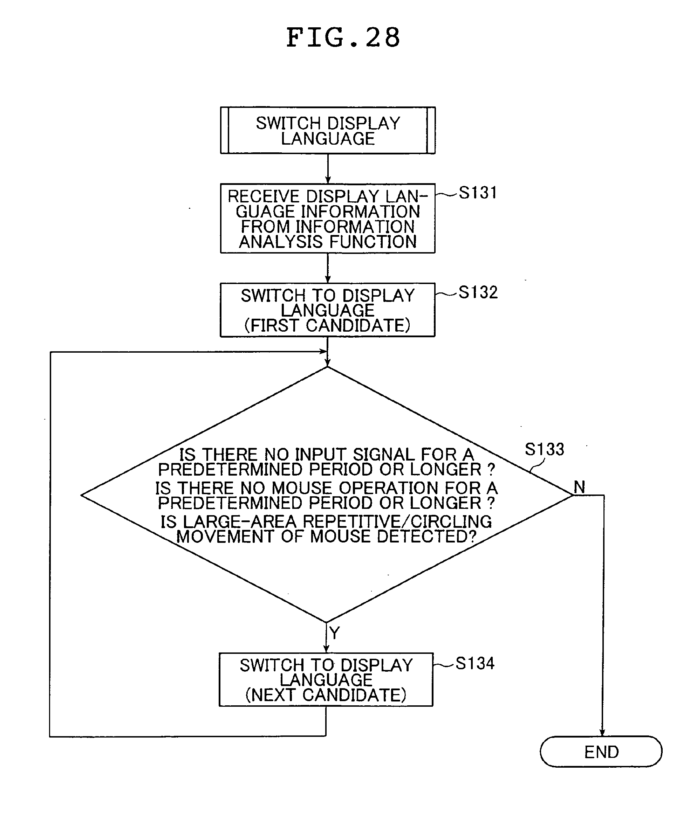

The display language switching control switches the display language in a web screen in the manner as described above. However, in the case where inference is made by the display language inference function, a display language decided by this operation may not be adequate. In such a case, if, after switching the display language in a web screen to a language decided by the inference function, the display language switching control detects that there is no input for a predetermined period or longer, there is hardly movement of a mouse, or the mouse moves in a wide area on the screen, the display language switching control judges that the decided display language is not adequate, that is, the customer wishes to have the web screen displayed in another language, and switches to a second candidate language. To be more specific, as shown in FIG. 28, the display language switching function block receives information on display languages from the information analysis function (Step S131), and switches the display language in a web screen to a first candidate language of the received display languages (Step S132). Then, if it is detected that there is no input signal for a predetermined period or longer, there is no mouse operation for a predetermined period or longer, or a mouse makes a repetitive or circling movement in a large area on the screen (Step S133), the display language switching control switches to a next candidate for display language (Step S134). Alternatively, a pull-down menu that enables the customer to select a display language may be displayed in an emphasized manner in a blinking mode or enlarged mode in Step S134, and second and subsequent candidates for the display language type based on the inference results are displayed in the pull-down menu to prompt the customer to designate a display language. After Step S134, the process returns to Step S133. If the phenomena as described above are not detected in Step S133, the display language switching is completed. Languages narrowed down to some extent by the inference function are only displayed in the pull-down menu in order for the customer to select a display language, which enables the customer to select a display language much more simply.

In the network system 10f, as described above, a center member accesses from the web browser 14a, the transition web screen for center members in the retailer system 18, from which the center member accesses the authentication web screen of the member registration/authentication of the network center 12, where the member inputs an authentication user ID and a password for authentication to thereby sign in the system.

On the other hand, a retailer member accesses from the web browser 14a, the transition web screen for retailer members in the retailer system 18, where the member inputs a retailer unique ID and a password to undergo authentication (and further inputs necessary information), and then the retailer system 18 transfers predetermined information such as the retailer unique ID, a retailer ID, a status (as to whether the authentication has been succeeded or not), an address, a name, and an E-mail address, to the member registration/authentication of the network center 12. The member registration/authentication confirms the authentication in the retailer system 18 and receives the necessary information, thus automatically allowing the member to sign in without performing authentication.

A member who has signed in through the web browser 14a is allowed to access each of the web screens in the front end 12b to view an album or to place an order for a product.

When a center member has signed in, the display language switching control reads out information on the display language from the information managed by the member manager so as to control the web screen viewed by the member such that the language in the web screen corresponds to the display language. On the other hand, when a retailer member has signed in, the display language switching control controls the web screen viewed by the member such that the language in the web screen corresponds to the display language if the information sent by the retailer member includes information on the display language. If the information on the display language is not included, the display language switching control infers as described above the display language based on the location of the member or the like in order to control the web screen viewed by the member such that the language most preferable to the member is used on the web screen.

Therefore, the network system 10f is capable of providing the same services to center members and retailer members in languages best suited for the members.

Hereinabove, the image network system, the network server, and the language setting method according to the present invention have been described in detail. However, the present invention is not limited to the above embodiments, and various improvements and modifications may of course be made without departing from the gist of the present invention.

**Claims**

1. A network server which is connected to an order entry channel for receiving image data and an order from a customer and a lab system for creating a product according to the order from the customer through a communication network, comprising:

   an order receiving function section which accepts the order by receiving information on the order sent from the order entry channel;
   an image management function section which manages the image data sent from the order entry channel;
   a lab order receiving server which stores order information generated from the information on the order from the customer and the image data in relation to each other;
   a counting function section which counts one or both of the image data sent from the order entry channel to the network server for a predetermined period and the order information stored in the lab order receiving server for a predetermined period; and
   a processing function section which processes a counting result obtained by the counting function section with a predetermined unit.

2. The network server according to claim 1, wherein the network server is connected to a retailer system which is connected to the order entry channel through the communication network and makes public a transition web screen for enabling the order entry channel to access the network server through the communication network.

3. The network server according to claim 2, wherein the image management function section comprises a digital album function which enables the order entry channel to display images of the image data managed by the image management function section through a web screen made public through the communication network.

4. The network server according to any one of claims 1 to 3, wherein the processing function section processes the counting result obtained by the counting function section in predetermined different units according to one or both of a format of the image data and processing carried out on the image data.

5. The network server according to any one of claims 1 to 4,
   wherein the counting function section counts a number of image data sent from the order entry channel to the network server during the predetermined period for each the lab system or each the retailer system, and
   the processing function section multiplies the number of pieces of image data obtained by the counting function section by the predetermined unit to charge a result of the multiplication on the lab system, or the retailer system and the corresponding lab system.

6. The network server according to any one of claims 1 to 5,
   wherein the counting function section counts an amount of image data sent from the order entry channel to the network server during the predetermined period for each the lab system or each the retailer system, and
   the processing function section multiplies the amount of image data obtained by the counting function section by the predetermined unit to charge a result of the multiplication on the lab system, or the retailer system and the corresponding lab system.

7. The network server according to any one of claims 1 to 6,
   wherein the counting function section counts a number of pieces of order information stored in the lab order receiving server during the predetermined period for each the lab system or each the retailer system, and
   the processing function section multiplies the number of pieces of order information obtained by the counting function section by the predetermined unit to charge a result of the multiplication on the lab system, or the retailer system and the corresponding lab system.

8. The network server according to any one of claims 1 to 7,
   wherein the counting function section counts an amount of image data regarding the order information stored in the lab order receiving server during the predetermined period for each the lab system or each the retailer system, and

the processing function section multiplies the amount of image data obtained by the counting function section by the predetermined unit to charge a result of the multiplication on the lab system, or the retailer system and the corresponding lab system.

9. An image network system comprising the network server according to any one of claims 1 to 8, further comprising:

an order entry channel connected to the network server through a communication network to receive image data and an order from a customer, and send the image data and information on the order to the network server; and

a lab system connected to the network server through the communication network to receive the image data and information on the order from the lab order receiving server in the network server, and creates a product according to the order from the customer.

10. The image network system according to claim 9, further comprising:

a retailer system connected to the network server and the order entry channel through the communication network, and makes public a transition web screen for enabling the order entry channel to access the network server through the communication network.

11. The image network system according to claim 10, wherein the lab system and the retailer system constitute a single system.

12. A language setting method in an image network system including a network server for receiving image data and an order from a customer with an order entry channel via a web screen made public through the communication network and providing the image data and information on the order to a lab system for creating a product according to the order, the method comprising the steps of:

investigating existence of information on a language in one or more of a database provided in the network server for fixedly storing information on a display language to be displayed on the web screen as member information on the customer who accesses from the order receiving system, a first storage section provided in the network server for storing the information on the display language, a second storage section provided in the order entry channel for storing the information on the display language, parameters set in data for displaying the public screen, and a language code set in the data for displaying the public screen, in predetermined order;

obtaining the information on the language when the information on the language exist in the investigating step, and obtaining information on a default display language preset as a default language used for the web screen in the network server when the information on the language do not exist in the investigating step;

determining the language by the information on the language or the language by the information on the default display language as the display language.

13. A language setting method in an image network system including a network server for receiving image data and an order from a customer with an order entry channel via a web screen made public through the communication network and providing the image data and information on the order to a lab system for creating a product according to the order, the method comprising the steps of:

registering information on the display language on the web screen into a database provided in the network server as member information on the customer who accesses to the network server from the order entry channel;

writing the information on the display language in a first storage section in the network server and a second storage section in the order entry channel when the information on the display language is registered or changed in the registering step.

14. A language setting method in an image network system including a network server for receiving image data and an order from a customer with an order entry channel and providing the image data and information on the order to a lab system for creating a product according to the order, the method comprising the steps of:

registering a work instruction based on order information according to the order in a plurality of languages;

comparing a language of the order with a lab used language used in the lab system; and

loading the work instruction of the lab used language from the work instructions registered in the plurality of languages when the language of the order is different from the lab used language, and adding the work instruction to the order information to output the information to the lab system.

15. A language setting method in an image network system including a network server for receiving image data and an order from a customer with an order entry channel and providing the image data and information on the order to a lab system for creating a product according to the order, the method comprising the steps of:

generating a first order information according to the order in a language of the order;
generating and registering order information corresponding to first order information in a plurality of languages;
comparing a language of the order with a lab used language used in the lab system; and
loading the order information on the lab used language from the order information registered in the plurality of languages in the generating and registering step as a second order information when the language of the order is different from the lab used language, and adding the second order information to the first order information to output the information to the lab system.

16. An image network system comprising:

a network server;
an order entry channel connected to the network server through a communication network to receive image data and an order from a customer, and send the image data and information on the order to the network server; and
a lab system connected to the network server through the communication network to receive the image data and the information on the order from the network server, and creates a product according to the order from the customer,

wherein the network server comprises
an order receiving system which is accessed from the order entry channel via a web screen made public through the communication network;
a database for fixedly storing information on a display language to be displayed on the web screen, the information on the display language is registered for the customer who accesses from the order receiving system as member information on the customer; and
a first storage section for storing the information on the display language,
wherein the order entry channel comprises a second storage section for storing the information on the display language, and
wherein the order receiving system investigates existence of information on a language in one or more of the first storage section, the second storage section, parameters set in data for displaying the web screen, the member information stored in the database, and a language code set in the data for displaying the web screen; obtains the information on the language to set a language based on the obtained information as the display language to be displayed on the web screen when the information on the language exist, and sets a default display language preset as a default language for the web screen as the display language when the information on the language do not exist.

17. A network server connected to an order entry channel for receiving image data and an order from a customer and a retailer system for making public a transition web screen to be accessed by the order entry channel through a communication network, the network server comprising:

a web screen publication section which makes public a web screen that can be viewed by the customer with the order entry channel through a communication network; and
a display language switching control function section which includes an information analysis function section and a display language switching function section, and switches a display language of the web screen viewed by the customer according to the customer who has accessed the network server,

wherein, when the web screen is accessed via the transition web screen, the display language switching control function section analyzes information supplied from the retailer system by the information analysis function section, and switches a display language of the web screen by the display language switching function section according to a result of the analysis.

18. An image network system comprising the network server according to claim 17, further comprising:

an order entry channel connected to the network server through a communication network, for receiving image data and an order from a customer and sending them to the network server; and
a retailer system connected to the network server and the order entry channel through the communication network, for making public a transition web screen for enabling the order entry channel to access the network server through the communication network.

# FIG.1

EP 1 852 818 A2

# FIG.2

ALBUM

| ◈ALBUM CODE |
|---|
| ◇MEMBER ID |
| ◇RETAILER ID |
| ◇E-MAIL ADDRESS |
| ◇ALBUM CREATION DATE |
| ◇DATE AND TIME OF ALBUM UPDATE |
| ◇LATEST ACCESS DAY |
| ◇LATEST ACCESS WARNING DAY |
| ◇ALBUM TYPE |
| ◇ALBUM NAME |
| ◇URL FOR PUBLICATION |
| ◇PASSWORD FOR PUBLICATION |
| ◇ALBUM DISPLAY TYPE |
| ◇DISPLAY SEQUENCE (TARGET) TYPE |
| ◇DISPLAY SEQUENCE (ARRAY) TYPE |
| ◇DISPLAY IMAGE TYPE |
| ◇NUMBER OF ACCESSES PER DAY |
| ◇TOTAL NUMBER OF ACCESSES |
| ◇DATE AND TIME OF NEW CREATION |
| ◇DATE AND TIME OF UPDATE |

# FIG.3

## IMAGE INFORMATION

◈IMAGE CODE

◇MEMBER ID
◇RETAILER ID
◇FILE FORMAT TYPE
◇IMAGE WIDTH (pixel)
◇IMAGE HEIGHT (pixel)
◇STORED FILE SIZE
◇STORED FILE PATH
◇STORED FILE NAME
◇UPLOAD DATE
◇UPLOADED FILE NAME
◇SCHEDULED IMAGE DISPLAY STOP DATE
◇SCHEDULED IMAGE DELETION DATE
◇INITIALLY-SCHEDULED IMAGE DELETION DATE
◇LATEST ORDER DATE
◇THUMBNAIL PATH
◇THUMBNAIL FILE NAME
◇THUMBNAIL FILE SIZE
◇VIEWED IMAGE PATH
◇VIEWED IMAGE FILE NAME
◇VIEWED IMAGE FILE SIZE
◇DELETION FLAG
◇DATE AND TIME OF NEW CREATION
◇DATE AND TIME OF UPDATE

# FIG.4

```
           ┌──────────────┐
           │    IMAGE     │
           │   MANAGER    │
           └──────┬───────┘
                  │      ┌──────────────┐
                  ├──────│    ALBUM     │
   ┌──────────────┐      │   MANAGER    │
   │     RAW      │      └──────────────┘
   │ DEVELOPMENT  │──────┤
   └──────────────┘      ┌──────────────┐
                  ├──────│ HIGH-QUALITY │
   ┌──────────────┐      │  PROCESSING  │
   │    COLOR     │      └──────────────┘
   │  CORRECTION  │──────┤
   └──────────────┘      │
```

# FIG.5

## LAB

| ◈ LAB ID |
|---|
| ◇ LAB NAME |
| ◈ COUNTRY CODE |
| ◇ TELEPHONE NUMBER |
| ◇ PASSWORD |
| ◇ PRINTER RESOLUTION |
| ◇ JPG IMAGE CORRESPONDENCE FLAG |
| ◇ BMP IMAGE CORRESPONDENCE FLAG |
| ◇ TIFF IMAGE CORRESPONDENCE FLAG |
| ◇ OPERATION START DATE |
| ◇ OPERATION END DATE |
| ◇ DATE AND TIME OF NEW CREATION |
| ◇ DATE AND TIME OF UPDATE |

# FIG.6

## RETAILER

◈ RETAILER ID
◈ DATE AND TIME OF REGISTRATION

◇ LAB ID
◈ DEFAULT COUNTRY CODE
◇ OFFICIAL NAME
◇ ABBREVIATED NAME
◇ DEFAULT LANGUAGE CODE
◇ RETAILER TYPE
◇ SIGN-OUT TRANSITION DESTINATION URL
◇ SHOP RETRIEVAL SITE TRANSITION DESTINATION URL
◇ MEMBER MENU MODE PERMISSION/INHIBITION FLAG
◇ NONMEMBER SIMPLE MODE PERMISSION/INHIBITION FLAG
◇ THIRD PARTY ORDER PERMISSION/INHIBITION FLAG
◇ RECEIPT SHOP CHANGE PERMISSION/INHIBITION FLAG
◇ MEMBER INFORMATION CENTER MANAGEMENT PERMISSION/ INHIBITION FLAG
◇ INQUIRY MAIL ADDRESS
◇ OPERATION START DATE
◇ OPERATION END DATE
◇ DATE OF DELIVERY TO SHOP
◇ MEMBER REGISTRATION USER ID TYPE
◇ TIME ZONE
◇ WID
◇ BACK END REFERENCE FLAG
◇ FRONT END REFERENCE FLAG
◇ DATE AND TIME OF NEW CREATION
◇ DATE AND TIME OF UPDATE

# FIG.7

ORDER

| |
|---|
| ⊗ ORDER CODE |

| |
|---|
| ⊠ DATE AND TIME OF ORDER |
| ⊠ DATE OF DELIVERY |
| ⊠ ORDER STATUS TYPE |
| ⊠ USER CANCEL FLAG |
| ⊠ ORDER ENTRY CHANNEL CODE |
| ⊠ TERMINAL ID |
| ⊠ CLIENT SOFTWARE CODE |
| ⊠ CLIENT SOFTWARE VERSION |
| ⊠ RETAILER ID |
| ⊠ RETAILER ABBREVIATED NAME |
| ⊠ LAB ID |
| ⊠ LAB NAME |
| ⊠ MEMBER ID |
| ⊠ USER ID FOR AUTHENTICATION |
| ⊠ ORDERER LAST NAME |
| ⊠ ORDERER FIRST NAME |
| ⊠ ORDERER TITLE |
| ⊠ ORDERER COUNTRY NAME |
| ⊠ ORDERER ZIP CODE |
| ⊠ ORDERER CITY NAME |
| ⊠ ORDERER ADDRESS 1 |
| ⊠ ORDERER ADDRESS 2 |
| ⊠ ORDERER TELEPHONE NUMBER |
| ⊠ ORDERER E-MAIL ADDRESS |
| ⊠ ORDERER DATE OF BIRTH |
| ⊠ CURRENCY CODE |
| ⊠ TOTAL AMOUNT |
| ⊠ TAX |
| ⊠ BASIC FEES |
| ⊠ PRODUCT FEES |
| ⊠ DELIVERY FEES |
| ⊠ CAMPAIGN DISCOUNT AMOUNT |
| ⊠ CAMPAIGN ID |
| ⊠ CAMPAIGN NAME |
| ⊠ CAMPAIGN TYPE |
| ⊠ COUPON NUMBER |
| ⊠ REFERENCE PRICE DISPLAY FLAG |
| ⊠ REFERENCE PRICE CURRENCY CODE |
| ⊠ TOTAL REFERENCE PRICE |

| |
|---|
| ⊠ RECEIVING METHOD TYPE |
| ⊠ RECEIVING METHOD NAME |
| ⊠ SETTLEMENT METHOD TYPE |
| ⊠ SETTLEMENT METHOD NAME |
| ⊠ RECEIPT SHOP ID |
| ⊠ RECEIPT SHOP NAME |
| ⊠ RECEIPT SHOP CODE FOR LAB MANAGEMENT |
| ⊠ RECEIPT SHOP CODE FOR RETAILER MANAGEMENT |
| ⊠ RECEIPT SHOP COUNTRY NAME |
| ⊠ RECEIPT SHOP ZIP CODE |
| ⊠ RECEIPT SHOP CITY NAME |
| ⊠ RECEIPT SHOP STREET NAME |
| ⊠ RECEIPT SHOP TELEPHONE NUMBER |
| ⊠ DELIVERY DESTINATION LAST NAME |
| ⊠ DELIVERY DESTINATION FIRST NAME |
| ⊠ DELIVERY DESTINATION TITLE |
| ⊠ DELIVERY DESTINATION COUNTRY NAME |
| ⊠ DELIVERY DESTINATION ZIP CODE |
| ⊠ DELIVERY DESTINATION CITY NAME |
| ⊠ DELIVERY ADDRESS 1 |
| ⊠ DELIVERY ADDRESS 2 |
| ⊠ SETTLEMENT SITE TYPE |
| ⊠ SETTLEMENT CUSTOMER COUNTRY CODE |
| ⊠ SETTLEMENT CUSTOMER ID |
| ⊠ SETTLEMENT AMOUNT |
| ⊠ SETTLEMENT CURRENCY CODE |
| ⊠ SETTLEMENT AUTHORIZATION ID |
| ⊠ SETTLEMENT ID |
| ⊠ DATE AND TIME OF SETTLEMENT |
| ⊠ SETTLEMENT CARD TYPE |
| ⊠ SETTLEMENT CARD NUMBER |
| ⊠ LANGUAGE CODE AT TIME OF ORDERING |
| ⊠ ORDER DISPATCH NOTIFICATION MAIL TRANSMISSION FLAG |
| ⊠ ALL CANCEL MAIL TRANSMISSION FLAG |
| ⊠ SCHEDULED ORDER DELETION DATE |
| ⊠ FACTORY SORTING CODE |
| ⊠ DATE AND TIME OF NEW CREATION |
| ⊠ DATE AND TIME OF UPDATE |

# FIG.8

# FIG.9

# FIG.10

```
                          START
                            │
                            ▼                    S10
              YES    ╱IS THERE          ╲
        ┌───────────◄  LANGUAGE           ►
        │          ╲INFORMATION IN URL  ╱
   S12  │           ╲ PARAMETER?     ╱
   ┌────▼──────┐          │ NO
   │ TAKE OUT  │          ▼                    S14
   │ LANGUAGE  │   YES  ╱IS THERE          ╲
   │INFORMATION│ ┌──────◄  LANGUAGE           ►
   │ FROM URL  │ │      ╲INFORMATION IN     ╱
   │ PARAMETER │ │       ╲  SESSION?     ╱
   └────┬──────┘ │            │ NO
        │   S16  │            ▼                    S18
        │   ┌────▼──────┐  YES  ╱IS THERE       ╲
        │   │ TAKE OUT  │ ┌─────◄  LANGUAGE        ►
        │   │ LANGUAGE  │ │     ╲INFORMATION IN  ╱
        │   │INFORMATION│ │      ╲  Cookie?    ╱
        │   │FROM SESSION│ │          │ NO
        │   └────┬──────┘ │          ▼              S22
        │        │   S20  │   YES  ╱IS THERE        ╲
        │        │   ┌────▼──────┐ ┌─────◄INFORMATION IN MEMBER►
        │        │   │ TAKE OUT  │ │     ╲INFORMATION?      ╱
        │        │   │ LANGUAGE  │ │          │ NO
```

# FIG.11

(B)  (A)

```
                S36
         IS THERE
    NO   RESOURCE OF
         LANGUAGE INFOR-
         MATION?
                              S28
                   YES
           S38              SELECT
         IS THERE           DEFAULT
    YES  NEXT LANGUAGE IN   LANGUAGE
         Accept-Language
         HEADER?
                              S30
              NO
                            DECIDE
                            DISPLAY
                            LANGUAGE

                              S32

                            WRITE LANGUAGE
                            INFORMATION IN
                            Cookie/SESSION


                               END
```

# FIG.12

# FIG.13

# FIG.14

RETAILER SYSTEM

18 — MEMBER INFOR-MATION DB — 18a

10d

12 NETWORK CENTER

WEB BROWSER 14a

Cookie — 50

12b

FRONT END

ORDER RECEIVING SYSTEM

MEMBER REGIS-TRATION/ AUTHEN-TICATION — 30b

30

12c

BACK END

12a

DB/FS

SESSION — 52

16 — LAB SYSTEM

# FIG.15

10e

12 NETWORK CENTER

WEB BROWSER 14a

Cookie — 50

12b

FRONT END

ORDER RECEIVING SYSTEM

MEMBER REGIS-TRATION/ AUTHEN-TICATION — 30b

30

12c

BACK END

12a

DB/FS

SESSION — 52

16 — LAB SYSTEM

# FIG.16

# FIG.17

| No. | NAME | ADDRESS | REGISTERED SHOP | DISPLAY LANGUAGE | E-MAIL ADDRESS |
|---|---|---|---|---|---|
| 1 | Mr. A | HOLLAND | SHOP A | DUTCH | OOO@XXXX |
| 2 | Mr. B | HOLLAND | SHOP B | GERMAN | OOO@XXXX |
| 3 | Mr. C | GERMANY | SHOP C | GERMAN | OOO@XXXX |
| 4 | Mr. D | GERMANY | SHOP D | DUTCH | OOO@XXXX |
| 5 | Mr. E | FRANCE | SHOP D | FRENCH | OOO@XXXX |

# FIG.18

| No. | NAME | ADDRESS | REGISTERED SHOP | URL | E-MAIL ADDRESS |
|---|---|---|---|---|---|
| 1 | Mr. A | HOLLAND | SHOP A | www.△△△□□□ | OOO@XXXX |
| 2 | Mr. B | HOLLAND | SHOP B | www.△△△□□□ | OOO@XXXX |
| 3 | Mr. C | GERMANY | SHOP C | www.△△△□□□ | OOO@XXXX |
| 4 | Mr. D | GERMANY | SHOP D | www.△△△□□□ | OOO@XXXX |
| 5 | Mr. E | FRANCE | SHOP D | www.△△△□□□ | OOO@XXXX |

# FIG.19

DISPLAY LANGUAGE SWITCHING CONTROL

INFORMATION ANALYSIS FUNCTION

DISPLAY LANGUAGE SWITCHING FUNCTION

MEMBER INFORMATION ANALYSIS FUNCTION

RETAILER INFORMATION ANALYSIS FUNCTION

DISPLAY LANGUAGE INFORMATION ANALYSIS FUNCTION

DISPLAY LANGUAGE INFERENCE FUNCTION

DISPLAY LANGUAGE INFORMATION ANALYSIS FUNCTION

DISPLAY LANGUAGE INFERENCE FUNCTION

LANGUAGE-SPECIFIC SCREEN SWITCHING METHOD

LANGUAGE-SPECIFIC DISPLAY CHARACTER CORRESPOND-ENCE TABLE SWITCHING METHOD

MEMBER LOCATION INFORMATION ANALYSIS

MEMBER NAME INFORMATION ANALYSIS

USED CURRENCY/ SETTLEMENT SITE INFORMATION ANALYSIS

PAST ORDER HISTORY INFORMATION ANALYSIS

RETAILER LOCATION INFORMATION ANALYSIS

RETAILER SERVICE REGION INFORMATION ANALYSIS

LANGUAGE-SPECIFIC BACKGROUND TEMPLATE CREATION/ STORAGE FUNCTION

LANGUAGE-SPECIFIC URL ISSUANCE PROCESSING FUNCTION

NEW BOILERPLATE CREATION & CORRESPOND-ENCE DISPLAY CHARACTER CONVERSION PROCESSING FUNCTION

MEMBER LOCATION INFORMATION & DISPLAY LANGUAGE INFERENCE

MEMBER NAME INFORMATION & DISPLAY LANGUAGE INFERENCE

USED CURRENCY/ SETTLEMENT SITE & DISPLAY LANGUAGE INFERENCE

PAST ORDER HISTORY & DISPLAY LANGUAGE INFERENCE

RETAILER LOCATION INFORMATION & DISPLAY LANGUAGE INFERENCE

RETAILER SERVICE REGION INFORMATION & DISPLAY LANGUAGE INFERENCE

# FIG.20

```
┌─────────────┐
│┌───────────┐│
││  DISPLAY  ││
││ LANGUAGE  ││
││ DECIDING  ││
││   LOGIC   ││
│└───────────┘│
└─────────────┘
       │
       ▼
┌─────────────┐
│   INPUT     │～S111
│  RETAILER   │
│  PROVIDED   │
│ INFORMATION │
└─────────────┘
       │
       ▼
┌─────────────┐
│  ANALYZE    │～S112
│  MEMBER     │
│ INFORMATION │
└─────────────┘
       │
       ▼
```

IS THERE DISPLAY LANGUAGE INFORMATION? ～S113

N

Y  S114          S115                    S116

| EXTRACTION BY DISPLAY LANGUAGE INFORMATION ANALYSIS | DISPLAY LANGUAGE INFERENCE FROM MEMBER INFORMATION | DISPLAY LANGUAGE ANALYSIS & INFERENCE FROM RETAILER INFORMATION |

```
┌─────────────┐
│ TRANSMIT    │～S117
│ TO DISPLAY  │
│ LANGUAGE    │
│ SWITCHING   │
│ FUNCTION    │
└─────────────┘
       │
       ▼
   (  END  )
```

# FIG.21

```
┌─────────────────┐
│ DISPLAY         │
│ LANGUAGE        │
│ INFERENCE       │
│ FROM            │
│ MEMBER          │
│ INFORMATION     │
└────────┬────────┘
         │
         ▼
┌─────────────────┐
│ INPUT           │
│ RETAILER        │
│ PROVIDED        │
│ INFORMATION     │
└────────┬────────┘
         │
```

| INFER DISPLAY LANGUAGE FROM LOCATION | INFER DISPLAY LANGUAGE FROM MEMBER NAME | INFER DISPLAY LANGUAGE FROM USED CURRENCY | INFER DISPLAY LANGUAGE FROM SETTLEMENT SITE |
|---|---|---|---|
| REFER TO LOCATION VS DISPLAY LANGUAGE DB | REFER TO NAME VS DISPLAY LANGUAGE DB | REFER TO USED CURRENCY VS DISPLAY LANGUAGE DB | REFER TO SETTLEMENT SITE VS DISPLAY LANGUAGE DB |
| IS DISPLAY LANGUAGE DECIDED? — N | IS DISPLAY LANGUAGE DECIDED? — N | IS DISPLAY LANGUAGE DECIDED? — N | IS DISPLAY LANGUAGE DECIDED? — N |
| Y | Y | Y | Y |
| TRANSMIT TO DISPLAY LANGUAGE INFERENCE FUNCTION | TRANSMIT TO DISPLAY LANGUAGE INFERENCE FUNCTION | TRANSMIT TO DISPLAY LANGUAGE INFERENCE FUNCTION | TRANSMIT TO DISPLAY LANGUAGE INFERENCE FUNCTION |
| END | END | END | END |

# FIG.22

| | | | |
|---|---|---|---|
| MEMBER INFORMATION | DISPLAY LANGUAGE INFOR-MATION ANALYSIS FUNCTION | ⟶ | DISPLAY LANGUAGE SWITCHING FUNCTION |
| | DISPLAY LANGUAGE INFERENCE FUNCTION | LAST DECISION BY INFORMATION ANALYSIS FUNCTION | |
| RETAILER INFORMATION | DEFAULT DISPLAY LANGUAGE ANALYSIS FUNCTION | | |
| | DISPLAY LANGUAGE INFERENCE FUNCTION | | |

EP 1 852 818 A2

# FIG.23A

| | | | | |
|---|---|---|---|---|
| PRINT ORDER | 89 × 127 mm | QTY: _____ | $ |
| | 127 × 178 mm | QTY: _____ | $ |
| | 254 × 305 mm | QTY: _____ | $ |
| | 203 × 254 mm | QTY: _____ | $ |

# FIG.23B

| No. | ENGLISH | GERMAN | SPANISH | FRENCH |
|---|---|---|---|---|
| a. PRODUCT NAME INFORMATION | Print | Abzuge | Copia | Tirage |
| b. SIZE INFORMATION | ~size | ~Abmessung | formato~ | format~ |
| c. UNIT INFORMATION (NUMBER OF PRINTS) | quantity | Abzugzahl | cantidad | quantite |
| d. UNIT INFORMATION (PRICE) | dollar | euro | euro | euro |

# FIG.24

URL 3

URL 2 | FRENCH VERSION

URL 1 | GERMAN VERSION

ENGLISH VERSION

| | | | | |
|---|---|---|---|---|
| PRINT ORDER | 89 × 127 mm | QTY: _____ | $ |
| | 127 × 178 mm | QTY: _____ | $ |
| | 254 × 305 mm | QTY: _____ | $ |
| | 203 × 254 mm | QTY: _____ | $ |

# FIG. 25A

MEMBER

| |
|---|
| ◈ MEMBER ID |
| ◈ RETAILER ID |
| ◇ USER ID FOR AUTHENTICATION |
| ◇ PASSWORD |
| ◇ VALID FLAG |
| ◇ LAST NAME |
| ◇ FIRST NAME |
| ◇ TITLE TYPE |
| ◈ COUNTRY CODE |
| ◇ ZIP CODE |
| ◇ CITY NAME |
| ◇ ADDRESS 1 |
| ◇ ADDRESS 2 |
| ◇ TELEPHONE NUMBER |
| ◇ E-MAIL ADDRESS |
| ◇ DATE OF BIRTH |
| ◇ SELECTED SHOP ID |
| ◇ DISPLAY LANGUAGE |
| ◇ BROADCAST MAIL FLAG |
| ◇ PREVIOUS DELIVERY DESTI- NATION LAST NAME |
| ◇ PREVIOUS DELIVERY DESTI- NATION FIRST NAME |
| ◇ PREVIOUS DELIVERY DESTI- NATION TITLE TYPE |
| ◈ PREVIOUS DELIVERY DESTI- NATION COUNTRY CODE |
| ◇ PREVIOUS DELIVERY DESTI- NATION COUNTRY NAME |
| ◇ PREVIOUS DELIVERY DESTI- NATION ZIP CODE |
| ◇ PREVIOUS DELIVERY DESTI- NATION CITY NAME |
| ◇ PREVIOUS DELIVERY DESTI- NATION ADDRESS 1 |
| ◇ PREVIOUS DELIVERY DESTI- NATION ADDRESS 2 |
| ◇ DATE AND TIME OF WITHDRAWAL |
| ◇ DATE AND TIME OF NEW CREATION |
| ◇ DATE AND TIME OF UPDATE |

# FIG. 25B

RETAILER MEMBER

| |
|---|
| ◈ MEMBER ID |
| ◇ RETAILER ID |
| ◇ RETAILER UNIQUE ID |
| ◇ DATE AND TIME OF NEW CREATION |

71

FIG.26

```
                          ┌─────────────────────┐
                          │ DISPLAY LANGUAGE    │
                          │ SWITCHING CONTROL   │
                          └─────────────────────┘
              ┌────────────────────────┴────────────────────────┐
    ┌─────────────────────┐                      ┌─────────────────────┐
    │ INFORMATION         │                      │ DISPLAY LANGUAGE    │
    │ ANALYSIS FUNCTION   │                      │ SWITCHING FUNCTION  │
    └─────────────────────┘                      └─────────────────────┘
```

| DISPLAY LANGUAGE INFORMATION ANALYSIS FUNCTION | DISPLAY LANGUAGE INFERENCE FUNCTION | DEFAULT DISPLAY LANGUAGE ANALYSIS FUNCTION | DISPLAY LANGUAGE INFERENCE FUNCTION | LANGUAGE-SPECIFIC SCREEN SWITCHING METHOD | LANGUAGE-SPECIFIC DISPLAY CHARACTER CORRESPONDENCE TABLE SWITCHING METHOD |

**MEMBER INFORMATION ANALYSIS FUNCTION**

**RETAILER INFORMATION ANALYSIS FUNCTION**

MEMBER LOCATION INFORMATION & DISPLAY LANGUAGE INFERENCE

MEMBER NAME INFORMATION & DISPLAY LANGUAGE INFERENCE

USED CURRENCY/ SETTLEMENT SITE & DISPLAY LANGUAGE INFERENCE

PAST ORDER HISTORY & DISPLAY LANGUAGE INFERENCE

RETAILER LOCATION INFORMATION & DISPLAY LANGUAGE INFERENCE

RETAILER SERVICE REGION INFORMATION & DISPLAY LANGUAGE INFERENCE

LANGUAGE-SPECIFIC BACKGROUND TEMPLATE CREATION/ STORAGE FUNCTION

LANGUAGE-SPECIFIC URL ISSUANCE PROCESSING FUNCTION

NEW BOILERPLATE CREATION & CORRESPONDENCE DISPLAY CHARACTER CONVERSION PROCESSING FUNCTION

EP 1 852 818 A2

# FIG.27

```
┌─────────────────────────┐
│     SWITCH DISPLAY      │
│       LANGUAGE          │
└─────────────────────────┘
             │
             ▼
┌─────────────────────────┐
│  RECEIVE DISPLAY LAN-   │──S121
│  GUAGE INFORMATION      │
│  FROM INFORMATION       │
│  ANALYSIS FUNCTION      │
└─────────────────────────┘
             │
             ▼
          ╱──────╲
  n=1   ╱   HOW    ╲      S122   n > 1
 ◄─────╱ MANY DISPLAY ╲────────►
       ╲ LANGUAGES ARE ╱
        ╲  RECEIVED?  ╱
          ╲──────╱
    │                          │
    ▼                          ▼
┌──────────────────┐    ┌──────────────────────┐
│ SWITCH TO RECEIVED│S123│  DISPLAY RECEIVED    │──S124
│ DISPLAY LANGUAGE │    │  DISPLAY LANGUAGE    │
└──────────────────┘    │  IN SELECTION MENU   │
    │                   └──────────────────────┘
    ▼                          │
 ┌────────┐                    ▼
 │  END   │           ┌──────────────────────┐
 └────────┘           │ SWITCH TO SELECTED   │──S125
                      │ DISPLAY LANGUAGE     │
                      └──────────────────────┘
                             │
                             ▼
                          ┌────────┐
                          │  END   │
                          └────────┘
```

73

# FIG.28

```
              ┌──────────────────────┐
              │    SWITCH DISPLAY     │
              │      LANGUAGE         │
              └──────────────────────┘
                         │
                         ▼
              ┌──────────────────────┐
              │ RECEIVE DISPLAY LAN- │──S131
              │ GUAGE INFORMATION    │
              │ FROM INFORMATION     │
              │ ANALYSIS FUNCTION    │
              └──────────────────────┘
                         │
                         ▼
              ┌──────────────────────┐
              │  SWITCH TO DISPLAY    │──S132
              │     LANGUAGE         │
              │  (FIRST CANDIDATE)    │
              └──────────────────────┘
                         │
        ┌────────────────▼────────────────┐
        │                                 │
        │    IS THERE NO INPUT SIGNAL FOR A        S133
        │ PREDETERMINED PERIOD OR LONGER ?
        │    IS THERE NO MOUSE OPERATION FOR A              N
        │ PREDETERMINED PERIOD OR LONGER ?
        │    IS LARGE-AREA REPETITIVE/CIRCLING
        │    MOVEMENT OF MOUSE DETECTED?
        │                                 │
        └────────────────┬────────────────┘
                         │ Y
                         ▼
              ┌──────────────────────┐
              │  SWITCH TO DISPLAY    │──S134
              │     LANGUAGE         │
              │  (NEXT CANDIDATE)     │
              └──────────────────────┘
```

END

**REFERENCES CITED IN THE DESCRIPTION**

**Patent documents cited in the description**

- JP 2005049933 A
- JP 2002342741 A
- JP 2001319216 A
- JP 2000090353 A